# EUROPÄISCHE PATENTANMELDUNG

(11) **EP 2 223 602 A1**
(43) Veröffentlichungstag der Anmeldung: **01.09.2010**
(21) Anmeldenummer: 09153440.4
(22) Anmeldetag: 23.02.2009
(51) Int. Cl.: A01P 7/04, A01N 43/40, A01N 43/78, A01N 47/40, A01N 47/24, A01N 51/00

(54) **Verfahren zur verbesserten Nutzung des Produktionspotentials genetisch modifizierter Pflanzen**

(71) Anmelder: Bayer CropScience AG, 40789 Monheim (DE)
(72) Erfinder: Die Erfindernennung liegt noch nicht vor

(57) **Zusammenfassung**

Die Erfindung betrifft ein Verfahren zur Verbesserung der Nutzung des Produktionspotentials einer genetisch modifizierten Pflanze, in dem die Pflanze mit einer wirksamen Menge mindestens einer Verbindung der Formel (I) 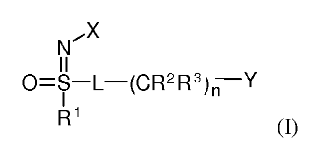 worin
R¹ bis R³, X, L, n und Y die in der Beschreibung angegebenen Bedeutungen haben,
behandelt wird.

## Beschreibung

Die Erfindung betrifft ein Verfahren zur Verbesserung der Nutzung des Produktionspotentials genetisch modifizierter Pflanzen.

Der Anteil genetisch modifizierter Pflanzen in der Landwirtschaft ist in den letzten Jahren deutlich gestiegen, wenn auch regionale Unterschiede derzeit noch erkennbar sind. So hat sich beispielsweise der Anteil an genetisch modifiziertem Mais in den USA seit 2001 von 26% auf 52% verdoppelt, während genetisch modifizierter Mais in Deutschland bisher kaum eine praktische Rolle spielt. In anderen europäischen Ländern, beispielsweise in Spanien, liegt der Anteil an genetisch modifiziertem Mais aber bereits bei etwa 12%.

Genetisch modifizierte Pflanzen werden vor allem eingesetzt, um das Produktionspotential der jeweiligen Pflanzensorte bei möglichst geringem Einsatz von Produktionsmitteln möglichst günstig zu nutzen. Die genetische Veränderung der Pflanzen zielt dazu vor allem darauf ab, in den Pflanzen eine Resistenz gegen bestimmte Schädlinge oder Schadorganismen oder aber auch Herbizide sowie gegen abiotischen Stress (beispielsweise Dürre, Hitze oder erhöhte Salzgehalte) zu erzeugen. Ebenso kann eine Pflanze genetisch modifiziert werden, um bestimmte Qualitäts- oder Produktmerkmale, wie z.B. den Gehalt an ausgewählten Vitaminen oder Ölen, zu erhöhen oder bestimmte Fasereigenschaften zu verbessern.

Eine Herbizidresistenz bzw. -toleranz kann beispielsweise durch den Einbau von Genen in die Nutzpflanze zur Expression von Enzymen zur Detoxifikation bestimmter Herbizide erreicht werden, die somit selbst in Gegenwart dieser Herbizide zur Bekämpfung von Unkräutern und Ungräsern möglichst ungehindert wachsen können. Als Beispiele seien Baumwoll-Sorten bzw. MaisSorten genannt, die den herbiziden Wirkstoff Glyphosate (Roundup®), (Roundup Ready®, Monsanto) oder die Herbizide Glufosinate oder Oxynil tolerieren.

In jüngerer Zeit wurden zudem Nutzpflanzen entwickelt, die zwei oder mehrere genetische Veränderungen enthalten ("stacked transgenic plants" oder mehrfach-genetisch modifizierte Kulturen). So hat beispielsweise die Firma Monsanto mehrfach-genetisch modifizierte Maissorten entwickelt, die gegen den Maiszünsler (*Ostrinia nubilalis*) und den Maiswurzelbohrer (*Diabrotica virgifera*) resistent sind. Ebenso sind Mais- oder Baumwollkulturen bekannt, die sowohl gegen den Maiswurzelbohrer bzw. den Baumwollkapselwurm resistent sind als auch das Herbizid Roundup® tolerieren.

Es hat sich nunmehr gezeigt, dass sich die Nutzung des Produktionspotentials genetisch modifizierter Nutzpflanzen nochmals verbessern lässt, wenn die Pflanzen mit einem oder mehreren Sulfoximinen der im Folgenden definierten Formel (I) behandelt werden. Dabei schließt der Begriff "Behandlung" alle Maßnahmen ein, die zu einem Kontakt zwischen diesen Wirkstoffen und mindestens einem Pflanzenteil führen. Unter "Pflanzenteilen" sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Verbindungen der Formel (I) 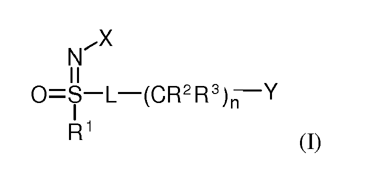 in welcher
- X: für NO₂, CN oder COOR⁴ steht,
- L: für eine Einfachbindung steht,
- R¹: für C₁-C₄-Alkyl steht, oder
R¹, Schwefel und L zusammen für einen 4-, 5- oder 6-gliedrigen Ring stehen,
- R² und R³: unabhängig voneinander für Wasserstoff, Methyl, Ethyl, Fluor, Chlor oder Brom stehen, oder
- R² und R³: gemeinsam für -(CH₂)₂-, -(CH₂)₃-, -(CH₂)₄- oder -(CH₂)₅- stehen und mit dem Kohlen-stoffatom an dem sie gebunden sind einen 3-, 4-, 5- oder 6-Ring bilden,
- n: für 0, 1, 2 oder 3 steht,
- Y: für einen der Reste 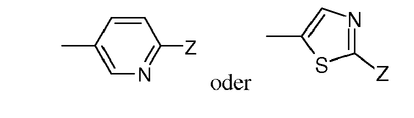 steht,
worin
Z für Halogen, C₁-C₄-Alkyl, C₁-C₄-Halogenalkyl, C₁-C₄-Alkoxy oder C₁-C₄-Halogenalkoxy steht und
R⁴ für C₁-C₃-Alkyl steht, sind beispielsweise als Mittel zur Bekämpfung von tierischen Schädlingen, insbesondere Insekten, bekannt geworden (z. B. US-Patentanmeldung 2005/228027 A1, WO 2006/060029 A2, WO 2007/095229 A2, WO 2007/149134 A1, WO 2008/027539 A1, WO 2008/027073 A1, WO 2008/057129 A1, WO 2008/097235 A1, WO 2008/106006 A1). Desweiteren ist die insektizide Wirkungssteigerung für eine Untergruppe von Sulfoximinen mittels Zugabe von geeigneten Salzen und gegebenenfalls Additiven beschrieben (WO 2007/068355).

Aus diesen Dokumenten sind dem Fachmann Verfahren zur Herstellung, zur Verwendung und zur Wirkung von Verbindungen der Formel (I) ohne weiteres geläufig.

Die Verbindungen der Formel (I) können, auch in Abhängigkeit von der Art der Substituenten, als optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische, deren Verwendung sowie diese enthaltende Mittel sind Gegenstand der vorliegenden Erfindung. Im folgenden wird der Einfachheit halber jedoch stets von Verbindungen der Formel (I) gesprochen, obwohl sowohl die reinen Verbindungen als gegebenenfalls auch Gemische mit unterschiedlichen Anteilen an isomeren Verbindungen gemeint sind.

Im Folgenden sind bevorzugte Untergruppen für die Verbindungen der Formel (I) aufgeführt:

In einer hervorgehobenen Gruppe (Ia) von Verbindungen der Formel (I) steht X für die Nitrogruppe:

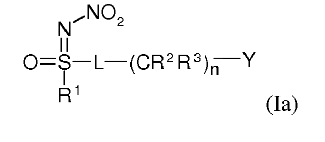

In einer weiteren hervorgehobenen Gruppe (Ib) von Verbindungen der Formel (I) steht X für die Cyanogruppe:

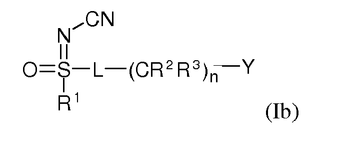

In einer weiteren hervorgehobenen Gruppe (Ic) von Verbindungen der Formel (I) steht X steht für NO₂ oder CN, Y für den 6-Chlor-pyrid-3-yl Rest:

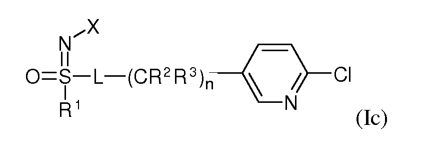

In einer weiteren hervorgehobenen Gruppe (Id) von Verbindungen der Formel (I) steht X für NO₂ oder CN, Y für den 6-Trifluormethyl-pyrid-3-yl Rest:

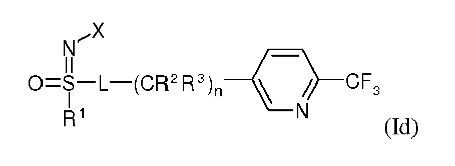

In einer weiteren hervorgehobenen Gruppe (Ie) von Verbindungen der Formel (I) steht X für NO₂ oder CN, Y für den 2-Chlor-1,3-thiazol-5-yl Rest:

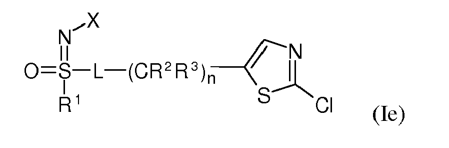

In einer weiteren hervorgehobenen Gruppe (If) von Verbindungen der Formel (I) steht X für NO₂ oder CN, Y für den 2-Trifluormethyl-1,3-thiazol-5-yl Rest:

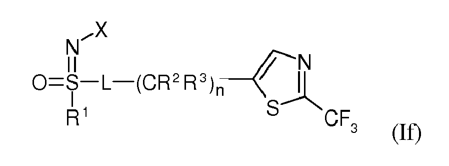

In einer weiteren hervorgehobenen Gruppe (Ig) von Verbindungen der Formel (I) bilden R¹, Schwefel, and L gemeinsam einen 5-gliedrigen Ring, steht X für NO₂ oder CN, steht Y für 6-Halogen-pyrid-3-yl oder 6-(C₁-C₄-Halogenalkyl)-pyrid-3-yl, besonders bevorzugt für 6-Chlorpyrid-3-yl oder 6-Trifluormethyl-pyrid-3-yl, steht n bevorzugt für 0:

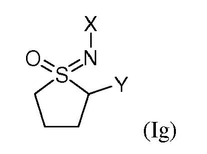

In einer weiteren hervorgehobenen Gruppe (Ih) von Verbindungen der Formel (I) bilden R¹, Schwefel, and L gemeinsam einen 5-gliedrigen Ring, steht X für NO₂ oder CN, steht Y für 6-Halogen-pyrid-3-yl oder 6-(C₁-C₄-Halogenalkyl)-pyrid-3-yl, besonders bevorzugt für 6-Chlorpyrid-3-yl oder 6-Trifluormethyl-pyrid-3-yl, steht n bevorzugt für 0:

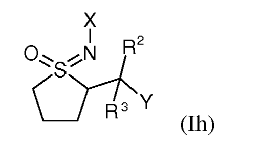

In einer weiteren hervorgehobenen Gruppe (Ii) von Verbindungen der Formel (I) stehen R¹ für Methyl, X für NO₂ oder CN, L für eine Einfachbindung und n bevorzugt für 1:

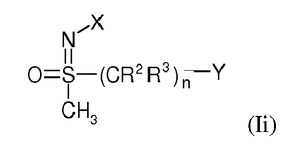

In einer weiteren hervorgehobenen Gruppe (Ij) von Verbindungen der Formel (I) steht R¹ für Methyl, R² und R³ unabhängig voneinander für Wasserstoff oder Methyl, X für NO₂ oder CN, steht n bevorzugt für 1:

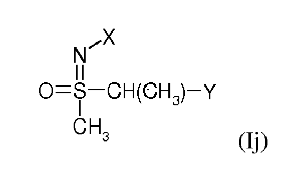

In einer weiteren hervorgehobenen Gruppe (Ik) von Verbindungen der Formel (I) steht R¹ für Methyl, R² und R³ gemeinsam für -(CH₂)₂- und bilden mit dem Kohlenstoffatom an dem sie gebunden einen 3-Ring, steht X für NO₂ oder CN, steht n bevorzugt für 1:

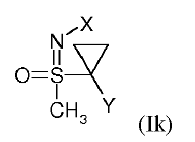

Die Verbindungen der allgemeinen Formel (I) können, gegebenenfalls in Abhängigkeit von der Art der Substituenten, als geometrische und/oder als optisch aktive Isomere oder entsprechende Isomerengemische in unterschiedlicher Zusammensetzung vorliegen. Die Erfindung betrifft sowohl die reinen Isomere als auch die Isomerengemische.

Im Einzelnen seien die folgenden Verbindungen der Formel (I) genannt:
- Verbindung (I-1), [6-Chlor-pyridin-3-yl]methyl](methyl)oxido-λ⁴-sulfanyliden-cyanamid: 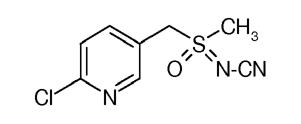 bekannt aus US-Patentanmeldung 2005/228027 A1 und WO 2007/149134 A1.
- Verbindung (I-2), [6-Trifluormethyl-pyridin-3-yl]methyl](methyl)oxido-λ⁴-sulfanylidencyanamid: 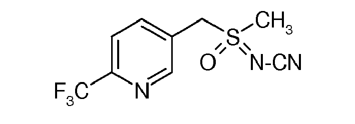 bekannt aus WO 2007/095229 A2, WO 2007/149134 A1 und WO 2008/027073 A1.
- Verbindung (I-3), Methyl(oxido){[2-chlor-l,3-thiazol-5-yl]methyl}λ⁴-sulfanylidencyanamid: 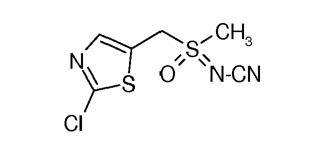 bekannt aus US-Patentanmeldung 2005/228027 A1.
- Verbindung (I-4), Methyl(oxido){[2-(trifluormethyl)-1,3-thiazol-5-yl]methyl}λ⁴-sulfanyliden-cyanamid: 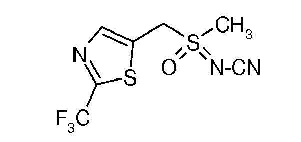 bekannt aus WO 2008/027539 A1.
- Verbindung (I-5), [6-Chlor-pyridin-3-yl]ethyl](methyl)oxido-λ⁴-sulfanyliden-cyanamid: 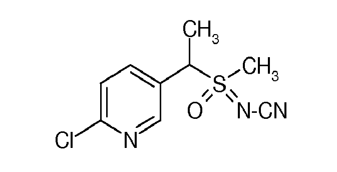 bekannt aus US-Patentanmeldung 2005/228027 A1, WO 2006/060029 A2,
   WO 2007/149134 A1 und WO 2008/097235.
- Verbindung (I-6), [6-Chlor-pyridin-3-yl]ethyl](methyl)oxido-λ⁴-sulfanyliden-cyanamid Diastereomer: 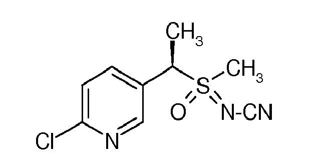 bekannt aus US-Patentanmeldung 2005/228027 A1 und WO 2007/149134 A1.
- Verbindung (I-7), [6-Chlor-pyridin-3-yl]ethyl](methyl)oxido-λ⁴-sulfanyliden-cyanamid Diastereomer: 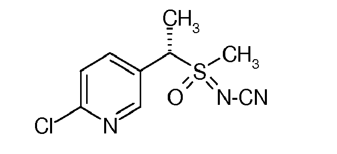 bekannt aus US-Patentanmeldung 2005/228027 A1 und WO 2007/149134 A1.
- Verbindung (I-8), [6-Trifluormethyl-pyridin-3-yl]ethyl](methyl)oxido-λ⁴-sulfanylidencyanamid: 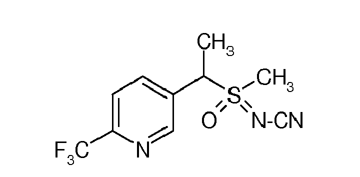 bekannt aus WO 2007/095229 A2, WO 2007/149134 A1, WO 2008/097235 A1 und WO 2008/207910 A1.
- Verbindung (I-9), [6-(1,1-Difluorethyl)pyrid-3-yl]ethyl](methyl)oxido-λ⁴-sulfanyliden-cyanamid: 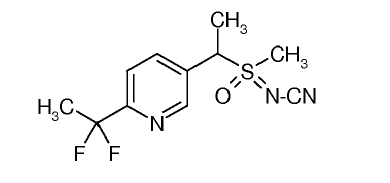 bekannt aus WO 2007/095229 A2.
- Verbindung (I-10), [6-Difluormethyl-pyrid-3-yl]ethyl](methyl)oxido-λ⁴-sulfanyliden-cyanamid: 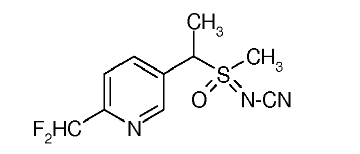 bekannt aus WO 2007/095229 A2.
- Verbindung (I-11), Methyl(oxido){1-[2-(trichlormethyl)-pyrid-3-yl]ethyl}λ⁴-sulfanyliden-cyanamid 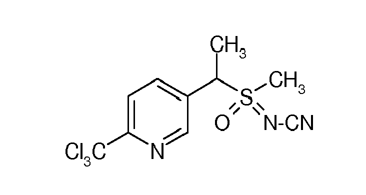 bekannt aus WO 2007/095229 A2.
- Verbindung (I-12), Methyl(oxido){1-[2-(pentafluorethyl)-pyrid-3-yl]ethyl} λ⁴-sulfanyliden-cyanamid 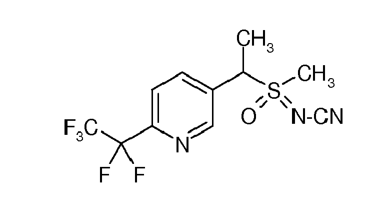 bekannt aus WO 2007/095229 A2.
- Verbindung (I-13), [6-Chlordifluormethyl-pyrid-3-yl]ethyl](methyl)oxido-λ⁴-sulfanyliden-cyanamid: 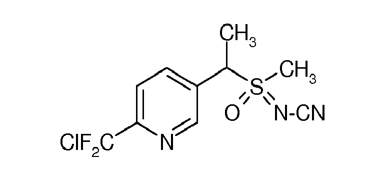 bekannt aus WO 2007/095229 A2.
- Verbindung (I-14), Methyl(oxido){1-[2-(trifluormethyl)-1,3-thiazol-5-yl]ethyl} λ⁴-sulfanyliden-cyanamid: 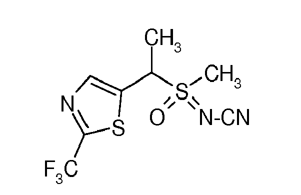 bekannt aus WO 2008/027539 A1.
- Verbindung (I-15), Methyl(oxido){1-[6-(trifluormethyl)pyridin-3-yl]cyclopropyl-λ⁴-sulfanyliden-cyanamid: 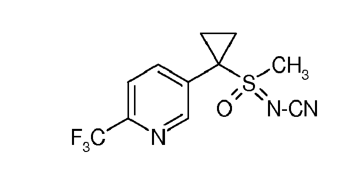 bekannt aus WO 2008/027073 A1.
- Verbindung (I-16), Methyl(oxido){1-(6-chlorpyridin-3-yl)cyclopropyl-λ⁴-sulfanyliden-cyanamid: 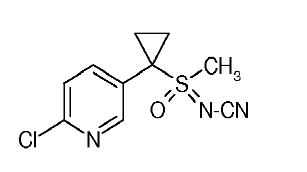 bekannt aus WO 2008/027073 A1.
- Verbindung (I-17), 2-(6-Chlorpyridin-3-yl)-1-oxido-tetrahydro-1*H*-1λ⁴-thien-yliden-cyanamid: 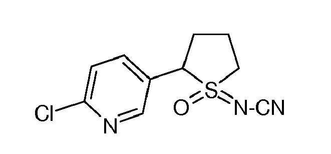 bekannt aus WO 2004/149134 A1.
- Verbindung (I-18), 2-(6-Trifluormethylpyridin-3-yl)-1-oxido-tetrahydro-1*H*-1λ⁴-thien-yliden-cyanamid: 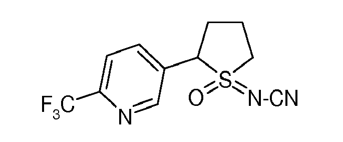 bekannt aus WO 2004/149134 A1.
- Verbindung (I-19), 1-Oxo-2-(2-trifluormethyl-1,3-thiazol-5-ylmethyl)-tetrahydro-1-λ⁶-thiophen-1-yliden-cyanamid: 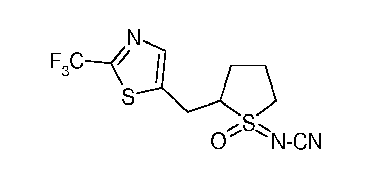 bekannt aus WO 2008/027539 A1.
- Verbindung (I-20), 1-Oxo-2-(6-trifluormethyl-pyrid-3-ylmethyl)-tetrahydro-1-λ⁶-thiophen-1-yliden-cyanamid: 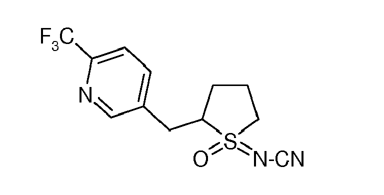 bekannt aus WO 2007/095229 A2.
- Verbindung (I-21), 1-Oxo-2-(6-chlor-pyrid-3-ylmethyl)-tetrahydro-1-λ⁶-thiophen-1-yliden-cyanamid: 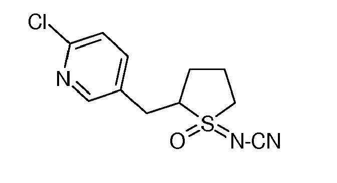 bekannt aus US-Patentanmeldung 2005/228027 A1.
- Verbindung (I-22), 1-Oxo-2-(6-chlor-pyrid-3-ylmethyl)-tetrahydro-1-λ⁶-thiophen-1-yliden-cyanamid Diastereomer: 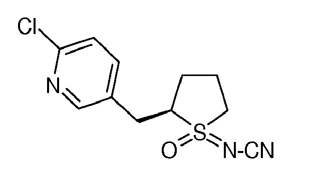 bekannt aus US- Patentanmeldung 2005/228027 A1.
- Verbindung (I-23), 1-Oxo-2-(6-chlor-pyrid-3-ylmethyl)-tetrahydro-1-λ⁶-thiophen-1-yliden-cyanamid Diastereomer: 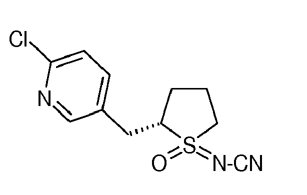 bekannt aus US- Patentanmeldung 2005/228027 A1.

Bevorzugt sind folgende Sulfoximine der Formel (I):
(I-1), [6-Chlor-pyridin-3-yl]methyl](methyl)oxido-λ⁴-sulfanyliden-cyanamid,
(I-2), [6-Trifluormethyl-pyridin-3-yl]methyl](methyl)oxido-λ⁴-sulfanyliden-cyanamid,
(I-3), Methyl(oxido){[2-chlor-1,3-thiazol-5-yl]methyl}λ⁴-sulfanyliden-cyanamid,
(I-4), Methyl(oxido){[2-(trifluormethyl)-1,3-thiazol-5-yl]methyl}λ⁴-sulfanyliden-cyanamid,
(I-5), [6-Chlor-pyridin-3-yl]ethyl](methyl)oxido-λ⁴-sulfanyliden-cyanamid,
(I-6), [6-Chlor-pyridin-3-yl]ethyl](methyl)oxido-λ⁴-sulfanyliden-cyanamid Diastereomer,
(I-7), [6-Chlor-pyridin-3-yl]ethyl](methyl)oxido-λ⁴-sulfanyliden-cyanamid Diastereomer,
(I-8), [6-Trifluormethyl-pyridin-3-yl]ethyl](methyl)oxido-λ⁴-sulfanyliden-cyanamid,
(I-14), Methyl(oxido){1-[2-(trifluormethyl)-1,3-thiazol-5-yl]ethyl}λ⁴-sulfanyliden-cyanamid,
(I-15), Methyl(oxido){l-[6-(trifluormethyl)pyridin-3-yl]cyclopropyl-λ⁴-sulfanyliden-cyanamid,
(I-16), Methyl(oxido){1-(6-chlorpyridin-3-yl)cyclopropyl-λ⁴-sulfanyliden-cyanamid.

Besonders bevorzugt sind folgende Sulfoximine der Formel (I):
(I-5), [6-Chlor-pyridin-3-yl]ethyl](methyl)oxido-λ⁴-sulfanyliden-cyanamid,
(I-6), [6-Chlor-pyridin-3-yl]ethyl](methyl)oxido-λ⁴-sulfanyliden-cyanamid Diastereomer,
(I-7), [6-Chlor-pyridin-3-yl]ethyl](methyl)oxido-λ⁴-sulfanyliden-cyanamid Diastereomer,
(I-8), [6-Trifluormethyl-pyridin-3-yl]ethyl](methyl)oxido-λ⁴-sulfanyliden-cyanamid,
(I-15), Methyl(oxido) 1-[6-(trifluormethyl)pyridin-3-yl]cyclopropyl-λ⁴-sulfanyliden-cyanamid,
(I-16), Methyl(oxido){1-(6-chlorpyridin-3-yl)cyclopropyl-λ⁴-sulfanyliden-cyanamid.

Wenn im Rahmen der vorliegenden Erfindung nunmehr von Sulfoximinen gesprochen wird, so handelt es sich im Allgemeinen um Sulfoximine der allgemeinen Formel (I), wobei unter die allgemeine Formel (I) insbesondere die Verbindungen der Gruppen (Ia) bis (Ik), im speziellen die Verbindungen der allgemeinen Formeln (I-1) bis (I-23) subsumiert werden können.

Erfindungsgemäß steht "Alkyl" für unverzweigte oder verzweigte aliphatische Kohlenwasserstoffe mit 1 bis 6, vorzugsweise 1 bis 4 Kohlenstoffatomen. Geeignete Alkylgruppen sind beispielsweise Methyl, Ethyl, *n*-Propyl, *i*-Propyl, *n-, iso-, sec- or tert*-Butyl, Pentyl oder Hexyl. Die Alkylgruppe kann unsubstituiert vorliegen oder ist mit mindestens einem der hier genannten Substituenten substituiert.

Erfindungsgemäß steht "Alkenyl" für unverzweigte oder verzweigte Kohlenwasserstoffe mit mindestens einer Doppelbindung. Die Doppelbindung der Alkenylgruppe kann unkonjugiert sein oder steht in Konjugation mit einer ungesättigten Bindung oder Gruppe. Alkenylgruppen mit 2 bis 6 bzw. 3 bis 6 Kohlenstoffatomen sind bevorzugt. Geeignete Alkenylgruppen sind beispielsweise Vinyl oder Allyl. Die Alkenylgruppe kann unsubstituiert vorliegen oder ist mit mindestens einem der hier genannten Substituenten substituiert.

Erfindungsgemäß steht "Alkinyl" für unverzweigte oder verzweigte Kohlenwasserstoffe mit mindestens einer Dreifachbindung. Die Dreifachbindung der Alkinylgruppe kann unkonjugiert sein oder steht in Konjugation mit einer ungesättigten Bindung oder Gruppe. Alkinylgruppen mit 2 bis 6 bzw. 3 bis 6 Kohlenstoffatomen sind bevorzugt. Geeignete Alkinylgruppen sind beispielsweise Ethinyl, Propinyl, Butinyl, Pentinyl, Hexinyl, Methylpropinyl, 4-Methyl-1-butinyl, 4-Propyl-2-pentinyl, and 4-Butyl-2-hexinyl. Die Alkinylgruppe kann unsubstituiert vorliegen oder ist mit mindestens einem der hier genannten Substituenten substituiert.

Erfindungsgemäß steht "Cycloalkyl" für cyclische Kohlenwasserstoffe mit 3 bis 6 Kohlenstoffatomen. Geeignete Cycloalkylgruppen sind beispielsweise Cyclopropyl, Cyclobutyl, Cyclopentyl oder Cyclohexyl. Die Cycloalkylgruppe kann unsubstituiert vorliegen oder ist mit mindestens einem der hier genannten Substituenten substituiert.

Erfindungsgemäß steht "Alkoxy" für Alkoxygruppen mit 1 bis 6 Kohlenstoffatomen, vorzugsweise mit 1 bis 4 Kohlenstoffatomen. Geeignete Alkoxygruppen sind beispielsweise Methyloxy, Ethyloxy, *n*-Propyloxy, *i*-Propyloxy, *n-, iso-, sec-* oder *tert*-Butyloxy, Pentyloxy, oder Hexyloxy. Die Alkoxygruppe kann unsubstituiert vorliegen oder ist mit mindestens einem der hier genannten Substituenten substituiert.

Erfindungsgemäß steht "Alkylamino" für Alkylaminogruppem mit 1 bis 6 Kohlenstoffatomen, vorzugsweise mit 1 bis 4 Kohlenstoffatomen. Geeignete Alkylaminogruppen sind beispielsweise Methylamino, Ethylamino, n-Propylamino, *i*-Propylamino, *n-, iso-, sec- or tert*-Butylamino, Pentylamino oder Hexylamino. Die Alkylaminogruppe kann unsubstituiert vorliegen oder ist mit mindestens einem der hier genannten Substituenten substituiert.

Erfindungsgemäß steht "heterocyclische Verbindungen" für cyclische Kohlenwasserstoffe mit vorzugsweise 3 bis 14, besonders bevorzugt 3 bis 10 und ganz besonders bevorzugt 5 bis 6 Kohlenstoffatomen die mindestens ein Heteroatom, wie beispielsweise Stickstoff, Sauerstoff oder Schwefel enthalten und die nach gängigen Methoden herstellbar sind. Die heterocyclische Verbindungen können gesättigte und ungesättigte Bindungen oder Gruppen enthalten, die zusätzlich mit weiteren ungesättigten Bindungen oder Gruppen in Konjugation stehen. Geeignete heterocyclische Verbindungen sind beispielsweise Oxiran, Aziridin, Azetidin, Tetrahydrofuran, Dioxan, Tetrahydrofuran-2-on, Caprolactam; ungesättigte heterocyclische Verbindungen wie beispielsweise 2H-Pyrrol, 4H-Pyran, 1,4-Dihydropyridin; und Heteroaryle wie beispielsweise Pyrrol, Pyrrazol, Imidazol, Oxazol, Isoxazol, Thiazol, Oxathiazol, Triazol, Tetrazol, Pyridin, Pyridazin, Pyrimidin, Pyrazin, Purin, Pteridin, Chinolin, Isochinolin, Acridin und Phenazin. Die heterocyclischen Verbindungen können unsubstituiert vorliegen oder sind mit mindestens einem der hier genannten Substituenten substituiert.

Erfindungsgemäß steht "Halogen" für Fluor, Chlor, Brom oder Iod, bevorzugt für Fluor, Chlor oder Brom.

Erfindungsgemäß steht "Haloalkyl" für Alkylgruppen mit 1 bis 6, vorzugsweise 1 bis 4 Kohlenstoffatomen in denen mindestens ein Wasserstoffatom gegen ein Halogen ausgetauscht ist. Geeignete Haloalkylgruppen sind beispielsweise CH₂F, CHF₂, CF₃, CF₂Cl, CFCl₂, CCl₃,CF₂Br, CF₂CF₃, CFHCF₃, CH₂CF₃, CH₂CH₂F, CH₂CHF₂, CFClCF₃, CCl₂CF₃, CF₂CH₃, CF₂CH₂F, CF₂CHF₂, CF₂CF₂Cl, CF₂CF₂Br, CFHCH₃, CFHCHF₂, CHFCF₃, CHFCF₂Cl, CHFCF₂Br, CFClCF₃, CCl₂CF₃, CF₂CF₂CF₃, CH₂CH₂CH₂F, CH₂CHFCH₃, CH₂CF₂CF₃, CF₂CH₂CF₃, CF₂CF₂CH₃, CHFCF₂CF₃, CF₂CHFCF₃, CF₂CF₂CHF₂, CF₂CF₂CH₂F, CF₂CF₂CF₂Cl, CF₂CF₂CF₂Br, 1,2,2,2-Tetrafluoro-1-(trifluoromethyl)ethyl, 2,2,2-Trifluoro-1-(trifluoromethyl)ethyl, Pentafluoroethyl, 1-(Difluoromethyl)-1,2,2,2-tetrafluoroethyl, 2-Bromo-1,2,2-trifluoro-1-(trifluoromethyl)ethyl, 1-(Difluoromethyl)-2,2,2-trifluoroethyl. Die Haloalkylgruppe kann unsubstituiert vorliegen oder ist mit mindestens einem der hier genannten Substituenten substituiert.

Erfindungsgemäß steht "Aryl" für Arylgruppen mit 6 bis 10, bevorzugt 6 Kohlenstoffatomen. Geeignete Arylgruppen sind beispielsweise Phenyl or Naphtyl. Die Arylgruppe kann unsubstituiert vorliegen oder ist mit mindestens einem der hier genannten Substituenten substituiert.

Bevorzugt sind Mischungen aus zwei oder mehr, vorzugsweise zwei oder drei, besonders bevorzugt zwei, der insektizid wirksamen Verbindungen.

Gemäß dem erfindungsgemäßen Verfahren werden genetisch modifizierte Pflanzen, insbesondere Nutzpflanzen mit Verbindungen der Formel (I) behandelt, um die landwirtschaftliche Produktivität zu steigern. Bei genetisch modifizierten Pflanzen im Sinne der Erfindung handelt es sich um Pflanzen, die mindestens ein Gen oder Genfragment enthalten, das sie nicht durch Befruchtung übernommen haben. Dieses Gen oder Genfragment kann von einer anderen Pflanze derselben Spezies, von Pflanzen unterschiedlicher Spezies, aber auch von Organismen aus dem Reich der Tiere oder Mikroorganismen (einschließlich Viren) stammen oder abgeleitet sein ("Fremdgen") und/oder ggf. bereits gegenüber der natürlich vorkommenden Sequenz Mutationen aufweisen. Auch die Verwendung synthetischer Gene ist erfindungsgemäß möglich und wird hier ebenso unter den Terminus "Fremdgen" subsumiert. Es ist auch möglich, dass eine genetisch modifizierte Pflanze zwei oder mehr Fremdgene unterschiedlicher Herkunft codiert.

Das "Fremdgen" im Sinne der Erfindung ist des weiteren dadurch gekennzeichnet, dass es eine Nukleinsäuresequenz umfasst, die in der genetisch modifizierten Pflanze eine bestimmte biologische oder chemische Funktion bzw. Aktivität ausübt. In der Regel codieren diese Gene Biokatalysatoren, wie z.B. Enzyme oder Ribozyme, oder aber umfassen regulatorische Sequenzen, wie beispielsweise Promotoren oder Terminatoren zur Beeinflussung der Expression endogener Proteine (zum Beispiel mittels Antisense-Technologie, Cosuppressionstechnologie oder RNAi-Technologie [RNA Interference]). Dazu können sie aber auch regulatorische Proteine codieren wie beispielsweise Repressoren oder Induktoren. Das Fremdgen kann des weiteren ebenso der gezielten Lokalisation eines Genprodukts der genetisch modifizierten Pflanze dienen und dazu beispielsweise eine Signalsequenz codieren. Auch Inhibitoren, wie beispielsweise antisense-RNA können durch das Fremdgen codiert werden.

Vielfältige Verfahren zur Herstellung genetisch modifizierter Pflanzen sowie Verfahren zur gezielten Mutagenese, zur Gentransformation und Klonierung sind dem Fachmann ohne weiteres bekannt, so beispielsweise aus: Willmitzer, 1993, Transgenic plants, In: Biotechnology, A Multivolume Comprehensive Treatise, Rehm et al. (eds.), Vol.2, 627-659, VCH Weinheim, Germany.

Ein Beispiel für eine komplexe genetische Manipulation einer Nutzpflanze ist die so genannte GURT-Technologie ("Genetic Use Restriction Technologies"), die der technischen Kontrolle der Vermehrung der jeweiligen genetisch modifizierten Pflanzensorte dient. Dazu werden in der Regel zwei oder drei Fremdgene in die Nutzpflanze einkloniert, die in einem komplexen Wechselspiel nach der Gabe eines externen Stimulus eine Kaskade auslösen, die zum Absterben des sich anderenfalls entwickelnden Embryos führt. Der externe Stimulus (beispielsweise ein Wirkstoff oder ein anderer chemischer oder abiotischer Reiz) kann dazu beispielsweise mit einem Repressor interagieren, der damit nicht mehr die Expression einer Rekombinase unterdrückt, so dass die Rekombinase einen Inhibitor spalten kann und damit die Expression eines Toxins erlaubt, das das Absterben des Embryos bewirkt. Beispiele für diese Art der genetisch modifizierten Pflanzen sind in US 5,723,765 oder US 5,808,034 offenbart.

Dem Fachmann sind demnach Verfahren zur Generierung genetisch modifizierter Pflanzen bekannt, die aufgrund der Integration regulatorischer Fremdgene und der damit ggf. vermittelten Überexpression, Suppression oder Inhibierung endogener Gene oder Gensequenzen oder der Existenz oder Expression von Fremdgenen oder deren Fragmente veränderte Eigenschaften aufweisen.

Wie bereits oben ausgeführt, ermöglicht das erfindungsgemäße Verfahren eine Verbesserung der Ausnutzung des Produktionspotentials genetisch modifizierter Pflanzen. Dies kann einerseits ggf. darauf zurückzuführen sein, dass die Aufwandmenge des erfindungsgemäß einsetzbaren Wirkstoffs reduziert werden kann; beispielsweise durch eine Verminderung der eingesetzten Dosis oder aber durch eine Reduktion der Anzahl der Applikationen. Andererseits kann ggf. der Ertrag der Nutzpflanzen quantitativ und/oder qualitativ gesteigert werden. Dies gilt vor allem bei einer transgen erzeugten Resistenz gegen biotischen oder abiotischen Stress. Werden beispielsweise Verbindungen der Formel (I) eingesetzt, kann die Dosierung des Insektizids u.U. auf eine subletale Dosis begrenzt werden, ohne damit die gewünschte Wirkung des Wirkstoffs auf die Schädlinge signifikant abzuschwächen.

Diese synergistischen Wirkungen können je nach Pflanzenarten bzw. Pflanzensorten, deren Standort und Wachstumsbedingungen (Böden, Klima, Vegetationsperiode, Ernährung) variieren und können vielfältig sein. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Diese Vorteile sind auf eine erfindungsgemäß erreichte synergistische Wirkung zwischen den einsetzbaren Verbindungen der Formel (I) und dem jeweiligen Wirkprinzip der genetischen Veränderung der genetisch modifizierten Pflanze zurückzuführen. Mit dieser durch den Synergismus bedingten Reduzierung der Produktionsmittel bei gleichzeitiger Ertrags- oder Qualitätserhöhung sind erhebliche ökonomische und ökologische Vorteile verbunden.

Eine Liste mit dem Fachmann bekannten Beispielen genetisch modifizierter Pflanzen unter Nennung der jeweils betroffenen Struktur in der Pflanze bzw. dem durch die genetische Veränderung exprimierten Protein in der Pflanze ist in **Tabelle 1** zusammengestellt. Darin ist der betroffenen Struktur bzw. dem exprimierten Prinzip jeweils eine bestimmte Merkmalsausprägung im Sinne einer Toleranz gegenüber einem bestimmten Stressfaktor zugeordnet. Eine ähnliche Liste **(Tabelle 3)** stellt - in etwas geänderter Anordnung - ebenso Beispiele von Wirkprinzipien, damit induzierten Toleranzen und möglichen Nutzpflanzen zusammen. Weitere Beispiele von genetisch modifizierten Pflanzen, die für die erfindungsgemäße Behandlung geeignet sind, sind in den **Tabellen 4 bis 6** zusammengestellt.

In einer vorteilhaften Ausführungsform werden die Verbindungen der Formel (I) zur Behandlung genetisch modifizierter Pflanzen enthaltend mindestens ein Gen oder Genfragment zur Codierung eines Bt-Toxins eingesetzt. Bei einem Bt-Toxin handelt es sich um ein ursprünglich aus dem Bodenbakterium *Bacillus thuringiensis* stammendes oder abgeleitetes Protein, das entweder der Gruppe der *crystal toxins (Cry)* oder der *cytolytic toxins (Cyt)* zugehörig ist. Sie werden in dem Bakterium ursprünglich als Protoxine gebildet und werden erst im alkalischen Milieu - beispielsweise im Verdauungstrakt bestimmter Fraßinsekten - zu ihrer aktiven Form metabolisiert. Dort bindet das dann aktive Toxin an bestimmte Kohlenwasserstoffstrukturen an Zelloberflächen und verursacht eine Porenbildung, die das osmotische Potential der Zelle zerstören und damit Zelllysis bewirken kann. Der Tod der Insekten ist die Folge. Bt-Toxine sind vor allem wirksam gegen bestimmte Schädlingsarten aus den Ordnungen der Lepidoptera (Schmetterlinge), Homoptera (Gleichflügler), Diptera (Zweiflügler) und Coleoptera (Käfer) in all ihren Entwicklungsstadien; also von der Eilarve über ihre juvenilen bis hin zu ihren adulten Formen.

Es ist seit langem bekannt, Gensequenzen codierend Bt-Toxine, Teile davon oder aber von Bt-Toxin abgeleitete Proteine oder Peptide mit Hilfe gentechnologischer Verfahren in landwirtschaftliche Nutzpflanzen einzuklonieren und somit genetisch modifizierte Pflanzen mit endogenen Resistenzen gegen Bt-Toxin empfindlichen Schädlinge zu erzeugen. Die mindestens ein Bt-Toxin oder daraus abgeleitete Proteine codierenden genetisch modifizierten Pflanzen werden im Sinne der Erfindung als "Bt-Pflanzen" definiert.

Die "erste Generation" solcher Bt-Pflanzen enthielt in der Regel nur die Gene, die die Bildung eines bestimmten Toxins ermöglichten und somit nur gegen eine Gruppe von Schaderregern resistent machten. Beispiel für eine kommerziell erhältliche Mais-Sorte mit dem Gen zur Bildung des Cry1Ab Toxins ist "YieldGard^{®}" von Monsanto, die gegen den Maiszünsler resistent ist. Eine bekannte Linie des "YieldGard^{®}" Mais von Monsanto ist die Linie MON 810. Die Resistenz gegen andere Schaderreger aus der Familie der Lepidopteren wird dagegen in der Bt-Baumwoll-Sorte ("Bollgard I®") durch Einklonieren der Gene zur Bildung des Cry1Ac Toxins erzeugt. "Bollgard II®" ist eine Baumwoll-Sorte, die die Toxine Cry1Ac und Cry2Ab exprimiert. Wiederum andere genetisch modifizierte Kulturpflanzen exprimieren Gene zur Bildung von Bt-Toxinen mit Wirkung gegen Schaderreger aus der Ordnung der Coleopteren. Als Beispiele dafür sei die Bt-KartoffelSorte "NewLeaf®" (Monsanto) genannt, die das Cry3A Toxin bilden kann und somit gegen den Kartoffelkäfer ("Colorado Potatoe Beetle") resistent ist, bzw. die genetisch modifizierte Mais-Sorte "YieldGard Rootworm®" (Monsanto), die das Cry 3Bb1 Toxin bildet und somit gegen verschiedene Arten des Maiswurzelbohrers geschützt ist. Weitere Bt-Toxine sind die VIP-Proteine, beispielsweise VIP-3 mit Wirkung gegen Schaderreger aus der Ordnung der Lepidoptera, Coleoptera und Diptera. Ein Beispiel für eine Baumwoll-Sorte, die ein VIP-Protein (Vip3A) zusammen mit Cry1Ab exprimiert ist "VIPCOT®" (Syngenta). Beide Proteine sind hoch aktiv gegen zwei sehr häufige Baumwoll-Schädlinge, Helicoverpa armigera bzw. zea (cotton bollworm = Baumwollkapselwurm bzw. Baumwolleule) und Heliothis virescens (tobacco budworm = Tabak Knospenwurm bzw. amerikanische Tabakeule).

In einer "zweiten Generation" wurden die oben bereits beschriebenen mehrfach genetisch modifizierten Pflanzen generiert, die mindestens zwei Fremdgene enthalten oder exprimieren. Ein Beispiel hierfür ist die genetisch modifizierte Mais-Sorte "YieldGard Plus®" (Monsanto), die das Cry1Ab und das Cry 3Bb1 Toxin bildet.

Erfindungsgemäß bevorzugt sind genetisch modifizierte Pflanzen mit Bt-Toxinen aus der Gruppe der Cry-Familie (siehe z.B. Crickmore et al., 1998, Microbiol. Mol. Biol. Rev. 62 : 807-812), die insbesondere wirksam sind gegen Lepidopteren, Coleopteren oder Dipteren. Beispiele für Gene codierend die Proteine sind:
cry1Aa1, cry1Aa2, cry1Aa3, cry1Aa4, cry1Aa5, cry1Aa6, cry1Aa7, cry1Aa8, cry1Aa9, cry1Aa10, cry1Aa11 cry1Ab1, cry1Ab2, cry1Ab3, cry1Ab4, cry1Ab5, cry1Ab6, cry1Ab7, cry1Ab8, cry1Ab9, cry1Ab10, cry1Ab11, cry1Ab12, cry1Ab13, cry1Ab14, cry1Ac1, cry1Ac2, cry1Ac3, cry1Ac4, cry1Ac5, cry1Ac6, cry1Ac7, cry1Ac8, cry1Ac9, cry1Ac10, cry1Ac11, cry1Ac12, cry1Ac13, cry1Ad1, cry1Ad2, cry1Ae1, cry1Af1, cry1Ag1, cry1Ba1, cry1Ba2, cry1Bb1, cry1Bc1, cry1Bd1, cry1Be1, cry1Ca1, cry1Ca2, cry1Ca3, cry1Ca4, cry1Ca5, cry1Ca6, cry1Ca7, cry1Cb1, cry1Cb2, cry1Da1, cry1Da2, cry1Db1, cry1Ea1, cry1Ea2, cry1Ea3, cry1Ea4, cry1Ea5, cry1Ea6, cry1Eb1, cry1Fa1, cry1Fa2, cry1Fb1, cry1Fb2, cry1Fb3, cry1Fb4, cry1Ga1, cry1Ga2, cry1Gb1, cry1Gb2, cry1Ha1, cry1Hb1, cry1Ia1, cry1Ia2, cry1Ia3, cry1Ia4, cry1Ia5, cry1Ia6, cry1Ib1, cry1Ic1, cry1Id1, cryl1e1, cry1I-like, cry1Ja1, cry1Jb1, cry1Jc1, cry1Ka1, cry1-like, cry2Aa1, cry2Aa2, cry2Aa3, cry2Aa4, cry2Aa5, cry2Aa6, cry2Aa7, cry2Aa8, cry2Aa9, cry2Ab1, cry2Ab2, cry2Ab3, cry2Ac1, cry2Ac2, cry2Ad1, cry3Aa1, cry3Aa2, cry3Aa3, cry3Aa4, cry3Aa5, cry3Aa6, cry3Aa7, cry3Ba1, cry3Ba2, cry3Bb1, cry3Bb2, cry3Bb3, cry3Ca1, cry4Aa1, cry4Aa2, cry4Ba1, cry4Ba2, cry4Ba3, cry4Ba4, cry5Aa1, cry5Ab1, cry5Ac1, cry5Ba1, cry6Aa1, cry6Ba1, cry7Aa1, cry7Ab1, cry7Ab2, cry8Aa1, cry8Ba1, cry8Ca1, cry9Aa1, cry9Aa2, cry9Ba1, cry9Ca1, cry9Da1, cry9Da2, cry9Ea1, cry9 like, cry10Aa1, cry10Aa2, cry11Aa1, cry11Aa2, cry11Ba1, cry11Bb1, cry12Aa1, cry13Aa1, cry14Aa1, cry15Aa1, cry16Aa1, cry17Aa1, cry18Aa1, cry18Ba1, cry18Ca1, cry19Aa1, cry19Ba1, cry20Aa1, cry21Aa1, cry21Aa2, cry22Aa1, cry23Aa1, cry24Aa1, cry25Aa1, cry26Aa1, cry27Aa1, cry28Aa1, cry28Aa2, cry29Aa1, cry30Aa1, cry31Aa1, cyt1Aa1, cyt1Aa2, cyt1Aa3, cyt1Aa4, cyt1Ab1, cyt1Ba1, cyt2Aa1, cyt2Ba1, cyt2Ba2, cyt2Ba3, cyt2Ba4, cyt2Ba5, cyt2Ba6, cyt2Ba7, cyt2Ba8, cyt2Bb1.
   Besonders bevorzugt sind die Gene oder Genabschnitte der Subfamilien cry1, cry2, cry3, cry5 und cry9, insbesondere bevorzugt sind cry1Ab, cry1Ac, cry3A, cry3B und cry9C.
   Weiterhin bevorzugt ist es, Pflanzen einzusetzen, die neben den Genen für ein oder mehrere Bt-Toxine ggf. auch Gene zur Expression beispielsweise eines Protease- bzw. Peptidase-Inhibitors (wie in WO-A 95/35031), von Herbizidresistenzen (z.B. gegen Glufosinate oder Glyphosate durch Expression des pat- oder bar-Gens) oder zur Ausbildung von Nematoden-, Pilz- oder Virusresistenzen (z.B. durch Expression einer Glucanase, Chitinase) enthalten oder exprimieren. Sie können aber auch in ihren metabolischen Eigenschaften genetisch modifiziert sein, so dass eine qualitative und/oder quantitative Änderung von Inhaltsstoffen (z.B. durch Modifikationen des Energie-, Kohlenhydrat-, Fettsäure- oder Stickstoffwechsels oder diese beeinflussende Metabolitflüsse) zeigen (siehe oben). Ein Beispiel für eine Mais-Sorte, die das Cry1Fa2 Toxin und das Enzym Phosphinothricin N-Acetyltransferase (PAT, Vermittlung von Herbizidresistenz gegen Glufosinat Ammonium) exprimiert ist "Herculex I®" (Pioneer/Dow Agrosciences). Eine Mais-Sorte, die ein verkürztes Cry1Ab Toxin und das Enzym PAT exprimiert ist Bt11 Mais von Syngenta. Bt176 Mais von Syngenta exprimiert ein Cry1Ab Toxin und das Enzym PAT.
   Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfasst im vorliegenden Zusammenhang jegliche Pflanze, die mindestens ein Transgen enthält, das eine Kodiersequenz umfasst, die für folgendes kodiert:
1) ein insektizides Kristallprotein aus *Bacillus thuringiensis* oder einen insektiziden Teil davon, wie die insektiziden Kristallproteine, die von Crickmore et al., Microbiology and Molecular Biology Reviews (1998), 62, 807-813, von Crickmore et al. (2005) in der *Bacillus thuringien-*sis-Toxinnomenklatur aktualisiert, online bei: http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1F, Cry2Ab, Cry3Ae oder Cry3Bb oder insektizide Teile davon; oder
2) ein Kristallprotein aus Bacillus thuringiensis oder einen Teil davon, der in Gegenwart eines zweiten, anderen Kristallproteins als Bacillus thuringiensis oder eines Teils davon insektizid wirkt, wie das binäre Toxin, das aus den Kristallproteinen Cy34 und Cy35 besteht (Moellenbeck et al., Nat. Biotechnol. (2001), 19, 668-72; Schnepf et al., Applied Environm. Microb. (2006), 71, 1765-1774); oder
3) ein insektizides Hybridprotein, das Teile von zwei unterschiedlichen insektiziden Kristallproteinen aus Bacillus thuringiensis umfasst, wie zum Beispiel ein Hybrid aus den Proteinen von 1) oben oder ein Hybrid aus den Proteinen von 2) oben, z. B. das Protein Cry1A.105, das von dem Mais-Event MON98034 produziert wird (WO 2007/027777); oder
4) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier-DNA während der Klonierung oder Transformation induziert wurden, wie das Protein Cry3Bb1 in Mais-Events MON863 oder MON88017 oder das Protein Cry3A im Mais-Event MIR 604; oder
5) ein insektizides sezerniertes Protein aus Bacillus thuringiensis oder Bacillus cereus oder einen insektiziden Teil davon, wie die vegetativ wirkenden insektentoxischen Proteine (vegetative insekticidal proteins, VIP), die unter http://www.lifesci.sussex.ac.uk/Home/Neil_Crickmore/Bt/vip.html angeführt sind, z. B. Proteine der Proteinklasse VIP3Aa; oder
6) ein sezerniertes Protein aus Bacillus thuringiensis oder Bacillus cereus, das in Gegenwart eines zweiten sezernierten Proteins aus Bacillus thuringiensis oder B. cereus insektizid wirkt, wie das binäre Toxin, das aus den Proteinen VIP1A und VIP2A besteht (WO 94/21795); oder
7) ein insektizides Hybridprotein, das Teile von verschiedenen sezernierten Proteinen von Bacillus thuringiensis oder Bacillus cereus umfasst, wie ein Hybrid der Proteine von 1) oder ein Hybrid der Proteine von 2) oben; oder
8) ein Protein gemäß einem der Punkte 1) bis 3) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der entsprechenden Zielinsektenarten zu erweitern und/oder wegen Veränderungen, die in die Kodier-DNA während der Klonierung oder Transformation induziert wurden (wobei die Kodierung für ein insektizides Protein erhalten bleibt), wie das Protein VIP3Aa im Baumwoll-Event COT 102.

Natürlich zählt zu den insektenresistenten transgenen Pflanzen im vorliegenden Zusammenhang auch jegliche Pflanze, die eine Kombination von Genen umfasst, die für die Proteine von einer der oben genannten Klassen 1 bis 8 kodieren. In einer Ausführungsform enthält eine insektenresistente Pflanze mehr als ein Transgen, das für ein Protein nach einer der oben genannten 1 bis 8 kodiert, um das Spektrum der entsprechenden Zielinsektenarten zu erweitern oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Eine Liste mit Beispielen von Wirkprinzipien, die durch eine genetische Modifikation in eine Nutzpflanze eingebracht werden können, und die sich für die erfindungsgemäße Behandlung allein oder in Kombination eignen, ist in **Tabelle 2** zusammengestellt. Diese Tabelle enthält unter der Angabe "AP" (aktives Prinzip) das jeweils betroffene Wirkprinzip und dem zugeordnet den damit zu kontrollierenden Schädling.

In einer besonders bevorzugten Variante wird das erfindungsgemäße Verfahren zur Behandlung genetisch modifizierter Gemüse-, Mais-, Soja-, Baumwoll-, Tabak-, Reis-, Kartoffel und Zuckerrübensorten eingesetzt. Dabei handelt es sich vorzugsweise um Bt-Pflanzen.

Bei den Gemüsepflanzen bzw. -sorten handelt es sich beispielsweise um folgende Nutzpflanzen:
○ Kartoffeln: vorzugsweise Stärkekartoffeln, Süßkartoffeln und Speisekartoffeln;
○ Wurzelgemüse: vorzugsweise Möhren (Karotten), Kohlrüben (Speiserüben, Stoppelrüben, Mairüben, Herbstrüben, Teltower Rübchen), Schwarzwurzeln, Topinambur, Wurzelpetersilie, Pastinake, Rettich und Meerrettich;
○ Knollengemüse: vorzugsweise Kohlrabi, Rote Bete (Rote Rübe), Sellerie (Knollensellerie), Radies und Radieschen;
○ Zwiebelgemüse: vorzugsweise Porree, Lauch und Zwiebeln (Steck- und Samenzwiebel);
○ Kohlgemüse: vorzugsweise Kopfkohl (Weißkohl, Rotkohl, Blattkohl, Wirsingkohl), Blumenkohl, Sprossenkohl, Brokkoli, Grünkohl, Markstammkohl, Meerkohl und Rosenkohl;
○ Fruchtgemüse: vorzugsweise Tomaten (Freiland- ,Strauch-, Fleisch-, Gewächshaus-, Cocktail-, Industrie- und Frischmarkt-Tomaten), Melonen, Eierfrucht, Auberginen, Paprika (Gemüse- und Gewürzpaprika, Spanischer Pfeffer), Peperoni, Kürbis, Zucchini und Gurken (Freiland-, Gewächshaus-, Schlangen- und Einlegegurken);
○ Gemüsehülsenfrüchte: vorzugsweise Buschbohnen (als Schwertbohnen, Perlbohnen, Flageoletbohnen, Wachsbohnen, Trockenkochbohnen mit grün- und gelbhülsigen Sorten), Stangenbohnen (als Schwertbohnen, Perlbohnen, Flageoletbohnen, Wachsbohnen mit grün-, blau- und gelbhülsigen Sorten), Dicke Bohnen (Ackerbohnen, Puffbohnen, Sorten mit weiß und schwarz gefleckten Blüten), Erbsen (Platterbsen, Kichererbsen, Markerbsen, Schalerbsen, Zuckererbsen, Palerbsen, Sorten mit hell- und dunkelgrünem Frischkorn) und Linsen;
○ Blatt- und Stielgemüse: vorzugsweise Chinakohl, Kopfsalat, Pflücksalat, Feldsalat, Eisbergsalat, Romanasalat, Eichblattsalat, Endivien, Radicchio, Lollo rosso-Salat, Ruccola-Salat, Chicoree, Spinat, Mangold (Blatt- und Stielmangold) und Petersilie;
○ Sonstige Gemüse: vorzugsweise Spargel, Rhabarber, Schnittlauch, Artischocken, Minzen, Sonnenblumen, Knollenfenchel, Dill, Gartenkresse, Senf, Mohn, Erdnuss, Sesam und Salatzichorien.

Bt-Gemüse einschließlich beispielhafter Methoden zu ihrer Herstellung sind ausführlich beschrieben beispielsweise in Barton et al., 1987, Plant Physiol. 85 : 1103-1109 ; Vaeck et al., 1987, Nature 328 : 33-37 ; Fischhoff et al., 1987, Bio/Technology 5 : 807-813. Bt-Gemüsepflanzen sind darüber hinaus bereits bekannt als kommerziell erhältliche Varianten, beispielsweise die Kartoffelsorte NewLeaf^{®} (Monsanto). Ebenso beschreibt die US 6,072,105 die Herstellung von Bt-Gemüse.

Ebenso ist auch bereits Bt-Baumwolle dem Grunde nach bekannt, beispielsweise aus der US-A-5,322,938 Im Rahmen der vorliegenden Erfindung ist die Bt-Baumwolle mit den Handelsnamen NuCOTN33® und NuCOTN33B® (Expression des Cry1Ac Toxins) besonders bevorzugt.

Auch die Verwendung und Herstellung von Bt-Mais ist bereits lange bekannt, beispielsweise aus Ishida, Y., Saito, H., Ohta, S., Hiei, Y., Komari, T., and Kumashiro, T. (1996). High efficiency transformation of maize (Zea mayz L.) mediated by Agrobacterium tumefaciens, Nature Biotechnology 4: 745-750. Auch die EP-B-0485506 beschreibt die Herstellung von Bt-Maispflanzen. Bt-Mais ist weiterhin in verschiedenen Variationen kommerziell erhältlich, beispielsweise unter folgenden Handelsnamen (Firma/Firmen jeweils in Klammern): KnockOut® (Novartis Seeds, Expression des Cry1Ab Toxins), NaturGard® (Mycogen Seeds, Expression des Cry1Ab Toxins), Yieldgard® (Novartis Seeds, Monsanto, Cargill, Golden Harvest, Pioneer, DeKalb u. a., Expression des Cry1Ab Toxins), Bt-Xtra® (DeKalb, Expression des cry1Ac Toxins), StarLink® (Aventis CropScience, Garst u. a., Expression des Cry9c Toxins), Herculex 1 (Mycogen, Pioneer, Expression des Cry1F Toxins). Im Sinne der vorliegenden Erfindung sind vor allem die folgenden Maissorten besonders bevorzugt: KnockOut®, NaturGard®, Yieldgard®, Bt-Xtra® und StarLink®.

Pflanzen oder Pflanzensorten (die mit Methoden der Pflanzenbiotechnologie, wie der Gentechnik, erhalten werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidtolerante Pflanzen sind zum Beispiel glyphosatetolerante Pflanzen, d. h. Pflanzen, die gegenüber dem Herbizid Glyphosate oder dessen Salzen tolerant gemacht worden sind. So können zum Beispiel glyphosatetolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium* (Comai et al., Science (1983), 221, 370-371), das CP4-Gen des Bakteriums *Agrobacterium sp.* (Barry et al., Curr. Topics Plant Physiol. (92), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 2001/66704) kodieren. Es kann sich auch um eine mutierte EPSPS handeln, wie sie zum Beispiel in EP-A 0837944, WO 2000/066746, WO 2000/066747 oder WO 2002/026995 beschrieben ist. Glyphosatetolerante Pflanzen können auch dadurch erhalten werden, dass man ein Gen exprimiert, das für ein Glyphosate-Oxidoreduktase-Enzym, wie es in US 5,776,760 und US 5,463,175 beschrieben ist, kodiert. Glyphosatetolerante Pflanzen können auch dadurch erhalten werden, dass man ein Gen exprimiert, das für ein Glyphosate-acetyltransferase-Enzym, wie es in z. B. WO 2002/036782, WO 2003/092360, WO 2005/012515 und WO 2007/024782 beschrieben ist, kodiert. Glyphosatetolerante Pflanzen können auch dadurch erhalten werden, dass man Pflanzen, die natürlich vorkommende Mutationen der oben erwähnten Gene, wie sie zum Beispiel in WO 2001/024615 oder WO 2003/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinotricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für ein Phosphinotricin-acetyltransferase kodiert (wie zum Beispiel das bar- oder pat-Protein aus Streptomyces-Arten). Pflanzen, die eine exogene Phosphinotricin-acetyltransferase exprimieren, sind zum Beispiel in US 5,561,236; US 5,648,477; US 5,646,024; US 5,273,894; US 5,637,489; US 5,276,268; US 5,739,082; US 5,908,810 und US 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 96/038567, WO 99/024585 und WO 99/024586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 99/034008 und WO 2002/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in US 5,605,011, US 5,378,824, US 5,141,870 und US 5,013,659, beschrieben ist. Die Herstellung von sulfonylharnstofftoleranten Pflanzen und imidazolinontoleranten Pflanzen ist in US 5,605,011; US 5,013,659; US 5,141,870; US 5,767,361; US 5,731,180; US 5,304,732; US 4,761,373; US 5,331,107; US 5,928,937; und US 5,378,824; sowie in der internationalen Veröffentlichung WO 96/033270 beschrieben. Weitere imidazolinontolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere sulfonylharnstoff- und imidazolinontolerante Pflanzen sind auch in z.B. WO 2007/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in US 5,084,082, für Reis in WO 97/41218, für die Zuckerrübe in US 5,773,702 und WO 99/057965, für Salat in US 5,198,599 oder für die Sonnenblume in WO 2001/065922 beschrieben ist.

Auch für Sojabohne sind Roundup®Ready Sorten oder Sorten mit einer Resistenz gegen das Herbizid Liberty Link® erhältlich und erfindungsgemäß behandelbar. Bei Reis sind eine Vielzahl von Linien des so genannten "Golden Rice" erhältlich, die sich gleichermaßen dadurch auszeichnen, dass sie durch eine genetische Modifikation einen erhöhten Gehalt an Provitamin A aufweisen. Auch hierbei handelt es sch um Beispiele für Pflanzen, die nach dem erfindungsgemäßen Verfahren mit den geschilderten Vorteilen behandelt werden können.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Stressfaktoren tolerant. Solche Pflanzen können durch genetische Transformation oder durch Selektion von Pflanzen, die eine Mutation enthalten, die solch eine Stressresistenz verleiht, erhalten werden. Zu besonders nützlichen Pflanzen mit Stresstoleranz zählen folgende:
a. Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 2000/004173 oder EP 04077984.5 oder EP 06009836.5 beschrieben ist.
b. Pflanzen, die ein stresstoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;
c. Pflanzen, die ein stresstoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in EP 04077624.7 oder WO 2006/133827 oder PCT/EP07/002433 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:
1) Transgene Pflanzen, die eine modifizierte Stärke synthetisieren, die bezüglich ihrer chemischphysikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP 0571427, WO 95/004826, EP 0719338, WO 96/15248, WO 96/19581, WO 96/27674, WO 97/11188, WO 97/26362, WO 97/32985, WO 97/42328, WO 97/44472, WO 97/45545, WO 98/27212, WO 98/40503, WO 99/58688, WO 99/58690, WO 99/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/975, WO 95/26407, WO 96/34968, WO 98/20145, WO 99/12950, WO 99/66050, WO 99/53072, US 6,734,341, WO 2000/11192, WO 98/22604, WO 98/32326, WO 2001/98509, WO 2001/98509, WO 2005/002359, US 5,824,790, US 6,013,861, WO 94/004693, WO 94/009144, WO 94/11520, WO 95/35026 bzw. WO 97/20936 beschrieben.
2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP 0663956, WO 96/001904, Wo 96/021023, WO 98/039460 und WO 99/024593 beschrieben ist, Pflanzen, die alpha-1,4-Glucane produzieren, wie dies in WO 95/031553, US 2002/031826, US 6,284,479, US 5,712,107, WO 97/047806, WO 97/047807, WO 97/047808 und WO 2000/14249 beschrieben ist, Pflanzen, die alpha-1,6-verzweigte alpha-1,4-Glucane produzieren, wie dies in WO 2000/73422 beschrieben ist, und Pflanzen, die Alternan produzieren, wie dies in WO 2000/047727, EP 06077301.7, US 5,908,975 und EP 0728213 beschrieben ist.
3) Transgene Pflanzen, die Hyaluronan produzieren, wie dies zum Beispiel in WO 2006/032538, WO 2007/039314, WO 2007/039315, WO 2007/039316, JP 2006/304779 und WO 2005/012529 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:
a) Pflanzen wie Baumwollpflanzen, die eine veränderte Form von Cellulosesynthasegenen enthalten, wie dies in WO 98/000549 beschrieben ist,
b) Pflanzen wie Baumwollpflanzen, die eine veränderte Form von rsw2- oder rsw3-homologen Nukleinsäuren enthalten, wie dies in WO 2004/053219 beschrieben ist;
c) Pflanzen wie Baumwollpflanzen mit einer erhöhten Expression der Saccharosephosphatsynthase, wie dies in WO 2001/017333 beschrieben ist;
d) Pflanzen wie Baumwollpflanzen mit einer erhöhten Expression der Saccharosesynthase, wie dies in WO 2002/45485 beschrieben ist;
e) Pflanzen wie Baumwollpflanzen bei denen der Zeitpunkt der Durchlasssteuerung der Plasmodesmen an der Basis der Faserzelle verändert ist, z. B. durch Herunterregulieren der faserselektiven β-1,3-Glucanase, wie dies in WO 2005/017157 beschrieben ist;
f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:
a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;
b) Pflanzen wie Rapspflanzen, die Öl mit einem niedrigen Linolensäuregehalt produzieren, wie dies in US 6,270828, US 6,169,190 oder US 5,965,755 beschrieben ist.
c) Pflanzen wie Rapspflanzen, die Öl mit einem niedrigen gesättigten Fettsäuregehalt produzieren, wie dies z. B. in US 5,434,283 beschrieben ist.

Besonders nützliche transgene Pflanzen, die erfindungsgemäß behandelt werden können, sind Pflanzen, die Transformations-Events, oder eine Kombination von Transformations-Events, enthalten und die zum Beispiel in den Dateien von verschiedenen nationalen oder regionalen Behörden angeführt sind (siehe zum Beispiel http://gmoinfo.jrc.it/gmp_browse.aspx und http://www.agbios.com/dbase.php).

Das erfindungsgemäße Verfahren eignet sich zur Bekämpfung einer Vielzahl von Schadorganismen, die insbesondere in Gemüse, Mais bzw. Baumwolle auftreten, insbesondere Insekten und Spinnentieren, ganz besonders bevorzugt Insekten. Zu den erwähnten Schädlingen gehören:
○ Aus der Ordnung der Anoplura (Phthiraptera), z.B. Damalinia spp., Haematopinus spp., Linognathus spp., Pediculus spp., Trichodectes spp..
○ Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.
○ Aus der Klasse der Bivalva z.B. Dreissena spp..
○ Aus der Ordnung der Chilopoda z.B. Geophilus spp., Scutigera spp..
○ Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp..
○ Aus der Ordnung der Collembola z.B. Onychiurus armatus.
○ Aus der Ordnung der Dermaptera z.B. Forficula auricularia.
○ Aus der Ordnung der Diplopoda z.B. Blaniulus guttulatus.
○ Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp..
○ Aus der Klasse der Gastropoda z.B. Arion spp., Biomphalaria spp., Bulinus spp., Deroceras spp., Galba spp., Lymnaea spp., Oncomelania spp., Succinea spp..
○ Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.
○ Weiterhin lassen sich Protozoen, wie Eimeria, bekämpfen.
○ Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp..
○ Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii..
○ Aus der Ordnung der Hymenoptera z.B. Diprion spp., Hoplocampa spp., Lasius spp., Monomorium pharaonis, Vespa spp..
○ Aus der Ordnung der Isopoda z.B. Armadillidium vulgare, Oniscus asellus, Porcellio scaber.
○ Aus der Ordnung der Isoptera z.B. Reticulitermes spp., Odontotermes spp..
○ Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..
○ Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.
○ Aus der Ordnung der Siphonaptera z.B. Ceratophyllus spp., Xenopsylla cheopis.
○ Aus der Ordnung der Symphyla z.B. Scutigerella immaculata.
○ Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..
○ Aus der Ordnung der Thysanura z.B. Lepisma saccharina.
○ Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Insbesondere ist das erfindungsgemäße Verfahren zur Behandlung von Bt-Gemüse, Bt-Mais, Bt-Baumwolle, Bt-Soja, Bt-Tabak sowie auch Bt-Reis, Bt-Zuckerrüben oder Bt-Kartoffeln geeignet zur Kontrolle von Blattläusen (Aphidina), Weißen Fliegen (Trialeurodes), Thrips (Thysanoptera), Spinnmilben (Arachnida), Schild- oder Schmierläusen (Coccoidae bzw. Pseudococcoidae).

Die erfindungsgemäß einsetzbaren Wirkstoffe können in üblichen Formulierungen eingesetzt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium enthalten.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsysulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder-Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel.

Diese einzelnen Formulierungstypen sind im Prinzip bekannt und beispielsweise beschrieben in: "Pesticides Formulations", 2nd Ed., Marcel Dekker N.Y.; Martens, 1979, "Spray Drying Handbook", 3rd Ed., G. Goodwin Ltd. London.

Der Fachmann kann aufgrund seiner allgemeinen Fachkenntnisse geeignete Formulierungshilfen auswählen (siehe dazu beispielsweise Watkins, "Handbook of Insecticide Dust Diluents and Carriers", 2nd Ed., Darland Books, Caldwell N.J.).

In einer bevorzugten Ausführungsform werden die Pflanzen oder Pflanzenteile mit einem Suspensionskonzentrat auf Ölbasis erfindungsgemäß behandelt. Ein vorteilhaftes Suspensionskonzentrat ist aus der WO 2005/084435 (EP 1 725 104 A2) bekannt. Es besteht aus mindestens einem bei Raumtemperatur festen agrochemischen Wirkstoff, mindestens einem "geschlossenen" Penetrationsförderer, mindestens einem Pflanzenöl oder Mineralöl, mindestens einem nicht-ionischen Tensid und/oder mindestens einem anionischen Tensid und gegebenenfalls einem oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien. Bevorzugte Ausführungsformen des Suspensionskonzentrats sind in der genannte WO 2005/084435 beschrieben. Beide Dokumente werden zu Zwecken der Offenbarung vollumfänglich in Bezug genommen.

In einer weiteren bevorzugten Ausführungsform werden die genetisch modifizierten Pflanzen oder Pflanzenteile mit Mitteln enthaltend Ammonium- oder Phosphoniumsalzen und gegebenenfalls Penetrationsförderen erfindungsgemäß behandelt. Vorteilhafte Mittel sind aus der WO 2007/068355 bekannt. Sie bestehen aus mindestens einer Verbindung der Formel (I) und mindestens einem Ammonium- oder Phosphoniumsalz, gegebenenfalls Penetrationsförderern. Bevorzugte Ausführungsformen sind in der WO 2007/068355 beschrieben. Dieses Dokument wird zu Zwecken der Offenbarung vollumfänglich in Bezug genommen.

Die Formulierungen enthalten im Allgemeinen zwischen 0,01 und 98 Gew.-% Wirkstoff, vorzugsweise zwischen 0,5 und 90 %. In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 5 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Mit den äußeren Bedingungen wie Temperatur, Feuchtigkeit u.a. kann auch die erforderliche Aufwandmenge variieren. Sie kann innerhalb weiter Grenzen schwanken, z.B. zwischen 0,1 g/ha und 5,0 kg/ha oder mehr Aktivsubstanz. Vorzugsweise liegt sie jedoch zwischen 0,1 g/ha und 1,0 kg/ha. Aufgrund der synergistischen Effekte zwischen Bt-Gemüse und Insektizid sind Aufwandmengen von 0,1 bis 500 g/ha, besonders bevorzugt.

Für Verbindungen der Formel (I) sind Aufwandmengen von 10 bis 500 g/ha bevorzugt, besonders bevorzugt sind 10 bis 200 g/ha.

In einer besonderen Ausführungsform des erfindungsgemäßen Verfahrens wird die Verbindung der Formel (I) in einer Aufwandmenge von 0,1 g/ha bis 5,0 kg/ha, bevorzugt von 0,1 bis 500 g/ha und besonders bevorzugt von 50 bis 500 g/ha und insbesondere bevorzugt von 50 bis 200 g/ha verwendet.

Die erfindungsgemäßen Wirkstoffe können in ihren handelsüblichen Formulierungen sowie in den aus diesen Formulierungen bereiteten Anwendungsformen in Mischungen mit anderen Wirkstoffen, wie Insektiziden, Lockstoffen, Sterilantien, Akariziden, Nematiziden, Fungiziden, wachstumsregulierenden Stoffen oder Herbiziden vorliegen.

Besonders günstige Mischpartner sind z.B. die folgenden:

### Fungizide:

### Inhibitoren der Nucleinsäure Synthese

Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure

### Inhibitoren der Mitose und Zellteilung

Benomyl, Carbendazim, Diethofencarb, Fuberidazole, Pencycuron, Thiabendazol, Thiophanatmethyl, Zoxamid

### Inhibitoren der Atmungskette Komplex I/II

### Diflumetorim

Bixafen, Boscalid, Carboxin, Fenfuram, Fluopyram, Flutolanil, Furametpyr, Mepronil, Oxycarboxin, Penthiopyrad, Thifluzamid, N-[2-(1,3-dimethylbutyl)phenyl]-5-fluor-1,3-dimethyl-1H-pyrazol-4-carboxamid

### Inhibitoren der Atmungskette Komplex III

Amisulbrom, Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Pyribencarb, Picoxystrobin, Trifloxystrobin

Entkoppler

Dinocap, Fluazinam

Inhibitoren der ATP Produktion

Fentinacetat, Fentinchlorid, Fentinhydroxid, Silthiofam

Inhibitoren der Aminosäure- und Proteinbiosynthese

Andoprim, Blasticidin-S, Cyprodinil, Kasugamycin, Kasugamycinhydrochlorid Hydrat, Mepanipyrim, Pyrimethanil

Inhibitoren der Signal-Transduktion

Fenpiclonil, Fludioxonil, Quinoxyfen

Inhibitoren der Fett- und Membran Synthese

Chlozolinat, Iprodion, Procymidon, Vinclozolin

Ampropylfos, Kalium-Ampropylfos, Edifenphos, Iprobenfos (IBP), Isoprothiolan, Pyrazophos

Tolclofos-methyl, Biphenyl

Iodocarb, Propamocarb, Propamocarb hydrochlorid

Inhibitoren der Ergosterol Biosynthese

Fenhexamid,

Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Spiroxamin, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol,

Aldimorph, Dodemorph, Dodemorphacetat, Fenpropimorph, Tridemorph, Fenpropidin, Spiroxamin,

Naftifin, Pyributicarb, Terbinafin

Inhibitoren der Zellwand Synthese

Benthiavalicarb, Bialaphos, Dimethomorph, Flumorph, Iprovalicarb, Polyoxins, Polyoxorim, Validamycin A

Inhibitoren der Melanin Biosynthese

Capropamid, Diclocymet, Fenoxanil, Phtalid, Pyroquilon, Tricyclazol

Resistenzinduktion

Acibenzolar-S-methyl, Probenazol, Tiadinil

Multisite

Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

### Unbekannter Mechanismus

Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Fosetyl-Al, Hexachlorobenzol, 8-Hydroxychinolinsulfat, Iprodione, Irumamycin, Isotianil, Methasulfocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]-3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethylcyclohexyl)-3-formylamino-2-hydroxy-benzamid, 2-[[[[1-[3(1Fluor-2-phenylethyl)oxyl phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1- carbonsäure, O-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Acetylcholinesterase (AChE) Inhibitoren
Carbamate, zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Fenoxycarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
Organophosphate,
   zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, E-thion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion
Natrium-Kanal-Modulatoren / Spannungsabhängige Natrium-Kanal-Blocker
Pyrethroide,
   zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Eflusilanate, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Pyrethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)
DDT
Oxadiazine,
   zum Beispiel Indoxacarb
Semicarbazone,
   zum Beispiel Metaflumizon (BAS3201)
Acetylcholin-Rezeptor-Agonisten/-Antagonisten
Chloronicotinyle,
   zum Beispiel Acetamiprid, AKD 1022, Clothianidin, Dinotefuran, Imidacloprid, Imidaclothiz, Nitenpyram, Nithiazine, Thiacloprid, Thiamethoxam
Nicotine, Bensultap, Cartap
Acetylcholin-Rezeptor-Modulatoren
Spinosyne,
   zum Beispiel Spinosad, Spinetoram
GABA-gesteuerte Chlorid-Kanal-Antagonisten
Organochlorine,
   zum Beispiel Camphechlor, Chlordane, Endosulfan, Gamma-HCH, HCH, Heptachlor, Lindane, Methoxychlor
Fiprole,
   zum Beispiel Acetoprole, Ethiprole, Fipronil, Pyrafluprole, Pyriprole, Vaniliprole
Chlorid-Kanal-Aktivatoren
Mectine,
   zum Beispiel Abamectin, Emamectin, Emamectin-benzoate, Ivermectin, Lepimectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
Diacylhydrazine,
   zum Beispiel Chromafenozide, Halofenozide, Methoxyfenozide, Tebufenozide
Inhibitoren der Chitinbiosynthese
Benzoylharnstoffe,
   zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
Buprofezin
Cyromazine
Inhibitoren der oxidativen Phosphorylierung, ATP-Disruptoren
Diafenthiuron
Organozinnverbindungen,
   zum Beispiel Azocyclotin, Cyhexatin, Fenbutatin-oxide
Entkoppler der oxidativen Phoshorylierung durch Unterbrechung des H-Protongradienten
Pyrrole,
   zum Beispiel Chlorfenapyr
Dinitrophenole,
   zum Beispiel Binapacyrl, Dinobuton, Dinocap, DNOC, Meptyldinocap
Site-I-Elektronentransportinhibitoren
METI's,
   zum Beispiel Fenazaquin, Fenpyroximate, Pyrimidifen, Pyridaben, Tebufenpyrad, Tolfenpyrad
Hydramethylnon
Dicofol
Site-II-Elektronentransportinhibitoren
Rotenone
Site-III-Elektronentransportinhibitoren
Acequinocyl, Fluacrypyrim
Mikrobielle Disruptoren der Insektendarmmembran
Bacillus thuringiensis-Stämme
Inhibitoren der Fettsynthese
Tetronsäuren,
zum Beispiel Spirodiclofen, Spiromesifen,
Tetramsäuren,
zum Beispiel Spirotetramat, cis-3-(2,5-dimethylphenyl)-4-hydroxy-8-methoxy-1-azaspiro[4.5]dec-3-en-2-on
Carboxamide,
zum Beispiel Flonicamid
Oktopaminerge Agonisten,
zum Beispiel Amitraz
Inhibitoren der Magnesium-stimulierten ATPase,
Propargite
Nereistoxin-Analoge,
zum Beispiel Thiocyclam hydrogen oxalate, Thiosultap-sodium
Agonisten des Ryanodin-Rezeptors,
Benzoesäuredicarboxamide,
zum Beispiel Flubendiamide
Anthranilamide,
zum Beispiel Rynaxypyr (3-Bromo-N-{4-chloro-2-methyl-6-[(methylamino)carbonyl]phenyl}-1-(3-chloropyridin-2-yl)-1H-pyrazole-5-carboxamide), Cyazypyr (ISO-proposed) (3-Bromo-N-{4-cyan-2-methyl-6-[(methylamino)carbonyl]phenyl}-1-(3-chlorpyridin-2-yl)-1H-pyrazol-5-carboxamid) (bekannt aus WO 2004067528)
Biologika, Hormone oder Pheromone
Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen,
4-{[(6-Brompyrid-3-yl)methyl](2-fluorethyl)amino}furan-2(5H)-on (bekannt aus WO 2007/115644), 4-{[(6-Fluorpyrid-3-yl)methyl](2,2-difluorethyl)amino}furan-2(5H)-on (bekannt aus WO 2007/115644), 4-{[(2-Chlor-1,3-thiazol-5-yl)methyl](2-fluorethyl)amino}furan-2(5H)-on (bekannt aus WO 2007/115644), 4-{[(6-Chlorpyrid-3-yl)methyl](2-fluorethyl)amino}furan-2(5H)-on (bekannt aus WO 2007/115644), 4-{[(6-Chlorpyrid-3-yl)methyl](2,2-difluorethyl)amino}furan-2(5H)-on (bekannt aus WO 2007/115644), 4-{[(6-Chlor-5-fluorpyrid-3-yl)methyl](methyl)amino}furan-2(5H)-on (bekannt aus WO 2007/115643), 4-{[(5,6-Dichlorpyrid-3-yl)methyl](2-fluorethyl)amino}furan-2(5H)-on (bekannt aus WO 2007/115646), 4-{[(6-Chlor-5-fluorpyrid-3-yl)methyl](cyclopropyl)amino}furan-2(5H)-on (bekannt aus WO 2007/115643), 4-{[(6-Chlorpyrid-3-yl)methyl](cyclopropyl)amino}furan-2(5H)-on (bekannt aus EP-A-0 539 588) und 4-{[(6-Chlorpyrid-3-yl)methyl](methyl)amino}furan-2(5H)-on (bekannt aus EP-A-0 539 588).
Begasungsmittel,
   zum Beispiel Aluminium phosphide, Methyl bromide, Sulfuryl fluoride
Fraßhemmer,
   zum Beispiel Cryolite, Flonicamid, Pymetrozine
Milbenwachstumsinhibitoren,
   zum Beispiel Clofentezine, Etoxazole, Hexythiazox
Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin oder Cyflumetofen, Cyanopyrafen.
Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Der Wirkstoffgehalt der aus den handelsüblichen Formulierungen bereiteten Anwendungsformen kann von 0,00000001 bis zu 95 Gew.-%, vorzugsweise zwischen 0,00001 und 1 Gew.-% Wirkstoff liegen.

**Tabelle 1: Pflanze: Mais**

| Betroffene Struktur bzw. Exprimiertes Prinzip | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäure, Cyclohexandion |
| Hydroxyphenylpyruvat-Dioxygenase (HPPD) | Isooxazole wie Isoxaflutol oder Isoxachlortol, Trione wie Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP- Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosatoxidoreductase | Glyphosat oder Sulfosat |
| Protoporphyrinogenoxidase (PROTOX) | Diphenylether, cyclische Imide, Phenylpyrazole, Pyridinderivate, Phenopylate, Oxadiazole usw. |
| Cytochrom P450 z.B. P450 SU1 | Xenobiotika und Herbizide wie Sulfonylharnstoff |
| Dimboa-Biosynthese (Bx1-Gen) | Helminthosporium turcicum, Rhopalosiphum maydis, Diplodia maydis, Ostrinia nubilalis, lepidoptera sp. |
| CMIII (kleiner grundlegender Peptidbaustein aus dem Maiskorn) | Pflanzenpathogene z.B. Fusarium, Alternaria, Sclerotina |
| Com- SAFP (Zeamatin) | Pflanzenpathogene, z.B. Fusarium, Alternaria, Sclerotina, Rhizoctonia, Chaetomium, Phycomycen |
| Hm1-Gen | Cochliobulus |
| Chitinasen | Pflanzenpathogene |
| Glucanasen | Pflanzenpathogene |
| Hüllproteine | Viren wie das Maisverzwergungsvirus (MDMV) |
| Toxine von Bacillus thuringiensis, VIP 3, Bacillus-cereus-Toxin, Photorabdus und Toxine von Xenorhabdus | Lepidoptera, Coleoptera, Diptera, Nematoden, z.B. Ostrinia nubilalis, Heliothis zea, Heerwürmer z.B. |
| | Spodoptera frugiperda, Maiswurzelbohrer, Sesamia sp., Aprotis ipsilon, Asiatischer Maiszünsler, Rüsselkäfer |
| 3-Hydroxysteroidoxidase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Peroxidase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Aminopeptidase-Inhibitoren z.B. Leucin Aminopeptidase-Inhibitoren (LAPI) | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Limonensynthase Lektin | Maiswurzelbohrer Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Maiszünsler, Rüsselkäfer |
| Protease-Inhibitoren z.B. Cystatin, Patatin, Virgiferin, CPTI | Rüsselkäfer, Maiswurzelbohrer |
| Ribosomeninaktivierendes Protein | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |
| 5C9-Maispolypeptid | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |
| HMG-CoA-Reductase | Lepidoptera, Coleoptera, Diptera, Nematoden, z.B. Ostrinia nubilalis, Heliothis zea, Heerwürmer z.B. Spodoptera frugiperda, Maiswurzelbohrer, Sesamia sp., Aprotis ipsilon, Asiatischer Mais zünsler, Rüsselkäfer |

### Pflanze: Weizen

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone Triazolpyrimidine, Pyrimidyloxybenzoate, Phthalide |
| Acetyl-CoA-Carboxylase (ACCase) | Aryloxyphenoxyalkancarbonsäuren, Cyclohexandione |
| Hydroxyphenylpyruvat-Dioxygenase (HPPD) | Isoxazole wie etwa Isoxaflutol oder Isoxachlortol, Trione wie etwa Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, Phenylpyrazole, |
| | Pyridinderivate, Phenopylat, Oxadiazole usw. |
| Cytochrom P450 z.B. P450 SU1 | Xenobiotika und Herbizide wie etwa |
| | Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria und andere Krankheiten |
| Polypeptid mit der Wirkung, eine Über- | Pflanzenpathogene, z.B. Fusarium, Septoria und |
| empfindlichkeitsreaktion auszulösen | andere Krankheiten |
| Gene der systemischen erworbenen | Virale, bakterielle Pilz- und Nematoden- |
| Widerstandskraft (SAR) | Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, | Lepidoptera, Coleoptera, Diptera, |
| Bacillus-cereus-Toxine, Photorabdus und | Nematoden |
| Toxine von Xenorhabdus | |
| 3-Hydroxysteroidoxidase | Lepidoptera, Coleoptera, Diptera, |
| | Nematoden |
| Peroxidase | Lepidoptera, Coleoptera, Diptera, |
| Aminopeptidase-Inhibitoren, z.B. Leucin | Nematoden Lepidoptera, Coleoptera, Diptera, |
| Aminopeptidase-Inhibitor | Nematoden |
| Lektine | Lepidoptera, Coleoptera, Diptera, |
| | Nematoden, Blattläuse |
| Protease-Inhibitoren, z.B. Cystatin, Patatin, | Lepidoptera, Coleoptera, Diptera, |
| Virgiferin, CPTI | Nematoden, Blattläuse |
| Ribosomeninaktivierendes Protein | Lepidoptera, Coleoptera, Diptera, |
| | Nematoden, Blattläuse |
| HMG-CoA-Reductase | Lepidoptera, Coleoptera, Diptera, |
| | Nematoden, z.B. Ostrinia nubilalis, |
| | Heliothis zea, Heerwürmer z.B. Spodoptera |
| | frugiperda, Maiswurzelbohrer, Sesamia sp., |
| | Aprotis ipsilon, Asiatischer Maiszünsler, |
| | Rüsselkäfer |

### Pflanze: Gerste

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa Mesotrion |
| | oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| Cytochrom P450 z.B. P450 SU1 | Phenopylat, Oxadiazole usw. |
| | Xenobiotika und Herbizide wie etwa |
| | Sulfonylharnstoffverbindungen |
| Pilzbekämpfendes Polypeptid AlyAFP | Pflanzenpathogene, z.B. Septoria und Fusarium |
| Glucoseoxidase | Pflanzenpathogene, z.B. Fusarium, Septoria |
| Pyrrolnitrinsynthese-Gene | Pflanzenpathogene, z.B. Fusarium, Septoria |
| Serin/Threonin-Kinasen | Pflanzenpathogene, z.B. Fusarium, Septoria |
| | und andere Krankheiten |
| Polypeptid mit der Wirkung, eine | Pflanzenpathogene, z.B. Fusarium, Septoria und |
| Überempfindlichkeitsreaktion auszulösen | andere Krankheiten |
| Gene der systemischen erworbenen | Virale, bakterielle Pilz- und Nematoden- |
| Widerstandskraft (SAR) | Pathogene |
| Chitinasen | Pflanzenpathogene |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, | Lepidoptera, Coleoptera, Diptera, |
| Bacillus-cereus-Toxine, Photorabdus und | Nematoden |
| Toxine von Xenorhabdus | |
| 3-Hydroxysteroidoxidase | Lepidoptera, Coleoptera, Diptera, |
| | Nematoden |
| Peroxidase | Lepidoptera, Coleoptera, Diptera, |
| | Nematoden |
| Aminopeptidase-Inhibitoren, z.B. Leucin | Lepidoptera, Coleoptera, Diptera, |
| Aminopeptidase-Inhibitor | Nematoden |
| Lektine | Lepidoptera, Coleoptera, Diptera, |
| | Nematoden, Blattläuse |
| Protease-Inhibitoren, z.B. Cystatin, Patatin, | Lepidoptera, Coleoptera, Diptera, |
| Virgiferin, CPTI | Nematoden, Blattläuse |
| Ribosomeninaktivierendes Protein | Lepidoptera, Coleoptera, Diptera, |
| | Nematoden, Blattläuse |
| HMG-CoA-Reductase | Lepidoptera, Coleoptera, Diptera, |
| | Nematoden, Blattläuse |

### Pflanze: Reis

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des -abbaus |
| Nitrilase | 3,5-Dihalogen-4-hydroxy-benzonitrile wie |
| | Bromoxynil und Loxinyl |
| 5-Enolpyruvyl-3-phosphoshikimat | Glyphosat oder Sulfosat |
| Synthase (EPSPS) Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 | Xenobiotika und Herbizide wie etwa |
| | Sulfonylharnstoffverbindungen |
| Pilzbekämpfendes Polypeptid AlyAFP | Pflanzenpathogene |
| Glucoseoxidase | Pflanzenpathogene |
| Pyrrolnitrinsynthese-Gene | Pflanzenpathogene |
| Serin/Threonin-Kinasen | Pflanzenpathogene |
| Phenylalanin-Ammoniak-Lyase (PAL) | Pflanzenpathogene, z.B. bakterieller Blattmehltau und induzierbare Reisbräune |
| Phytoalexine | Pflanzenpathogene, z.B. bakterieller |
| | Blattmehltau und Reisbräune |
| B-1,3-Glucanase (Antisense) | Pflanzenpathogene, z.B. bakterieller |
| | Blattmehltau und Reisbräune |
| Rezeptorkinase | Pflanzenpathogene, z.B. bakterieller |
| | Blattmehltau und Reisbräune |
| Polypeptid mit der Wirkung, eine | Pflanzenpathogene |
| Überempfindlichkeitsreaktion auszulösen | |
| Gene der systemischen erworbenen | Virale, bakterielle Pilz- und Nematoden- |
| Widerstandskraft (SAR) | Pathogene |
| Chitinasen | Pflanzenpathogene, z.B. bakterieller Blattmehltau und Reisbräune |
| Glucanasen | Pflanzenpathogene |
| Doppelstrang-Ribonuclease | Viren wie etwa BYDV und MSMV |
| Hüllproteine | Viren wie etwa BYDV und MSMV |
| Toxine von Bacillus thuringiensis, VIP 3, | Lepidoptera, z.B. Stengelbohrer, Coleoptera, |
| Bacillus-cereus-Toxine, Photorabdus und | z.B. Rüsselkäfer wie Lissorhoptrus oryzophilus, |
| Toxine von Xenorhabdus | Diptera, Reiszikaden, z.B. braunrückige |
| | Reiszikade |
| 3-Hydroxysteroidoxidase | Lepidoptera, z.B. Stengelbohrer, Coleoptera, |
| | z.B. Rüsselkäfer wie Lissorhoptrus oryzophilus, |
| | Diptera, Reiszikaden, z.B. braunrückige |
| | Reiszikade |
| Peroxidase | Lepidoptera, z.B. Stengelbohrer, Coleoptera, |
| | z.B. Rüsselkäfer wie Lissorhoptrus oryzophilus, |
| | Diptera, Reiszikaden, z.B. braunrückige |
| | Reiszikade |
| Aminopeptidase-Inhibitoren, z.B. Leucin | Lepidoptera, z.B. Stengelbohrer, Coleoptera, |
| Aminopeptidase-Inhibitor | z.B. Rüsselkäfer wie Lissorhoptrus |
| | oryzophilus, Diptera, Reiszikaden, z.B. |
| | braunrückige Reiszikade |
| Lektine | Lepidoptera, z.B. Stengelbohrer, Coleoptera, |
| | z.B. Rüsselkäfer wie Lissorhoptrus |
| | oryzophilus, Diptera, Reiszikaden, z.B. |
| | braunrückige Reiszikade |
| Protease-Inhibitoren, | Lepidoptera, z.B. Stengelbohrer, Coleoptera, |
| | z.B. Rüsselkäfer wie Lissorhoptrus oryzophilus, |
| | Diptera, Reiszikaden z.B. braunrückige |
| | Reiszikade |
| Ribosomeninaktivierendes Protein | Lepidoptera, z.B. Stengelbohrer, Coleoptera, |
| | z.B. Rüsselkäfer wie Lissorhoptrus |
| | oryzophilus, Diptera, Reiszikaden, z.B. |
| | braunrückige Reiszikade |
| HMG-CoA-Reductase | Lepidoptera, z.B. Stengelbohrer, Coleoptera, |
| | z.B. Rüsselkäfer wie Lissorhoptrus |
| | oryzophilus, Diptera, Reiszikaden z.B. |
| | braunrückige Reiszikade |

### Pflanze: Sojabohne

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Pilzbekämpfendes Polypeptid AlyAFP | Bakterielle und Pilz-Pathogene wie etwa Fusarium, Sklerotinia, Weißstängeligkeit |
| Oxalatoxidase | Bakterielle und Pilz-Pathogene wie etwa |
| | Fusarium, Sklerotinia, Weißstängeligkeit |
| Glucoseoxidase | Bakterielle und Pilz-Pathogene wie etwa |
| | Fusarium, Sklerotinia, Weißstängeligkeit |
| Pyrrolnitrinsynthese-Gene | Bakterielle und Pilz-Pathogene wie etwa |
| Serin/Threonin-Kinasen | Fusarium, Sklerotinia, Weißstängeligkeit |
| | Bakterielle und Pilz-Pathogene wie etwa |
| | Fusarium, Sklerotinia, Weißstängeligkeit |
| Phenylalanin-Ammoniak-Lyase (PAL) | Bakterielle und Pilz-Pathogene wie etwa |
| | Fusarium, Sklerotinia, Weißstängeligkeit |
| Phytoalexine | Pflanzenpathogene, z.B. bakterieller Blatt- |
| | mehltau und Reisbräune |
| B-1,3-glucanase (Antisense) | Pflanzenpathogene, z.B. bakterieller Blatt- |
| | mehltau und Reisbräune |
| Rezeptorkinase | Bakterielle und Pilz-Pathogene wie etwa |
| | Fusarium, Sklerotinia, Weißstängeligkeit |
| Polypeptid mit der Wirkung, eine Über- | Pflanzenpathogene |
| Empfindlichkeitsreaktion auszulösen | |
| Gene der systemischen erworbenen | Virale, bakterielle Pilz- und Nematoden- |
| Widerstandskraft (SAR) | Pathogene |
| Chitinasen | Bakterielle und Pilz-Pathogene wie etwa |
| | Fusarium, Sklerotinia, Weißstängeligkeit |
| Glucanasen | Bakterielle und Pilz-Pathogene wie etwa |
| | Fusarium, Sklerotinia, Weißstängeligkeit |
| Doppelstrang-Ribonuclease | Viren wie etwa BPMV und SbMV |
| Hüllproteine | Viren wie etwa BYDV und MSMV |
| Toxine von Bacillus thuringiensis, VIP 3, | Lepidoptera, Coleoptera, Blattläuse |
| Bacillus-cereus-Toxine, Photorabdus und | |
| Toxine von Xenorhabdus | |
| 3-Hydroxysteroidoxidase | Lepidoptera, Coleoptera, Blattläuse |
| Peroxidase | Lepidoptera, Coleoptera, Blattläuse |
| Aminopeptidase-Inhibitoren, z.B. Leucin | Lepidoptera, Coleoptera, Blattläuse |
| Aminopeptidase-Inhibitor | |
| Lektine | Lepidoptera, Coleoptera, Blattläuse |
| Protease-Inhibitoren, z.B. Virgiferin | Lepidoptera, Coleoptera, Blattläuse |
| Ribosomeninaktivierendes Protein | Lepidoptera, Coleoptera, Blattläuse |
| HMG-CoA-Reductase | Lepidoptera, Coleoptera, Blattläuse |
| Barnase | Nematoden, z.B. Wurzelknotennematoden und |
| | Zystennematoden |
| Schlüpfauslösefaktor für Zystennematoden | Zystennematoden |
| Prinzipien zur Verhinderung der Nahrungs- | Nematoden, z.B. Wurzelknoten-Nematoden und |
| aufnahme | Zystennematoden |

### Pflanze: Kartoffel

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie Bromoxynil und Loxinyl |
| 5-Enolpyruvyl-3-phosphoshikimat-Synthase (EPSPS) | Glyphosat oder Sulfosat |
| Glyphosat-Oxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Schwarzfleckigkeit |
| (Antisense) | |
| Metallothionein | Bakterielle und Pilz-Pathogene wie etwa |
| | Phytophtora |
| Ribonuclease | Phytophtora, Verticillium, Rhizoctonia |
| Pilzbekämpfendes Polypeptid AlyAFP | Bakterielle und Pilz-Pathogene wie etwa |
| | Phytophtora |
| Oxalatoxidase | Bakterielle und Pilz-Pathogene wie etwa |
| | Phytophtora, Verticillium, Rhizoctonia |
| Glucoseoxidase | Bakterielle und Pilz-Pathogene wie etwa |
| | Phytophtora, Verticillium, Rhizoctonia |
| Pyrrolnitrinsynthese-Gene | Bakterielle und Pilz-Pathogene wie etwa |
| | Phytophtora, Verticillium, Rhizoctonia |
| Serin/Threonin-Kinasen | Bakterielle und Pilz-Pathogene wie etwa Phytophtora, Verticillium, Rhizoctonia |
| Cecropin B | Bakterien wie etwa Corynebacterium |
| | sepedonicum, Erwinia carotovora |
| Phenylalanin-Ammoniak-Lyase (PAL) | Bakterielle und Pilz-Pathogene wie etwa |
| | Phytophtora, Verticillium, Rhizoctonia |
| Phytoalexine | Bakterielle und Pilz-Pathogene wie etwa |
| | Phytophtora, Verticillium, Rhizoctonia |
| B-1,3-glucanase (Antisense) | Bakterielle und Pilz-Pathogene wie etwa |
| | Phytophtora, Verticillium, Rhizoctonia |
| Rezeptorkinase | Bakterielle und Pilz-Pathogene wie etwa |
| | Phytophtora, Verticillium, Rhizoctonia |
| Polypeptid mit der Wirkung, eine Über- | Bakterielle und Pilz-Pathogene wie etwa |
| empfindlichkeitsreaktion auszulösen | Phytophtora, Verticillium, Rhizoctonia |
| Gene der systemischen erworbenen | Virale, bakterielle Pilz- und Nematoden- |
| Widerstandskraft (SAR) | Pathogene |
| Chitinasen | Bakterielle und Pilz-Pathogene wie etwa |
| | Phytophtora, Verticillium, Rhizoctonia |
| Barnase | Bakterielle und Pilz- Pathogene wie etwa |
| | Phytophtora, Verticillium, Rhizoctonia |
| Gen 49 zur Steuerung des Widerstandes gegen | Bakterielle und Pilz-Pathogene wie etwa |
| Krankheiten | Phytophtora, Verticillium, Rhizoctonia |
| Trans-Aldolase (Antisense) | Schwarzfleckigkeit |
| Glucanasen | Bakterielle und Pilz-Pathogene wie etwa |
| | Phytophtora, Verticillium, Rhizoctonia |
| Doppelstrang-Ribonuclease | Viren wie etwa PLRV, PVY und TRV |
| Hüllproteine | Viren wie etwa PLRV, PVY und TRV |
| 17kDa oder 60 kDa Protein | Viren wie etwa PLRV, PVY und TRV |
| Einschlussproteine des Kerns z.B. a oder b | Viren wie etwa PLRV, PVY und TRV |
| Pseudoubiquitin | Viren wie etwa PLRV, PVY und TRV |
| Replicase | Viren wie etwa PLRV, PVY und TRV |
| Toxine von Bacillus thuringiensis, VIP 3, | Coleoptera, z.B. Kartoffelkäfer, Blattläuse |
| Bacillus-cereus-Toxine, Photorabdus und | |
| Toxine von Xenorhabdus | |
| 3-Hydroxysteroidoxidase | Coleoptera, z.B. Kartoffelkäfer, Blattläuse |
| Peroxidase | Coleoptera, z.B. Kartoffelkäfer, Blattläuse |
| Aminopeptidase-Inhibitoren, z.B. Leucin | Coleoptera, z.B. Kartoffelkäfer, Blattläuse |
| Aminopeptidase-Inhibitor | |
| Stilbensynthase | Coleoptera, z.B. Kartoffelkäfer, Blattläuse |
| Lektine | Coleoptera, z.B. Kartoffelkäfer, Blattläuse |
| Protease-Inhibitoren, z.B. Cystatin, Patatin | Coleoptera, z.B. Kartoffelkäfer, Blattläuse |
| Ribosomeninaktivierendes Protein | Coleoptera, z.B. Kartoffelkäfer, Blattläuse |
| HMG-CoA-Reductase | Coleoptera, z.B. Kartoffelkäfer, Blattläuse |
| Schlüpfauslösefaktor für Zystennematoden | Zystennematoden |
| Barnase | Nematoden, z.B. Wurzelknoten-Nematoden und |
| | Zystennematoden |
| Prinzipien zur Verhinderung der Nahrungs- | Nematoden, z.B. Wurzelknoten-Nematoden und |
| aufnahme | Zystennematoden |

### Pflanze: Tomate

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Schwarzfleckigkeit |
| (Antisense) | |
| Metallothionein | Bakterielle und Pilz-Pathogene wie etwa |
| | Phytophtora |
| Ribonuclease | Phytophtora, Verticillium, Rhizoctonia |
| Pilzbekämpfendes Polypeptid AlyAFP | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Oxalatoxidase | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Glucoseoxidase | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Pyrrolnitrinsynthese-Gene | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Serin/Threonin-Kinasen | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Cecropin B | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Phenylalanin-Ammoniak-Lyase (PAL) | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Cf-Gene, z.B. Cf 9 Cf5 Cf4 Cf2 | Samtfleckenkrankheit |
| Osmotin | Dürrfleckenkrankheit |
| Alpha Hordothionin | Bakterien |
| Systemin | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Polygalacturonase-Inhibitoren | Bakterielle und Pilz-Pathogene wie etwa die |
| | bakterielle Fleckenkrankheit, Fusarium, |
| | Weichfäule, echter Mehltau, Krautfäule, |
| | Samtfleckenkrankheit etc. |
| Prf-Steuerungsgen | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| 12 Fusariumresistenz-Stelle | Fusarium |
| Phytoalexine | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| B-1,3-glucanase (Antisense) | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Rezeptorkinase | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Polypeptid mit der Wirkung, eine Über- | Bakterielle und Pilz-Pathogene wie etwa |
| empfindlichkeitsreaktion auszulösen | die bakterielle Fleckenkrankheit, Fusarium, |
| | Weichfäule, echter Mehltau, Krautfäule, |
| | Samtfleckenkrankheit etc. |
| Gene der systemischen erworbenen | Virale, bakterielle Pilz- und Nematoden- |
| Widerstandskraft (SAR) | Pathogene |
| Chitinasen | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Barnase | Bakterielle und Pilz-Pathogene wie etwa |
| | die bakterielle Fleckenkrankheit, Fusarium, |
| | Weichfäule, echter Mehltau, Krautfäule, |
| | Samtfleckenkrankheit etc. |
| Glucanasen | Bakterielle und Pilz-Pathogene wie etwa die |
| | bakterielle Fleckenkrankheit, Fusarium, |
| | Weichfäule, echter Mehltau, Krautfäule, |
| | Samtfleckenkrankheit etc. |
| Doppelstrang-Ribonuclease | Viren wie etwa PLRV, PVY und ToMoV |
| Hüllproteine | Viren wie etwa PLRV, PVY und ToMoV |
| 17kDa oder 60 kDa Protein | Viren wie etwa PLRV, PVY und ToMoV |
| Einschlussproteine des Kerns z.B. a oder b oder | Viren wie etwa PLRV, PVY und ToMoV |
| Nucleoprotein | TRV |
| Pseudoubiquitin | Viren wie etwa PLRV, PVY und ToMoV |
| Replicase | Viren wie etwa PLRV, PVY und ToMoV |
| Toxine von Bacillus thuringiensis, VIP 3, | Lepidoptera z.B. Heliothis, weiße Fliege |
| Bacillus-cereus-Toxine, Photorabdus und | Blattläuse |
| Toxine von Xenorhabdus | |
| 3-Hydroxysteroidoxidase | Lepidoptera z.B. Heliothis, weiße Fliege, |
| | Blattläuse |
| Peroxidase | Lepidoptera z.B. Heliothis, weiße Fliege, |
| | Blattläuse |
| Aminopeptidase-Inhibitoren, z.B. Leucin | Lepidoptera z.B. Heliothis, weiße Fliege, |
| Aminopeptidase-Inhibitor | Blattläuse |
| Lektine | Lepidoptera z.B. Heliothis, weiße Fliege, |
| | Blattläuse |
| Protease-Inhibitoren, z.B. Cystatin, Patatin | Lepidoptera z.B. Heliothis, weiße Fliege, |
| | Blattläuse |
| Ribosomeninaktivierendes Protein | Lepidoptera z.B. Heliothis, weiße Fliege, |
| | Blattläuse |
| Stilbensynthase | Lepidoptera z.B. Heliothis, weiße Fliege, |
| | Blattläuse |
| HMG-CoA-Reductase | Lepidoptera z.B. Heliothis, weiße Fliege, |
| | Blattläuse |
| Schlüpfauslösefaktor für Zystennematoden | Zystennematoden |
| Barnase | Nematoden, z.B. Wurzelknoten-Nematoden und |
| | Zystennematoden |
| Prinzipien zur Verhinderung der | Nematoden, z.B. Wurzelknoten-Nematoden und |
| Nahrungsaufnahme | Zystennematoden |
| | |
| | |

### Pflanze: Paprika

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle und Pilz-Pathogene |
| (Antisense) | |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene, Fäule, |
| | Samtfleckenkrankheit, etc |
| Phenylalanin-Ammoniak-Lyase (PAL) | Bakterielle und Pilz-Pathogene |
| Cf-Gene, z.B. Cf 9 Ct5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| 12 Fusariumresistenz-Stelle | Fusarium |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Über- | Bakterielle und Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren wie etwa CMV, TEV |
| Hüllproteine | Viren wie etwa CMV, TEV |
| 17kDa oder 60 kDa Protein | Viren wie etwa CMV, TEV |
| Einschlussproteine des Kerns z.B. a oder b oder | Viren wie etwa CMV, TEV |
| Nucleoprotein | |
| Pseudoubiquitin | Viren wie etwa CMV, TEV |
| Replicase | Viren wie etwa CMV, TEV |
| Toxine von Bacillus thuringiensis, VIP 3, | Lepidoptera, weiße Fliege, Blattläuse |
| Bacillus-cereus-Toxine, Photorabdus und | |
| Toxine von Xenorhabdus | |
| 3-Hydroxysteroidoxidase | Lepidoptera, weiße Fliege, Blattläuse |
| Peroxidase | Lepidoptera, weiße Fliege, Blattläuse |
| Aminopeptidase-Inhibitoren, z.B. Leucin | Lepidoptera, weiße Fliege, Blattläuse |
| Aminopeptidase-Inhibitor | |
| Lektine | Lepidoptera, weiße Fliege, Blattläuse |
| Protease-Inhibitoren, z.B. Cystatin, Patatin | Lepidoptera, weiße Fliege, Blattläuse |
| Ribosomeninaktivierendes Protein | Lepidoptera, weiße Fliege, Blattläuse |
| Stilbensynthase | Lepidoptera, weiße Fliege, Blattläuse |
| HMG-CoA-Reductase | Lepidoptera, weiße Fliege, Blattläuse |
| Schlüpfauslösefaktor für Zystennematoden | Zystennematoden |
| Barnase | Nematoden, z.B. Wurzelknoten-Nematoden und |
| | Zystennematoden |
| Prinzipien zur Verhinderung der Nahrungs- | Nematoden, z.B. Wurzelknoten-Nematoden und |
| aufnahme | Zystennematoden |

### Pflanze: Wein

| Betroffene Struktur/ Exprimiertes Prinzip | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle und Pilz-Pathogene wie |
| (Antisense) | Botrytis und echter Mehltau |
| Metallothionein | Bakterielle und Pilz-Pathogene wie |
| | Botrytis und echter Mehltau |
| Ribonuclease | Bakterielle und Pilz-Pathogene wie |
| | Botrytis und echter Mehltau |
| Pilzbekämpfendes Polypeptid AlyAFP | Bakterielle und Pilz-Pathogene wie |
| | Botrytis und echter Mehltau |
| Oxalatoxidase | Bakterielle und Pilz-Pathogene wie |
| | Botrytis und echter Mehltau |
| Glucoseoxidase | Bakterielle und Pilz-Pathogene wie |
| | Botrytis und echter Mehltau |
| Pyrrolnitrinsynthese-Gene | Bakterielle und Pilz-Pathogene wie |
| | Botrytis und echter Mehltau |
| Serin/Threonin-Kinasen | Bakterielle und Pilz-Pathogene wie |
| | Botrytis und echter Mehltau |
| Cecropin B | Bakterielle und Pilz-Pathogene wie |
| | Botrytis und echter Mehltau |
| Phenylalanin-Ammoniak-Lyase (PAL) | Bakterielle und Pilz-Pathogene wie |
| | Botrytis und echter Mehltau |
| Cf-Gene, z.B. Cf 9 Cf5 Cf4 Cf2 | Bakterielle und Pilz-Pathogene wie |
| | Botrytis und echter Mehltau |
| Osmotin | Bakterielle und Pilz-Pathogene wie |
| | Botrytis und echter Mehltau |
| Alpha Hordothionin | Bakterielle und Pilz-Pathogene wie |
| | Botrytis und echter Mehltau |
| Systemin | Bakterielle und Pilz-Pathogene wie |
| | Botrytis und echter Mehltau |
| Polygalacturonase-Inhibitoren | Bakterielle und Pilz-Pathogene wie |
| | Botrytis und echter Mehltau |
| Prf-Steuerungsgen | Bakterielle und Pilz-Pathogene wie |
| | Botrytis und echter Mehltau |
| Phytoalexine | Bakterielle und Pilz-Pathogene wie |
| | Botrytis und echter Mehltau |
| B-1,3-glucanase (Antisense) | Bakterielle und Pilz-Pathogene wie |
| | Botrytis und echter Mehltau |
| Rezeptorkinase | Bakterielle und Pilz-Pathogene wie |
| | Botrytis und echter Mehltau |
| Polypeptid mit der Wirkung, eine Über- | Bakterielle und Pilz-Pathogene wie Botrytis und |
| empfindlichkeitsreaktion auszulösen | echter Mehltau |
| Gene der systemischen erworbenen | Virale, bakterielle Pilz- und Nematoden- |
| Widerstandskraft (SAR) | Pathogene |
| Chitinasen | Bakterielle und Pilz-Pathogene wie |
| | Botrytis und echter Mehltau |
| Barnase | Bakterielle und Pilz-Pathogene wie |
| | Botrytis und echter Mehltau |
| Glucanasen | Bakterielle und Pilz-Pathogene wie Botrytis |
| | und echter Mehltau |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse |
| Bacillus-cereus-Toxine, Photorabdus und | |
| Toxine von Xenorhabdus | |
| 3-Hydroxysteroidoxidase | Lepidoptera, Blattläuse |
| Peroxidase | Lepidoptera, Blattläuse |
| Aminopeptidase-Inhibitoren, z.B. Leucin | Lepidoptera, Blattläuse |
| Aminopeptidase-Inhibitor | |
| Lektine | Lepidoptera, Blattläuse |
| Protease-Inhibitoren, z.B. Cystatin, Patatin | Lepidoptera, Blattläuse |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| | Zystennematoden oder allgemeine Krankheiten |
| CBI | Wurzelknotennematoden |
| Prinzipien zur Verhinderung der Nahrungs- | Nematoden, z.B. Wurzelknoten-Nematoden |
| aufnahme | oder Wurzelzystennematoden |

### Pflanze Ölraps

| | |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol- | Bakterielle und Pilz-Pathogene wie |
| Oxidase (Antisense) | Cylindrosporium, Phoma, Sklerotinia |
| Metallothionein | Bakterielle und Pilz-Pathogene wie |
| | Cylindrosporium, Phoma, Sklerotinia |
| Ribonuclease | Bakterielle und Pilz-Pathogene wie |
| | Cylindrosporium, Phoma, Sklerotinia |
| Pilzbekämpfendes Polypeptid AlyAFP | Bakterielle und Pilz-Pathogene wie |
| | Cylindrosporium, Phoma, Sklerotinia |
| Oxalatoxidase | Bakterielle und Pilz-Pathogene wie |
| | Cylindrosporium, Phoma, Sklerotinia |
| Glucoseoxidase | Bakterielle und Pilz-Pathogene wie |
| | Cylindrosporium, Phoma, Sklerotinia |
| Pyrrolnitrinsynthese-Gene | Bakterielle und Pilz-Pathogene wie |
| | Cylindrosporium, Phoma, Sklerotinia |
| Serin/Threonin-Kinasen | Bakterielle und Pilz-Pathogene wie |
| | Cylindrosporium, Phoma, Sklerotinia |
| Cecropin B | Bakterielle und Pilz-Pathogene wie |
| | Cylindrosporium, Phoma, Sklerotinia |
| Phenylalanin-Ammoniak-Lyase (PAL) | Bakterielle und Pilz-Pathogene wie |
| | Cylindrosporium, Phoma, Sklerotinia |
| Cf-Gene, z.B. Cf 9 Cf5 Cf4 Cf2 | Bakterielle und Pilz-Pathogene wie |
| | Cylindrosporium, Phoma, Sklerotinia |
| Osmotin | Bakterielle und Pilz-Pathogene wie |
| | Cylindrosporium, Phoma, Sklerotinia |
| Alpha Hordothionin | Bakterielle und Pilz-Pathogene wie |
| | Cylindrosporium, Phoma, Sklerotinia |
| Systemin | Bakterielle und Pilz-Pathogene wie |
| | Cylindrosporium, Phoma, Sklerotinia |
| Polygalacturonase-Inhibitoren | Bakterielle und Pilz-Pathogene wie |
| | Cylindrosporium, Phoma, Sklerotinia |
| Prf-Steuerungsgen | Bakterielle und Pilz-Pathogene wie |
| | Cylindrosporium, Phoma, Sklerotinia |
| Phytoalexine | Bakterielle und Pilz-Pathogene wie |
| | Cylindrosporium, Phoma, Sklerotinia |
| B-1,3-glucanase (Antisense) | Bakterielle und Pilz-Pathogene wie |
| | Cylindrosporium, Phoma, Sklerotinia |
| Rezeptorkinase | Bakterielle und Pilz-Pathogene wie |
| | Cylindrosporium, Phoma, Sklerotinia |
| Polypeptid mit der Wirkung, eine Über- | Bakterielle und Pilz-Pathogene wie |
| empfindlichkeitsreaktion auszulösen | Cylindrosporium, Phoma, Sklerotinia |
| Gene der systemischen erworbenen | Virale, bakterielle Pilz- und Nematoden- |
| Widerstandskraft (SAR) | Pathogene |
| Chitinasen | Bakterielle und Pilz-Pathogene wie |
| | Cylindrosporium, Phoma, Sklerotinia |
| Barnase | Bakterielle und Pilz-Pathogene wie |
| | Cylindrosporium, Phoma, Sklerotinia, |
| | Nematoden |
| Glucanasen | Bakterielle und Pilz-Pathogene wie |
| | Cylindrosporium, Phoma, Sklerotinia |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse |
| Bacillus-cereus-Toxine, Photorabdus und | |
| Toxine von Xenorhabdus | |
| 3-Hydroxysteroidoxidase | Lepidoptera, Blattläuse |
| Peroxidase | Lepidoptera, Blattläuse |
| Aminopeptidase-Inhibitoren, z.B. Leucin | Lepidoptera, Blattläuse |
| Aminopeptidase-Inhibitor | |
| Lektine | Lepidoptera, Blattläuse |
| Protease-Inhibitoren, z.B. Cystatin, Patatin, | Lepidoptera, Blattläuse |
| CPTI | |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungsauf- | Nematoden, z.B. Wurzelknoten-Nematoden und |
| nahmen, die an Nematoden-Nährstellen induziert werden | Wurzel- Zystennematoden |

### Pflanze: Brassica-Gemüse (Kohl, Kohlsprossen etc..)

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol- Oxidase | Bakterielle und Pilz-Pathogene |
| (Antisense) | |
| Metallothionein | Bakterielle und Pilz-Pathogene |
| Ribonuclease | Bakterielle und Pilz-Pathogene |
| Pilzbekämpfendes Polypeptid AlyAFP | Bakterielle und Pilz-Pathogene |
| Oxalatoxidase | Bakterielle und Pilz-Pathogene |
| Glucoseoxidase | Bakterielle und Pilz-Pathogene |
| Pyrrolnitrinsynthese-Gene | Bakterielle und Pilz-Pathogene |
| Serin/Threonin-Kinasen | Bakterielle und Pilz-Pathogene |
| Cecropin B | Bakterielle und Pilz-Pathogene |
| Phenylalanin-Ammoniak-Lyase (PAL) | Bakterielle und Pilz-Pathogene |
| Cf-Gene, z.B. Cf 9 Cf5 Cf4 Cf2 | Bakterielle und Pilz-Pathogene |
| Osmotin | Bakterielle und Pilz-Pathogene |
| Alpha Hordothionin | Bakterielle und Pilz-Pathogene |
| Systemin | Bakterielle und Pilz-Pathogene |
| Polygalacturonase-Inhibitoren | Bakterielle und Pilz-Pathogene |
| Prf-Steuerungsgen | Bakterielle und Pilz-Pathogene |
| Phytoalexine | Bakterielle und Pilz-Pathogene |
| B-1,3-glucanase (Antisense) | Bakterielle und Pilz-Pathogene |
| Rezeptorkinase | Bakterielle und Pilz-Pathogene |
| Polypeptid mit der Wirkung, eine Über- | Bakterielle und Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Chitinasen | Bakterielle und Pilz-Pathogene |
| Barnase | Bakterielle und Pilz-Pathogene |
| Glucanasen | Bakterielle und Pilz-Pathogene |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse |
| Bacillus-cereus-Toxine, Photorabdus und | |
| Toxine von Xenorhabdus | |
| 3-Hydroxysteroidoxidase | Lepidoptera, Blattläuse |
| Peroxidase | Lepidoptera, Blattläuse |
| Aminopeptidase-Inhibitoren, z.B. Leucin | Lepidoptera, Blattläuse |
| Aminopeptidase-Inhibitor | |
| Lektine | Lepidoptera, Blattläuse |
| Protease-Inhibitoren, z.B. Cystatin, Patatin, | Lepidoptera, Blattläuse |
| CPTI | |
| Ribosomeninaktivierendes Protein | Lepidoptera, Blattläuse |
| Stilbensynthase | Lepidoptera, Blattläuse, Krankheiten |
| HMG-CoA-Reductase | Lepidoptera, Blattläuse |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | Zystennematoden |

### Pflanzen: Kernobst z.B. Äpfel, Birnen

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle und Pilz-Pathogene wie |
| (Antisense) | Lagerschorf an Äpfeln oder Feuerbrand |
| Metallothionein | Bakterielle und Pilz-Pathogene wie |
| | Lagerschorf an Äpfeln oder Feuerbrand |
| Ribonuclease | Bakterielle und Pilz-Pathogene wie |
| | Lagerschorf an Äpfeln oder Feuerbrand |
| Pilzbekämpfendes Polypeptid AlyAFP | Bakterielle und Pilz-Pathogene wie |
| | Lagerschorf an Äpfeln oder Feuerbrand |
| Oxalatoxidase | Bakterielle und Pilz-Pathogene wie |
| | Lagerschorf an Äpfeln oder Feuerbrand |
| Glucoseoxidase | Bakterielle und Pilz-Pathogene wie |
| | Lagerschorf an Äpfeln oder Feuerbrand |
| Pyrrolnitrinsynthese-Gene | Bakterielle und Pilz-Pathogene wie |
| | Lagerschorf an Äpfeln oder Feuerbrand |
| Serin/Threonin-Kinasen | Bakterielle und Pilz-Pathogene wie |
| | Lagerschorf an Äpfeln oder Feuerbrand |
| Cecropin B | Bakterielle und Pilz-Pathogene wie |
| | Lagerschorf an Äpfeln oder Feuerbrand |
| Phenylalanin-Ammoniak-Lyase (PAL) | Bakterielle und Pilz-Pathogene wie |
| | Lagerschorf an Äpfeln oder Feuerbrand |
| Cf-Gene, z.B. Cf 9 Cf5 Cf4 Cf2 | Bakterielle und Pilz-Pathogene wie |
| | Lagerschorf an Äpfeln oder Feuerbrand |
| Osmotin | Bakterielle und Pilz-Pathogene wie |
| | Lagerschorf an Äpfeln oder Feuerbrand |
| Alpha Hordothionin | Bakterielle und Pilz-Pathogene wie |
| | Lagerschorf an Äpfeln oder Feuerbrand |
| Systemin | Bakterielle und Pilz-Pathogene wie |
| | Lagerschorf an Äpfeln oder Feuerbrand |
| Polygalacturonase-Inhibitoren | Bakterielle und Pilz-Pathogene wie |
| | Lagerschorf an Äpfeln oder Feuerbrand |
| Prf-Steuerungsgen | Bakterielle und Pilz-Pathogene wie |
| | Lagerschorf an Äpfeln oder Feuerbrand |
| Phytoalexine | Bakterielle und Pilz-Pathogene wie |
| | Lagerschorf an Äpfeln oder Feuerbrand |
| B-1,3-glucanase (Antisense) | Bakterielle und Pilz-Pathogene wie |
| | Lagerschorf an Äpfeln oder Feuerbrand |
| Rezeptorkinase | Bakterielle und Pilz-Pathogene wie |
| | Lagerschorf an Äpfeln oder Feuerbrand |
| Polypeptid mit der Wirkung, eine Über- | Bakterielle und Pilz-Pathogene wie Lager- |
| empfindlichkeitsreaktion auszulösen | schorf an Äpfeln oder Feuerbrand |
| Gene der systemischen erworbenen | Virale, bakterielle Pilz- und Nematoden- |
| Widerstandskraft (SAR) | Pathogene |
| lytisch wirkendes Protein | Bakterielle und Pilz-Pathogene wie |
| | Lagerschorf an Äpfeln oder Feuerbrand |
| Lysozym | Bakterielle und Pilz-Pathogene wie |
| | Lagerschorf an Äpfeln oder Feuerbrand |
| Chitinasen | Bakterielle und Pilz-Pathogene wie |
| | Lagerschorf an Äpfeln oder Feuerbrand |
| Barnase | Bakterielle und Pilz-Pathogene wie |
| | Lagerschorf an Äpfeln oder Feuerbrand |
| Glucanasen | Bakterielle und Pilz-Pathogene wie |
| | Lagerschorf an Äpfeln oder Feuerbrand |
| Doppelstrang-Ribonuclease | Viren |
| Hüllproteine | Viren |
| 17kDa oder 60 kDa Protein | Viren |
| Einschlussproteine des Kerns z.B. a oder b oder | Viren |
| Nucleoprotein | |
| Pseudoubiquitin | Viren |
| Replicase | Viren |
| Toxine von Bacillus thuringiensis, VIP 3, | Lepidoptera, Blattläuse, Milben |
| Bacillus-cereus-Toxine, Photorabdus und | |
| Toxine von Xenorhabdus | |
| 3-Hydroxysteroidoxidase | Lepidoptera, Blattläuse, Milben |
| Peroxidase | Lepidoptera, Blattläuse, Milben |
| Aminopeptidase-Inhibitoren, z.B. Leucin | Lepidoptera, Blattläuse, Milben |
| Aminopeptidase-Inhibitor | |
| Lektine | Lepidoptera, Blattläuse, Milben |
| Protease-Inhibitoren, z.B. Cystatin, Patatin, | Lepidoptera, Blattläuse, Milben |
| CPTI | |
| Ribosomeninaktivierendes Protein | Lepidoptera, Blattläuse, Milben |
| Stilbensynthase | Lepidoptera, Blattläuse, Krankheiten, Milben |
| HMG-CoA-Reductase | Lepidoptera, Blattläuse, Milben |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |

### Pflanze: Melone

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene wie |
| (Antisense) | Phytophtora |
| Metallothionein | Bakterielle oder Pilz-Pathogene wie |
| | Phytophtora |
| Ribonuclease | Bakterielle oder Pilz-Pathogene wie |
| | Phytophtora |
| Pilzbekämpfendes Polypeptid AlyAFP | Bakterielle oder Pilz-Pathogene wie |
| | Phytophtora |
| Oxalatoxidase | Bakterielle oder Pilz-Pathogene wie |
| | Phytophtora |
| Glucoseoxidase | Bakterielle oder Pilz-Pathogene wie |
| | Phytophtora |
| Pyrrolnitrinsynthesegene | Bakterielle oder Pilz-Pathogene wie |
| | Phytophtora |
| Serin/Threonin-Kinasen | Bakterielle oder Pilz-Pathogene wie |
| | Phytophtora |
| Cecropin B | Bakterielle oder Pilz-Pathogene wie |
| | Phytophtora |
| Phenylalanin-Ammoniak-Lyase (PAL) | Bakterielle oder Pilz-Pathogene wie |
| | Phytophtora |
| Cf-Gene, z.B. Cf 9 Cf5 Cf4 Cf2 | Bakterielle oder Pilz-Pathogene wie |
| | Phytophtora |
| Osmotin | Bakterielle oder Pilz-Pathogene wie |
| | Phytophtora |
| Alpha Hordothionin | Bakterielle oder Pilz-Pathogene wie |
| | Phytophtora |
| Systemin | Bakterielle oder Pilz-Pathogene wie |
| | Phytophtora |
| Polygalacturonase-Inhibitoren | Bakterielle oder Pilz-Pathogene wie |
| | Phytophtora |
| Prf-Steuerungsgen | Bakterielle oder Pilz-Pathogene wie |
| | Phytophtora |
| Phytoalexine | Bakterielle oder Pilz-Pathogene wie |
| | Phytophtora |
| B-1,3-glucanase (Antisense) | Bakterielle oder Pilz-Pathogene wie |
| | Phytophtora |
| Rezeptorkinase | Bakterielle oder Pilz-Pathogene wie |
| | Phytophtora |
| Polypeptid mit der Wirkung, eine Über- | Bakterielle oder Pilz-Pathogene wie |
| empfindlichkeitsreaktion auszulösen | Phytophtora |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene wie |
| | Phytophtora |
| Lysozym | Bakterielle oder Pilz-Pathogene wie |
| | Phytophtora |
| Chitinasen | Bakterielle oder Pilz-Pathogene wie |
| | Phytophtora |
| Barnase | Bakterielle oder Pilz-Pathogene wie |
| | Phytophtora |
| Glucanasen | Bakterielle oder Pilz-Pathogene wie |
| | Phytophtora |
| Doppelstrang-Ribonuclease | Viren wie CMV, PRSV, WMV2, SMV, |
| | ZYMV |
| Hüllproteine | Viren wie CMV, PRSV, WMV2, SMV, |
| | ZYMV |
| 17kDa oder 60 kDa Protein | Viren wie CMV, PRSV, WMV2, SMV, |
| | ZYMV |
| Einschlussproteine des Kerns z.B. a oder b oder | Viren wie CMV, PRSV, WMV2, SMV, |
| Nucleoprotein | ZYMV |
| Pseudoubiquitin | Viren wie CMV, PRSV, WMV2, SMV, ZYMV |
| Replicase | Viren wie CMV, PRSV, WMV2, SMV, |
| | ZYMV |
| Toxine von Bacillus thuringiensis, VIP 3, | Lepidoptera, Blattläuse, Milben |
| Bacillus-cereus-Toxine, Photorabdus und | |
| Toxine von Xenorhabdus | |
| 3-Hydroxysteroidoxidase | Lepidoptera, Blattläuse, Milben, weiße Fliege |
| Peroxidase | Lepidoptera, Blattläuse, Milben, weiße Fliege |
| Aminopeptidase-Inhibitoren, z.B. Leucin | Lepidoptera, Blattläuse, Milben, weiße Fliege |
| Aminopeptidase-Inhibitor | |
| Lektine | Lepidoptera, Blattläuse, Milben, weiße Fliege |
| Protease-Inhibitoren, z.B. Cystatin, Patatin, | Lepidoptera, Blattläuse, Milben, weiße Fliege |
| CPTI, Virgiferin | |
| Ribosomeninaktivierendes Protein | Lepidoptera, Blattläuse, Milben, weiße Fliege |
| Stilbensynthase | Lepidoptera, Blattläuse, Milben, weiße Fliege |
| HMG-CoA-Reductase | Lepidoptera, Blattläuse, Milben, weiße Fliege |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |

### Pflanze: Banane

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Banana Bunchy Top Virus |
| | (BBTV) |
| Hüllproteine | Viren wie das Banana Bunchy Top Virus |
| | (BBTV) |
| 17kDa oder 60 kDa Protein | Viren wie das Banana Bunchy Top Virus |
| | (BBTV) |
| Einschlussproteine des Kerns z.B. a oder b oder | Viren wie das Banana Bunchy Top Virus |
| Nucleoprotein | (BBTV) |
| Pseudoubiquitin | Viren wie das Banana Bunchy Top Virus |
| Replicase | (BBTV) Viren wie das Banana Bunchy Top Virus |
| | (BBTV) |
| Toxine von Bacillus thuringiensis, VIP 3, | Lepidoptera, Blattläuse, Milben, Nematoden |
| Bacillus-cereus-Toxine, Photorabdus und | |
| Toxine von Xenorhabdus | |
| 3-Hydroxysteroidoxidase | Lepidoptera, Blattläuse, Milben, Nematoden |
| Peroxidase | Lepidoptera, Blattläuse, Milben, Nematoden |
| Aminopeptidase-Inhibitoren, z.B. Leucin | Lepidoptera, Blattläuse, Milben, Nematoden |
| Aminopeptidase-Inhibitor | |
| Lektine | Lepidoptera, Blattläuse, Milben, Nematoden |
| Protease-Inhibitoren, z.B. Cystatin, Patatin, | Lepidoptera, Blattläuse, Milben, Nematoden |
| CPTI, Virgiferin | |
| Ribosomeninaktivierendes Protein | Lepidoptera, Blattläuse, Milben, Nematoden |
| Stilbensynthase | Lepidoptera, Blattläuse, Milben, Nematoden |
| HMG-CoA-Reductase | Lepidoptera, Blattläuse, Milben, Nematoden |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |
| | |

### Pflanze: Baumwolle

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Arykoxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| 5-Enolpyruvyl-3-phosphoshikimat- | Bromoxynil und Loxinyl Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie das Wundtumorvirus (WTV) |
| Hüllproteine | Viren wie das Wundtumorvirus (WTV) |
| 17kDa oder 60 kDa Protein | Viren wie das Wundtumorvirus (WTV) |
| Einschlussproteine des Kerns z.B. a oder b oder | Viren wie das Wundtumorvirus (WTV) |
| Nucleoprotein | |
| Pseudoubiquitin | Viren wie das Wundtumorvirus (WTV) |
| Replicase | Viren wie das Wundtumorvirus (WTV) |
| Toxine von Bacillus thuringiensis, VIP 3, | Lepidoptera, Blattläuse, Milben, Nematoden, |
| Bacillus-cereus-Toxine, Photorabdus und Toxine von Xenorhabdus | weiße Fliege |
| 3-Hydroxysteroidoxidase | Lepidoptera, Blattläuse, Milben, Nematoden, |
| | weiße Fliege |
| Peroxidase Aminopeptidase-Inhibitoren, z.B. Leucin | Lepidoptera, Blattläuse, Milben, Nematoden, weiße Fliege Lepidoptera, Blattläuse, Milben, Nematoden, |
| Aminopeptidase-Inhibitor | weiße Fliege |
| Lektine | Lepidoptera, Blattläuse, Milben, Nematoden, |
| | weiße Fliege |
| Protease-Inhibitoren, z.B. Cystatin, Patatin, | Lepidoptera, Blattläuse, Milben, Nematoden, |
| CPTI, Virgiferin | weiße Fliege |
| Ribosomeninaktivierendes Protein | Lepidoptera, Blattläuse, Milben, Nematoden, |
| Stilbensynthase | weiße Fliege Lepidoptera, Blattläuse, Milben, Nematoden, weiße Fliege |
| HMG-CoA-Reductase | Lepidoptera, Blattläuse, Milben, Nematoden, |
| | weiße Fliege |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |

### Pflanze: Zuckerrohr

| Betroffene Merkmal/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene, z.B. |
| | Clavibacter |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie SCMV, SrMV |
| Hüllproteine | Viren wie SCMV, SrMV |
| 17kDa oder 60 kDa Protein | Viren wie SCMV, SrMV |
| Einschlussproteine des Kerns z.B. a oder b oder | Viren wie SCMV, SrMV |
| Nucleoprotein | |
| Pseudoubiquitin | Viren wie SCMV, SrMV |
| Replicase | Viren wie SCMV, SrMV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer wie z.B. der mexikanische |
| Toxine von Xenorhabdus | Reisbohrer |
| 3-Hydroxysteroidoxidase | Lepidoptera, Blattläuse, Milben, Nematoden, |
| | weiße Fliege, Käfer wie z.B. der mexikanische |
| | Reisbohrer |
| Peroxidase | Lepidoptera, Blattläuse, Milben, Nematoden, |
| | weiße Fliege, Käfer wie z.B. der mexikanische |
| | Reisbohrer |
| Aminopeptidase-Inhibitoren, z.B. Leucin | Lepidoptera, Blattläuse, Milben, Nematoden, |
| Aminopeptidase-Inhibitor | weiße Fliege, Käfer wie z.B. der mexikanische |
| | Reisbohrer |
| Lektine | Lepidoptera, Blattläuse, Milben, Nematoden, |
| | weiße Fliege, Käfer wie z.B. der mexikanische |
| | Reisbohrer |
| Protease-Inhibitoren, z.B. Cystatin, Patatin, | Lepidoptera, Blattläuse, Milben, Nematoden, |
| CPTI, Virgiferin | weiße Fliege, Käfer wie z.B. der mexikanische |
| | Reisbohrer |
| Ribosomeninaktivierendes Protein | Lepidoptera, Blattläuse, Milben, Nematoden, |
| | weiße Fliege, Käfer wie z.B. der mexikanische |
| | Reisbohrer |
| Stilbensynthase | Lepidoptera, Blattläuse, Milben, Nematoden, |
| | weiße Fliege, Käfer wie z.B. der mexikanische |
| | Reisbohrer |
| HMG-CoA-Reductase | Lepidoptera, Blattläuse, Milben, Nematoden, |
| | weiße Fliege, Käfer wie z.B. der mexikanische |
| | Reisbohrer |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |

### Pflanze: Sonnenblume

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. |
| | Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Phenylalanin-Ammoniak-Lyase (PAL) | Bakterielle oder Pilz-Pathogene |
| Cf-Gene, z.B. Cf 9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz-Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie CMV, TMV |
| Hüllproteine | Viren wie CMV, TMV |
| 17kDa oder 60 kDa Protein | Viren wie CMV, TMV |
| Einschlussproteine des Kerns z.B. a oder b oder | Viren wie CMV, TMV |
| Nucleoprotein | |
| Pseudoubiquitin | Viren wie CMV, TMV |
| Replicase | Viren wie CMV, TMV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer |
| Toxine von Xenorhabdus | |
| 3-Hydroxysteroidoxidase | Lepidoptera, Blattläuse, Milben, Nematoden, |
| | weiße Fliege, Käfer |
| Peroxidase | Lepidoptera, Blattläuse, Milben, Nematoden, |
| | weiße Fliege, Käfer |
| Aminopeptidase-Inhibitoren, z.B. Leucin | Lepidoptera, Blattläuse, Milben, Nematoden, |
| Aminopeptidase-Inhibitor | weiße Fliege, Käfer |
| Lektine | Lepidoptera, Blattläuse, Milben, Nematoden, |
| | weiße Fliege, Käfer |
| Protease-Inhibitoren, z.B. Cystatin, Patatin, | Lepidoptera, Blattläuse, Milben, Nematoden, |
| CPTI, Virgiferin | weiße Fliege, Käfer |
| Ribosomeninaktivierendes Protein | Lepidoptera, Blattläuse, Milben, Nematoden, |
| | weiße Fliege, Käfer |
| Stilbensynthase | Lepidoptera, Blattläuse, Milben, Nematoden, |
| | weiße Fliege, Käfer |
| HMG-CoA-Reductase | Lepidoptera, Blattläuse, Milben, Nematoden, |
| | weiße Fliege, Käfer |
| Schlüpfauslösefaktor für Zystennematoden | Zystennematoden |
| Barnase | Nematoden, z.B. Wurzelknoten-Nematoden und |
| | Zystennematoden |
| CBI | Wurzelknotennematoden |
| Prinzipien zur Verhinderung der Nahrungs- | Nematoden, z.B. Wurzelknoten-Nematoden und |
| aufnahmen, die an Nematoden-Nährstellen | Wurzel-Zystennematoden |
| induziert werden | |

### Pflanzen: Zuckerrübe, Rüben

| Betroffene Struktur/ Exprimiertes Protein | Merkmal der Pflanze / Toleranz gegenüber |
|---|---|
| Acetolactatsynthase (ALS) | Sulfonylharnstoffverbindungen, Imidazolinone |
| | Triazolpyrimidine, |
| | Pyrimidyloxybenzoate, Phthalide |
| Acetyl-CoA-Carboxylase (ACCase) | Aryloxyphenoxyalkancarbonsäuren, |
| | Cyclohexandione |
| Hydroxyphenylpyruvat-Dioxygenase (HPPD) | Isoxazole wie etwa Isoxaflutol oder |
| | Isoxachlortol, Trione wie etwa |
| | Mesotrion oder Sulcotrion |
| Phosphinothricinacetyltransferase | Phosphinothricin |
| O-Methyltransferase | Geänderter Ligningehalt |
| Glutaminsynthetase | Glufosinat, Bialaphos |
| Adenylosuccinatlyase (ADSL) | Inhibitoren der IMP- und AMP-Synthese |
| Adenylosuccinatsynthase | Inhibitoren der Adenylosuccinatsynthese |
| Anthranilatsynthase | Inhibitoren der Tryptophansynthese und des |
| | -abbaus |
| Nitrilase | 3,5-Dihalogen-4-hydroxy-benzonitrile wie |
| | Bromoxynil und Loxinyl |
| 5-Enolpyruvyl-3-phosphoshikimat- | Glyphosat oder Sulfosat |
| Synthase (EPSPS) | |
| Glyphosatoxidoreductase | Glyphosat oder Sulfosat |
| Protoporphyrinogenoxidase (PROTOX) | Diphenylether, cyclische Imide, |
| | Phenylpyrazole, Pyridinderivate, |
| | Phenopylat, Oxadiazole usw. |
| Cytochrom P450 z.B. P450 SU1 oder Auswahl | Xenobiotika und Herbizide wie etwa |
| | Sulfonylharnstoffverbindungen |
| Polyphenoloxidase oder Polyphenol-Oxidase | Bakterielle oder Pilz-Pathogene |
| (Antisense) | |
| Metallothionein | Bakterielle oder Pilz-Pathogene |
| Ribonuclease | Bakterielle oder Pilz-Pathogene |
| Pilzbekämpfendes Polypeptid AlyAFP | Bakterielle oder Pilz-Pathogene |
| Oxalatoxidase | Bakterielle oder Pilz-Pathogene, z.B. |
| | Sklerotinia |
| Glucoseoxidase | Bakterielle oder Pilz-Pathogene |
| Pyrrolnitrinsynthese-Gene | Bakterielle oder Pilz-Pathogene |
| Serin/Threonin-Kinasen | Bakterielle oder Pilz-Pathogene |
| Cecropin B | Bakterielle oder Pilz-Pathogene |
| Betroffene Struktur / exprimiertes Prinzip | Merkmal der Pflanze / Toleranz gegenüber |
| Phenylalanin-Ammoniak-Lyase (PAL) | Bakterielle oder Pilz-Pathogene |
| Cf-Gene, z.B. Cf9 Cf5 Cf4 Cf2 | Bakterielle oder Pilz-Pathogene |
| Osmotin | Bakterielle oder Pilz-Pathogene |
| Alpha Hordothionin | Bakterielle oder Pilz-Pathogene |
| Systemin | Bakterielle oder Pilz_Pathogene |
| Polygalacturonase-Inhibitoren | Bakterielle oder Pilz-Pathogene |
| Prf-Steuerungsgen | Bakterielle oder Pilz-Pathogene |
| Phytoalexine | Bakterielle oder Pilz-Pathogene |
| B-1,3-glucanase (Antisense) | Bakterielle oder Pilz-Pathogene |
| AX + WIN-Proteine | Bakterielle und Pilz-Pathogene wie |
| | Cercospora beticola |
| Rezeptorkinase | Bakterielle oder Pilz-Pathogene |
| Polypeptid mit der Wirkung, eine Über- | Bakterielle oder Pilz-Pathogene |
| empfindlichkeitsreaktion auszulösen | |
| Gene der systemischen erworbenen | Virale, bakterielle Pilz- und Nematoden- |
| Widerstandskraft (SAR) | Pathogene |
| Lytisch wirkendes Protein | Bakterielle oder Pilz-Pathogene |
| Lysozym | Bakterielle oder Pilz-Pathogene |
| Chitinasen | Bakterielle oder Pilz-Pathogene |
| Barnase | Bakterielle oder Pilz-Pathogene |
| Glucanasen | Bakterielle oder Pilz-Pathogene |
| Doppelstrang-Ribonuclease | Viren wie etwa BNYVV |
| Hüllproteine | Viren wie etwa BNYVV |
| 17kDa oder 60 kDa Protein | Viren wie etwa BNYVV |
| Einschlussproteine des Kerns z.B. a oder b oder | Viren wie etwa BNYVV |
| Nucleoprotein | |
| Pseudoubiquitin | Viren wie etwa BNYVV |
| Replicase | Viren wie etwa BNYVV |
| Toxine von Bacillus thuringiensis, VIP 3, | Lepidoptera, Blattläuse, Milben, Nematoden, |
| Bacillus-cereus-Toxine, Photorabdus und | weiße Fliege, Käfer, Wurzelfliegen |
| Toxine von Xenorhabdus | |
| 3-Hydroxysteroidoxidase | Lepidoptera, Blattläuse, Milben, Nematoden, |
| | weiße Fliege, Käfer, Wurzelfliegen |
| Peroxidase | Lepidoptera, Blattläuse, Milben, Nematoden, |
| | weiße Fliege, Käfer, Wurzelfliegen |
| Aminopeptidase-Inhibitoren, z.B. Leucin | Lepidoptera, Blattläuse, Milben, Nematoden, |
| Aminopeptidase-Inhibitor | weiße Fliege, Käfer, Wurzelfliegen |
| Lektine | Lepidoptera, Blattläuse, Milben, Nematoden, |
| | weiße Fliege, Käfer, Wurzelfliegen |
| Protease-Inhibitoren, z.B. Cystatin, Patatin, | Lepidoptera, Blattläuse, Milben, Nematoden, |
| CPTI, Virgiferin | weiße Fliege, Käfer, Wurzelfliegen |
| Ribosomeninaktivierendes Protein | Lepidoptera, Blattläuse, Milben, Nematoden, |
| | weiße Fliege, Käfer, Wurzelfliegen |
| Stilbensynthase | Lepidoptera, Blattläuse, Milben, Nematoden, |
| | weiße Fliege, Käfer, Wurzelfliegen |
| HMG-CoA-Reductase | Lepidoptera, Blattläuse, Milben, Nematoden, |
| | weiße Fliege, Käfer, Wurzelfliegen |
| Schlüpfauslösefaktor für Zystennematoden | Zystennematoden |
| Barnase | Nematoden, z.B. Wurzelknoten-Nematoden und |
| | Zystennematoden |
| Resistenz-Stelle für Zystennematoden der | Zystennematoden |
| Rüben | |
| CBI | Wurzelknotennematoden |
| Prinzipien zur Verhinderung der Nahrungs- | Nematoden, z.B. Wurzelknoten-Nematoden und |
| aufnahmen, die Nahrungsaufnahmen, die | Wurzel-Zystennematoden |
| induziert werden | |

**Tabelle 2**

| Die folgenden Abkürzungen wurden in der Tabelle benutzt: | |
|---|---|
| Aktives Prinzip der genetisch modifizierten Pflanze: AP | |
| Photorhabdus luminescens: PL | |
| Xenorhabdus nematophilus: XN | |
| Proteinase-Inhibitoren: Plnh. | |
| Pflanzenlektine PLec. | |
| Agglutinine: Aggl. | |
| 3-Hydroxysteroidoxidase: HO | |
| Cholesterinoxidase: CO | |
| Chitinase: CH | |
| Glucanase: GL | |
| Stilbensynthase SS | |

| AP | Kontrolle von |
|---|---|
| CrylA(a) | Adoxophyes spp. |
| CrylA(a) | Agrotis spp. |
| CrylA(a) | Alabama argiliaceae |
| CrylA(a) | Anticarsia gemmatalis |
| CrylA(a) | Chilo spp. |
| CrylA(a) | Clysia ambiguella |
| CrylA(a) | Crocidolomia binotalis |
| CrylA(a) | Cydia spp. |
| CrylA(a) | Diparopsis castanea |
| CrylA(a) | Earias spp. |
| CrylA(a) | Ephestia spp. |
| CrylA(a) | Heliothis spp. |
| CrylA(a) | Heliula undalis |
| CrylA(a) | Keiferia lycopersicella |
| CrylA(a) | Leucoptera scitella |
| CrylA(a) | Lithocollethis spp. |
| CrylA(a) | Lobesia botrana |
| CrylA(a) | Ostrinia nubilalis |
| CrylA(a) | Pandemis spp. |
| CrylA(a) | Pectinophora gossyp. |
| CrylA(a) | Phyllocnistis citrella |
| CrylA(a) | Pieris spp. |
| CrylA(a) | Plutella xylostella |
| CrylA(a) | Scirpophaga spp. |
| CrylA(a) | Sesamia spp. |
| CrylA(a) | Sparganothis spp. |
| CrylA(a) | Spodoptera spp. |
| CrylA(a) | Tortrix spp. |
| CrylA(a) | Trichoplusia ni |
| CrylA(a) | Agriotes spp. |
| CrylA(a) | Anthonomus grandis |
| CrylA(a) | Curculio spp. |
| CrylA(a) | Diabrotica balteata |
| CrylA(a) | Leptinotarsa spp. |
| CrylA(a) | Lissorhoptrus spp. |
| CrylA(a) | Otiorhynchus spp. |
| CrylA(a) | Aleurothrixus spp. |
| CrylA(a) | Aleyrodes spp. |
| CrylA(a) | Aonidiella spp. |
| CrylA(a) | Aphididea spp. |
| CrylA(a) | Aphis spp. |
| CrylA(a) | Bemisia tabaci |
| CrylA(a) | Empoasca spp. |
| CrylA(a) | Mycus spp. |
| CrylA(a) | Nephotettix spp. |
| CrylA(a) | Nilaparvata spp. |
| CrylA(a) | Pseudococcus spp. |
| CrylA(a) | Psylla spp. |
| CrylA(a) | Quadraspidiotus spp. |
| CrylA(a) | Schizaphis spp. |
| CrylA(a) | Trialeurodes spp. |
| CrylA(a) | Lyriomyza spp. |
| CrylA(a) | Oscinella spp. |
| CrylA(a) | Phorbia spp. |
| CrylA(a) | Frankliniella spp. |
| CrylA(a) | Thrips spp. |
| CrylA(a) | Scirtothrips aurantii |
| CrylA(a) | Aceria spp. |
| CrylA(a) | Aculus spp. |
| CrylA(a) | Brevipaipus spp. |
| CrylA(a) | Panonychus spp. |
| CrylA(a) | Phyllocoptruta spp. |
| CrylA(a) | Tetranychus spp. |
| CrylA(a) | Heterodera spp. |
| CrylA(a) | Meloidogyne spp. |
| CrylA(b) | Adoxophyes spp |
| CrylA(b) | Agrotis spp |
| CrylA(b) | Alabama argillaceae |
| CrylA(b) | Anticarsia gemmatalis |
| CrylA(b) | Chilo spp. |
| CrylA(b) | Ciysia ambiguella |
| CrylA(b) | Crocidolomia binotaiis |
| CrylA(b) | Cydia spp. |
| CrylA(b) | Diparopsis castanea |
| CrylA(b) | Earias spp. |
| CrylA(b) | Ephestia spp. |
| CrylA(b) | Heliothis spp. |
| CrylA(b) | Hellula undalis |
| CrylA(b) | Keiferia lycopersicella |
| CrylA(b) | Leucoptera scitella |
| CrylA(b) | Lithocollethis spp. |
| CrylA(b) | Lobesia botrana |
| CrylA(b) | Ostrinia nubilalis |
| CrylA(b) | Pandemis spp. |
| CrylA(b) | Pectinophora gossyp. |
| CrylA(b) | Phyllocnistis citrella |
| CrylA(b) | Pieris spp. |
| CrylA(b) | Plutelia xyiostella |
| CrylA(b) | Scirpophaga spp. |
| CrylA(b) | Sesamia spp. |
| CrylA(b) | Sparganothis spp. |
| CrylA(b) | Spodoptera spp. |
| CrylA(b) | Tortrix spp. |
| CrylA(b) | Trichoplusia ni |
| CrylA(b) | Agriotes spp. |
| CrylA(b) | Anthonomus grandis |
| CrylA(b) | Curculio spp. |
| CrylA(b) | Diabrotica balteata |
| CrylA(b) | Leptinotarsa spp. |
| CrylA(b) | Lissorhoptrus spp. |
| CrylA(b) | Otiorhynchus spp. |
| CrylA(b) | Aleurothrixus spp. |
| CrylA(b) | Aleyrodes spp. |
| CrylA(b) | Aonidiella spp. |
| CrylA(b) | Aphididae spp. |
| CrylA(b) | Aphis spp. |
| CrylA(b) | Bemisia tabaci |
| CrylA(b) | Empoasca spp. |
| CrylA(b) | Mycus spp. |
| CrylA(b) | Nephotettix spp. |
| CrylA(b) | Nilaparvata spp. |
| CrylA(b) | Pseudococcus spp. |
| CrylA(b) | Psylla spp. |
| CrylA(b) | Quadraspidiotus spp. |
| CrylA(b) | Schizaphis spp. |
| CrylA(b) | Trialeurodes spp. |
| CrylA(b) | Lyriomyza spp. |
| CrylA(b) | Oscinella spp. |
| CrylA(b) | Phorbia spp. |
| CrylA(b) | Frankliniella spp. |
| CrylA(b) | Thrips spp. |
| CrylA(b) | Scirtothrips aurantii |
| CrylA(b) | Aceria spp. |
| CrylA(b) | Aculus spp. |
| CrylA(b) | Brevipalpus spp. |
| CrylA(b) | Panonychus spp. |
| CrylA(b) | Phyllocoptruta spp. |
| CrylA(b) | Tetranychus spp. |
| CrylA(b) | Heterodera spp. |
| CrylA(b) | Meloidogyne spp. |
| CrylA(c) | Adoxophyes spp. |
| CrylA(c) | Agrotis spp. |
| CrylA(c) | Alabama argillaceae |
| CrylA(c) | Anticarsia gemmatalis |
| CrylA(c) | Chilo spp. |
| CrylA(c) | Ciysia ambiguella |
| CrylA(c) | Crocidolomia binotalis |
| CrylA(c) | Cydia spp. |
| CrylA(c) | Diparopsis castanea |
| CrylA(c) | Earias spp. |
| CrylA(c) | Ephestia spp. |
| CrylA(c) | Heliothis spp. |
| CrylA(c) | Hellula undalis |
| CrylA(c) | Keiferia lycopersicella |
| CrylA(c) | Leucoptera scitella |
| CrylA(c) | Lithocollethis spp. |
| CrylA(c) | Lobesia botrana |
| CrylA(c) | Ostrinia nubilalis |
| CrylA(c) | Pandemis spp. |
| CrylA(c) | Pectinophora gossypielia. |
| CrylA(c) | Phyllocnistis citrella |
| CrylA(c) | Pieris spp. |
| CrylA(c) | Plutella xyiostella |
| CrylA(c) | Scirpophaga spp. |
| CrylA(c) | Sesamia spp. |
| CrylA(c) | Sparganothis spp. |
| CrylA(c) | Spodoptera spp. |
| CrylA(c) | Tortrix spp. |
| CrylA(c) | Trichoplusia ni |
| CrylA(c) | Agriotes spp. |
| CrylA(c) | Anthonomus grandis |
| CrylA(c) | Curculio spp. |
| CrylA(c) | Diabrotica baiteata |
| CrylA(c) | Leptinotarsa spp. |
| CrylA(c) | Lissorhoptrus spp. |
| CrylA(c) | Otiorhynchus spp. |
| CrylA(c) | Aleurothrixus spp. |
| CrylA(c) | Aleyrodes spp. |
| CrylA(c) | Aonidiella spp. |
| CrylA(c) | Aphididae spp. |
| CrylA(c) | Aphis spp. |
| CrylA(c) | Bemisia tabaci |
| CrylA(c) | Empoasca spp. |
| CrylA(c) | Mycus spp. |
| CrylA(c) | Nephotettix spp. |
| CrylA(c) | Nilaparvata spp. |
| CrylA(c) | Pseudococcus spp. |
| CrylA(c) | Psylla spp. |
| CrylA(c) | Quadraspidiotus spp. |
| CrylA(c) | Schizaphis spp. |
| CrylA(c) | Trialeurodes spp. |
| CrylA(c) | Lyriomyza spp. |
| CrylA(c) | Oscinelia spp. |
| CrylA(c) | Phorbia spp. |
| CrylA(c) | Frankiiniella spp. |
| CrylA(c) | Thrips spp. |
| CrylA(c) | Scirtothrips aurantii |
| CrylA(c) | Aceria spp. |
| CrylA(c) | Aculus spp. |
| CrylA(c) | Brevipalpus spp. |
| CrylA(c) | Panonychus spp. |
| CrylA(c) | Phyllocoptruta spp. |
| CrylA(c) | Tetranychus spp. |
| CrylA(c) | Heterodera spp. |
| CrylA(c) | Meloidogyne spp. |
| CryllA | Adoxophyes spp. |
| CryllA | Agrotis spp. |
| CryllA | Alabama argillaceae |
| CryllA | Anticarsia gemmatalis |
| CryllA | Chilo spp. |
| CryllA | Clysia ambiguella |
| CryllA | Crocidolomia binotalis |
| CryllA | Cydia spp. |
| CryllA | Diparopsis castanea |
| CryllA | Earias spp. |
| CryllA | Ephestia spp. |
| CryllA | Heliothis spp. |
| CryllA | Hellula undalis |
| CryllA | Keiferia lycopersicella |
| CryllA | Leucoptera scitella |
| CryllA | Lithocoliethis spp. |
| CryllA | Lobesia botrana |
| CryllA | Ostrinia nubilalis |
| CryllA | Pandemis spp. |
| CryllA | Pectinophora gossyp. |
| CryllA | Phyllocnistis citrella |
| CryllA | Pieris spp. |
| CryllA | Plutella xylostella |
| CryllA | Scirpophaga spp. |
| CryllA | Sesamia spp. |
| CryllA | Sparganothis spp. |
| CryllA | Spodoptera spp. |
| CryllA | Tortrix spp. |
| CryllA | Trichoplusia ni |
| CryllA | Agriotes spp. |
| CryllA | Anthonomus grandis |
| CryllA | Curculio spp. |
| CryllA | Diabrotica balteata |
| CryllA | Leptinotarsa spp. |
| CryllA | Lissorhoptrus spp. |
| CryllA | Otiorhynchus spp. |
| CryllA | Aleurothrixus spp. |
| CryllA | Aleyrodes spp. |
| CryllA | Aonidiella spp. |
| CryllA | Aphididae spp. |
| CryllA | Aphis spp. |
| CryllA | Bemisia tabaci |
| CryllA | Empoasca spp. |
| CryllA | Mycus spp. |
| CryllA | Nephotettix spp. |
| CryllA | Nilaparvata spp. |
| CryllA | Pseudococcus spp. |
| CryllA | Psyila spp. |
| CryllA | Quadraspidiotus spp. |
| CryllA | Schizaphis spp. |
| CryllA | Trialeurodes spp. |
| CryllA | Lyriomyza spp. |
| CryllA | Oscinella spp. |
| CryllA | Phorbia spp. |
| CryllA | Frankliniella spp. |
| CryllA | Thrips spp. |
| CryllA | Scirtothrips aurantii |
| CryllA | Aceria spp. |
| CryllA | Acutus spp. |
| CryllA | Brevipalpus spp. |
| CryllA | Panonychus spp. |
| CryllA | Phyllocoptruta spp. |
| CryllA | Tetranychus spp. |
| CryllA | Heterodera spp. |
| CryllA | Meloidogyne spp. |
| CrylllA | Adoxophyes spp. |
| CrylllA | Agrotis spp. |
| CrylllA | Alabama argiiiaceae |
| CrylllA | Anticarsia gemmataiis |
| CrylllA | Chilo spp. |
| CrylllA | Ciysia ambiguelia |
| CrylllA | Crocodolomia binotalis |
| CrylllA | Cydia spp. |
| CrylllA | Diparopsis castanea |
| CrylllA | Earias spp. |
| CrylllA | Ephestia spp. |
| CrylllA | Heliothis spp. |
| CrylllA | Hellula undalis |
| CrylllA | Keiferia lycopersicella |
| CrylllA | Leucoptera scitella |
| CrylllA | Lithocollethis spp. |
| CrylllA | Lobesia botrana |
| CrylllA | Ostrinia nubilalis |
| CrylllA | Pandemis spp. |
| CrylllA | Pectinophora gossyp. |
| CrylllA | Phyllocnistis citrella |
| CrylllA | Pieris spp. |
| CrylllA | Plutella xylostella |
| CrylllA | Scirpophaga spp. |
| CrylllA | Sesamia spp. |
| CrylllA | Sparganothis spp. |
| CrylllA | Spodoptera spp. |
| CrylllA | Tortrix spp. |
| CrylllA | Trichoplusia ni |
| CrylllA | Agriotes spp. |
| CrylllA | Anthonomus grandis |
| CrylllA | Curculio spp. |
| CrylllA | Diabrotica balteata |
| CrylllA | Leptinotarsa spp. |
| CrylllA | Lissorhoptrus spp. |
| CrylllA | Otiorhynchus spp. |
| CrylllA | Aleurothrixus spp. |
| CrylllA | Aleyrodes spp. |
| CrylllA | Aonidiella spp. |
| CrylllA | Aphididae spp. |
| CrylllA | Aphis spp. |
| CrylllA | Bemisia tabaci |
| CrylllA | Empoasca spp. |
| CrylllA | Mycus spp. |
| CrylllA | Nephotettix spp. |
| CrylllA | Nilaparvata spp. |
| CrylllA | Pseudococcus spp. |
| CrylllA | Psylla spp. |
| CrylllA | Quadraspidiotus spp. |
| CrylllA | Schizaphis spp. |
| CrylllA | Trialeurodes spp. |
| CrylllA | Lyriomyza spp. |
| CrylllA | Oscinella spp. |
| CrylllA | Phorbia spp. |
| CrylllA | Frankliniella spp. |
| CrylllA | Thrips spp. |
| CrylllA | Scirtothrips aurantii |
| CrylllA | Aceria spp. |
| CrylllA | Aculus spp. |
| CrylllA | Brevipalpus spp. |
| CrylllA | Panonychus spp. |
| CrylllA | Phyllocoptruta spp. |
| CrylllA | Tetranychus spp. |
| CrylllA | Heterodera spp. |
| CrylllA | Meloidogyne spp. |
| CrylllB2 | Adoxophyes spp. |
| CrylllB2 | Agrotis spp. |
| CrylllB2 | Alabama argiilaceae |
| CrylllB2 | Anticarsia gemmatalis |
| CrylllB2 | Chilo spp. |
| CrylllB2 | Clysia ambiguella |
| CrylllB2 | Crocidolomia binotaiis |
| CrylllB2 | Cydia spp. |
| CrylllB2 | Diparopsis castanea |
| CrylllB2 | Earias spp. |
| CrylllB2 | Ephestia spp. |
| CrylllB2 | Heliothis spp. |
| CrylllB2 | Hellula undalis |
| CrylllB2 | Keiferia lycopersicella |
| CrylllB2 | Leucoptera sectelia |
| CrylllB2 | Lithocollethis spp. |
| CrylllB2 | Lobesia botrana |
| CrylllB2 | Ostrinia nubilalis |
| CrylllB2 | Pandemis spp. |
| CryllIB2 | Pectinophora gossyp. |
| CrylIIB2 | Phyllocnistis citrella |
| CrylllB2 | Pieris spp. |
| CrylllB2 | Plutella xylostella |
| CrylllB2 | Scirpophaga spp. |
| CrylllB2 | Sesamia spp. |
| CrylllB2 | Sparganothis spp. |
| CrylllB2 | Spodoptera spp. |
| CrylllB2 | Tortrix spp. |
| CrylllB2 | Trichoplusia ni |
| CrylllB2 | Agriotes spp. |
| CrylllB2 | Anthonomus grandis |
| CrylllB2 | Curculio spp. |
| CrylllB2 | Diabrotica balteata |
| CrylllB2 | Leptinotarsa spp. |
| CrylllB2 | Lissorhoptrus spp. |
| CrylllB2 | Otiorhynchus spp. |
| CrylllB2 | Aleurothrixus spp. |
| CrylllB2 | Aleyrodes spp. |
| CrylllB2 | Aonidiella spp. |
| CrylllB2 | Aphididae spp. |
| CrylllB2 | Aphis spp. |
| CrylllB2 | Bemisia tabaci |
| CrylllB2 | Empoasca spp. |
| CrylIIB2 | Mycus spp. |
| CrylllB2 | Nephotettix spp. |
| CrylllB2 | Nilaparvata spp. |
| CrylllB2 | Pseudococcus spp. |
| CrylllB2 | Psylla spp. |
| CrylllB2 | Quadraspidiotus spp. |
| CrylllB2 | Schizaphis spp. |
| CrylllB2 | Trialeurodes spp. |
| CrylllB2 | Lyriornyza spp. |
| CrylllB2 | Oscinella spp. |
| CrylllB2 | Phorbia spp. |
| CrylllB2 | Frankliniella spp. |
| CrylllB2 | Thrips spp. |
| CrylllB2 | Scirtothrips aurantii |
| CrylllB2 | Aceria spp. |
| CrylllB2 | Acutus spp. |
| CrylllB2 | Brevipalpus spp. |
| CrylllB2 | Panonychus spp. |
| CrylllB2 | Phyllocoptruta spp. |
| CrylllB2 | Tetranychus spp. |
| CrylllB2 | Heterodera spp. |
| CrylllB2 | Meloidogyne spp. |
| CytA | Adoxophyes spp. |
| CytA | Agrotis spp. |
| CytA | Alabama argiilaceae |
| CytA | Anticarsia gemmatalis |
| CytA | Chilo spp. |
| CytA | Clysia ambiguella |
| CytA | Crocidolomia binotaiis |
| CytA | Cydia spp. |
| CytA | Diparopsis castanea |
| CytA | Earias spp. |
| CytA | Ephestia spp. |
| CytA | Heliothis spp. |
| CytA | Hellula undalis |
| CytA | Keiferia lycopersicella |
| CytA | Leucoptera scitelia |
| CytA | Lithocollethis spp. |
| CytA | Lobesia botrana |
| CytA | Ostrinia nubilalis |
| CytA | Pandemis spp. |
| CytA | Pectinophora gossyp. |
| CytA | Phyllocnistis citrella |
| CytA | Pieris spp. |
| CytA | Plutella xylostella |
| CytA | Scirpophaga spp. |
| CytA | Sesamia spp. |
| CytA | Sparganothis spp. |
| CytA | Spodoptera spp. |
| CytA | Tortrix spp. |
| CytA | Trichoplusia ni |
| CytA | Agriotes spp. |
| CytA | Anthonomus grandis |
| CytA | Curculio spp. |
| CytA | Diabrotica balteata |
| CytA | Leptinotarsa spp. |
| CytA | Lissorhoptrus spp. |
| CytA | Otiorhynchus spp. |
| CytA | Aleurothrixus spp. |
| CytA | Aleyrodes spp. |
| CytA | Aonidielia spp. |
| CytA | Aphididae spp. |
| CytA | Aphis spp. |
| CytA | Bemisia tabaci |
| CytA | Empoasca spp. |
| CytA | Mycus spp. |
| CytA | Nephotettix spp. |
| CytA | Nilaparvata spp. |
| CytA | Pseudococcus spp. |
| CytA | Psylla spp. |
| CytA | Quadraspidiotus spp. |
| CytA | Schizaphis spp. |
| CytA | Trialeurodes spp. |
| CytA | Lyriomyza spp. |
| CytA | Oscinella spp. |
| CytA | Phorbia spp. |
| CytA | Frankliniella spp. |
| CytA | Thrips spp. |
| CytA | Scirtothrips aurantii |
| CytA | Aceria spp. |
| CytA | Acutus spp. |
| CytA | Brevipalpus spp. |
| CytA | Panonychus spp. |
| CytA | Phyllocoptruta spp. |
| CytA | Tetranychus spp. |
| CytA | Heterodera spp. |
| CytA | Meloidogyne spp. |
| VIP3 | Adoxophyes spp. |
| VIP3 | Agrotis spp. |
| VIP3 | Alabama argillaceae |
| VIP3 | Anticarsia gemmatalis |
| VIP3 | Chilo spp. |
| VIP3 | Clysia ambiguella |
| VIP3 | Crocidolomia binotalis |
| VIP3 | Cydia spp. |
| VIP3 | Diparopsis castanea |
| VIP3 | Earias spp. |
| VIP3 | Ephestia spp. |
| VIP3 | Heliothis spp. |
| VIP3 | Hellula undalis |
| VIP3 | Keiferia |
| | lycopersicella |
| VIP3 | Leucoptera scitella |
| VIP3 | Lithocollethis spp. |
| VIP3 | Lobesia botrana |
| VIP3 | Ostrinia nubilalis |
| VIP3 | Pandemis spp. |
| VIP3 | Pectinophora gossyp. |
| VIP3 | Phyllocnistis citrella |
| VIP3 | Pieris spp. |
| VIP3 | Piutella xylostella |
| VIP3 | Scirpophaga spp. |
| VIP3 | Sesamia spp. |
| VIP3 | Sparganothis spp. |
| VIP3 | Spodoptera spp. |
| VIP3 | Tortrix spp. |
| VIP3 | Trichoplusia ni |
| VIP3 | Agriotes spp. |
| VIP3 | Anthonomus grandis |
| VIP3 | Curculio spp. |
| VIP3 | Diabrotica balteata |
| VIP3 | Leptinotarsa spp. |
| VIP3 | Lissorhoptrus spp. |
| VIP3 | Otiorhynchus spp. |
| VIP3 | Aleurothrixus spp. |
| VIP3 | Aleyrodes spp. |
| VIP3 | Aonidiella spp. |
| VIP3 | Aphididae spp. |
| VIP3 | Aphis spp. |
| VIP3 | Bemisia tabaci |
| VIP3 | Empoasca spp. |
| VIP3 | Mycus spp. |
| VIP3 | Nephotettix spp. |
| VIP3 | Niiaparvata spp. |
| VIP3 | Pseudococcus spp. |
| VIP3 | Psylla spp. |
| VIP3 | Quadraspidiotus spp. |
| VIP3 | Schizaphis spp. |
| VIP3 | Trialeurodes spp. |
| VIP3 | Lyriomyza spp. |
| VIP3 | Oscinella spp. |
| VIP3 | Phorbia spp. |
| VIP3 | Frankliniella spp. |
| VIP3 | Thrips spp. |
| VIP3 | Scirtothrips aurantii |
| VIP3 | Aceria spp. |
| VIP3 | Acutus spp. |
| VIP3 | Brevipalpus spp. |
| VIP3 | Panonychus spp. |
| VIP3 | Phyllocoptruta spp. |
| VIP3 | Tetranychus spp. |
| VIP3 | Heterodera spp. |
| VIP3 | Meloidogyne spp. |
| GL | Adoxophyes spp. |
| GL | Agrotis spp. |
| GL | Alabama argillaceae |
| GL | Anticarsia gemmatalis |
| GL | Chilo spp. |
| GL | Clysia ambiguella |
| GL | Crocidolomia binotaiis |
| GL | Cydia spp. |
| GL | Diparopsis castanea |
| GL | Earias spp. |
| GL | Ephestia spp. |
| GL | Heliothis spp. |
| GL | Hellula undalis |
| GL | Keiferia lycopersicella |
| GL | Leucoptera scitella |
| GL | Lithocollethis spp. |
| GL | Lobesia botrana |
| GL | Ostrinia nubilalis |
| GL | Pandemis spp. |
| GL | Pectinophora gossyp. |
| GL | Phyliocnistis citrella |
| GL | Pieris spp. |
| GL | Plutella xylostella |
| GL | Scirpophaga spp. |
| GL | Sesamia spp. |
| GL | Sparganothis spp. |
| GL | Spodoptera spp. |
| GL | Tortrix spp. |
| GL | Trichoplusia ni |
| GL | Agriotes spp. |
| GL | Anthonomus grandis |
| GL | Curculio spp. |
| GL | Diabrotica balteata |
| GL | Leptinotarsa spp. |
| GL | Lissorhoptrus spp. |
| GL | Otiorhynchus spp. |
| GL | Aleurothrixus spp. |
| GL | Aleyrodes spp. |
| GL | Aonidiella spp. |
| GL | Aphididae spp. |
| GL | Aphis spp. |
| GL | Bemisia tabaci |
| GL | Empoasca spp. |
| GL | Mycus spp. |
| GL | Nephotettix spp. |
| GL | Nilaparvata spp. |
| GL | Pseudococcus spp. |
| GL | Psylia spp. |
| GL | Quadraspidiotus spp. |
| GL | Schizaphis spp. |
| GL | Trialeurodes spp. |
| GL | Lyriomyza spp. |
| GL | Oscinella spp. |
| GL | Phorbia spp. |
| GL | Frankliniella spp. |
| GL | Thrips spp. |
| GL | Scirtothrips aurantii |
| GL | Aceria spp. |
| GL | Aculus spp. |
| GL | Brevipalpus spp. |
| GL | Panonychus spp. |
| GL | Phyliocoptruta spp. |
| GL | Tetranychus spp. |
| GL | Heterodera spp. |
| GL | Meloidogyne spp. |
| PL | Adoxophyesspp. |
| PL | Agrotis spp. |
| PL | Alabama argillaceae |
| PL | Anticarsia gemmatalis |
| PL | Chilo spp. |
| PL | Clysia ambiguella |
| PL | Crocidolomia binotalis |
| PL | Cydia spp. |
| PL | Diparopsis castanea |
| PL | Earias spp. |
| PL | Ephestia spp. |
| PL | Heliothis spp. |
| PL | Hellula undaiis |
| PL | Keiferia lycopersicella |
| PL | Leucoptera scitella |
| PL | Lithocollethis spp. |
| PL | Lobesia botrana |
| PL | Ostrinia nubilalis |
| PL | Pandemis spp. |
| PL | Pectinophora gossyp. |
| PL | Phyllocnistis citrella |
| PL | Pieris spp. |
| PL | Plutella xylostella |
| PL | Scirpophaga spp. |
| PL | Sesamia spp. |
| PL | Sparganothis spp. |
| PL | Spodoptera spp. |
| PL | Tortrix spp. |
| PL | Trichoplusia ni |
| PL | Agriotes spp. |
| PL | Anthonomus grandis |
| PL | Curculio spp. |
| PL | Diabrotica balteata |
| PL | Leptinotarsa spp. |
| PL | Lissorhoptrus spp. |
| PL | Otiorhynchus spp. |
| PL | Aleurothrixus spp. |
| PL | Aleyrodes spp. |
| PL | Aonidiella spp. |
| PL | Aphididae spp. |
| PL | Aphis spp. |
| PL | Bemisia tabaci |
| PL | Empoasca spp. |
| PL | Mycus spp. |
| PL | Nephotettix spp. |
| PL | Nilaparvata spp. |
| PL | Pseudococcus spp. |
| PL | Psylla spp. |
| PL | Quadraspidiotus spp. |
| PL | Schizaphis spp. |
| PL | Trialeurodes spp. |
| PL | Lyriomyza spp. |
| PL | Oscinella spp. |
| PL | Phorbia spp. |
| PL | Franklinieila spp. |
| PL | Thrips spp. |
| PL | Scirtothrips auranii |
| PL | Aceria spp. |
| PL | Aculus spp. |
| PL | Brevipalpus spp. |
| PL | Panonychus spp. |
| PL | Phyllocoptruta spp. |
| PL | Tetranychus spp. |
| PL | Heterodera spp. |
| PL | Meloidogyne spp. |
| XN | Adoxophyes spp. |
| XN | Agrotis spp. |
| XN | Alabama argiliaceae |
| XN | Anticarsia gemmatalis |
| XN | Chilo spp. |
| XN | Clysia ambiguella |
| XN | Crocidolomia binotalis |
| XN | Cydia spp. |
| XN | Diparopsis castanea |
| XN | Earias spp. |
| XN | Ephestia spp. |
| XN | Heliothis spp. |
| XN | Helluia undaiis |
| XN | Keiferia lycopersicella |
| XN | Leucoptera scitella |
| XN | Lithocollethis spp. |
| XN | Lobesia botrana |
| XN | Ostrinia nubilalis |
| XN | Pandemis spp. |
| XN | Pectinophora gossyp. |
| XN | Phyllocnistis citrella |
| XN | Pieris spp. |
| XN | Plutella xylostella |
| XN | Scirpophaga spp. |
| XN | Sesamia spp. |
| XN | Sparganothis spp. |
| XN | Spodoptera spp. |
| XN | Tortrix spp. |
| XN | Trichoplusia ni |
| XN | Agriotes spp. |
| XN | Anthonomus grandis |
| XN | Curculio spp. |
| XN | Diabrotica balteata |
| XN | Leptinotarsa spp. |
| XN | Lissorhoptrus spp. |
| XN | Otiorhynchus spp. |
| XN | Aleurothrixus spp. |
| XN | Aleyrodes spp. |
| XN | Aonidiella spp. |
| XN | Aphididae spp. |
| XN | Aphis spp. |
| XN | Bemisia tabaci |
| XN | Empoasca spp. |
| XN | Mycus spp. |
| XN | Nephotettix spp. |
| XN | Nilaparvata spp. |
| XN | Pseudococcus spp. |
| XN | Psylla spp. |
| XN | Quadraspidiotus spp. |
| XN | Schizaphis spp. |
| XN | Trialeurodes spp. |
| XN | Lyriomyza spp. |
| XN | Oscinella spp. |
| XN | Phorbia spp. |
| XN | Frankliniella spp. |
| XN | Thrips spp. |
| XN | Scirtothrips aurantii |
| XN | Aceria spp. |
| XN | Aculus spp. |
| XN | Brevipalpus spp. |
| XN | Panonychus spp. |
| XN | Phyllocoptruta spp. |
| XN | Tetranychus spp. |
| XN | Heterodera spp. |
| XN | Meloidogyne spp. |
| Plnh. | Adoxophyes spp. |
| Plnh. | Agrotis spp. |
| Plnh. | Alabama argiliaceae |
| Plnh. | Anticarsia gemmatalis |
| Plnh. | Chilo spp. |
| Plnh. | Clysia ambiguella |
| Plnh. | Crocidolomia |
| | binotalis |
| Plnh. | Cydia spp. |
| Plnh. | Diparopsis castanea |
| Plnh. | Earias spp. |
| Plnh. | Ephestia spp. |
| Plnh. | Heliothis spp. |
| Plnh. | Heliuia undalis |
| Plnh. | Keiferia lycopersicella |
| Plnh. | Leucoptera scitella |
| Plnh. | Lithocollethis spp. |
| Plnh. | Lobesia botrana |
| Plnh. | Ostrinia nubilalis |
| Plnh. | Pandemis spp. |
| Plnh. | Pectinophora gossyp. |
| Plnh. | Phyllocnistis citrelia |
| Plnh. | Pieris spp. |
| Plnh. | Plutella xylostella |
| Plnh. | Scirpophaga spp. |
| Plnh. | Sesamia spp. |
| Plnh. | Sparganothis spp. |
| Plnh. | Spodoptera spp. |
| Plnh. | Tortrix spp. |
| Plnh. | Trichoplusia ni |
| Plnh. | Agriotes spp. |
| Plnh. | Anthonomus grandis |
| Plnh. | Curculio spp. |
| Plnh. | Diabrotica balteata |
| Plnh. | Leptinotarsa spp. |
| Plnh. | Lissorhoptrus spp. |
| Plnh. | Otiorhynchus spp. |
| Plnh. | Aleurothrixus spp. |
| Plnh. | Aleyrodes spp. |
| Plnh. | Aonidiella spp. |
| Plnh. | Aphididae spp. |
| Plnh. | Aphis spp. |
| Plnh. | Bemisia tabaci |
| Plnh. | Empoasca spp. |
| Plnh. | Mycus spp. |
| Plnh. | Nephotettix spp. |
| Plnh. | Nilaparvata spp. |
| Plnh. | Pseudococcus spp. |
| Plnh. | Psylla spp. |
| Plnh. | Quadraspidiotus spp. |
| Plnh. | Schizaphis spp. |
| Plnh. | Trialeurodes spp. |
| Plnh. | Lyriomyza spp. |
| Plnh. | Oscinella spp. |
| Plnh. | Phorbia spp. |
| Plnh. | Frankliniella spp. |
| Plnh. | Thrips spp. |
| Plnh. | Scirtothrips aurantii |
| Plnh. | Aceria spp. |
| Plnh. | Acutus spp. |
| Plnh. | Brevipalpus spp. |
| Plnh. | Panonychus spp. |
| Plnh. | Phyllocoptruta spp. |
| Plnh. | Tetranychus spp. |
| Plnh. | Heterodera spp. |
| Plnh. | Meloidogyne spp. |
| PLec. | Adoxophyes spp. |
| PLec. | Agrotis spp. |
| PLec. | Alabama argillaceae |
| PLec. | Anticarsia gemmatalis |
| PLec. | Chilo spp. |
| PLec. | Clysia ambiguella |
| PLec. | Crocidolomia binotalis |
| PLec. | Cydia spp. |
| PLec. | Diparopsis castanea |
| PLec. | Earias spp. |
| PLec. | Ephestia spp. |
| PLec. | Heliothis spp. |
| PLec. | Hellula undalis |
| PLec. | Keiferia lycopersicella |
| PLec. | Leucoptera scitella |
| PLec. | Lithocollethis spp. |
| PLec. | Lobesia botrana |
| PLec. | Ostrinia nubilalis |
| PLec. | Pandemis spp. |
| PLec. | Pectinophora gossyp. |
| PLec. | Phyllocnistis citrella |
| PLec. | Pieris spp. |
| PLec. | Plutella xylostella |
| PLec. | Scirpophaga spp. |
| PLec. | Sesamia spp. |
| PLec. | Sparganothis spp. |
| PLec. | Spodoptera spp. |
| PLec. | Tortrix spp. |
| PLec. | Trichoplusia ni |
| PLec. | Agriotes spp. |
| PLec. | Anthonomus grandis |
| PLec. | Curculio spp. |
| PLec. | Diabrotica balteata |
| PLec. | Leptinotarsa spp. |
| PLec. | Lissorhoptrus spp. |
| PLec. | Otiorhynchus spp. |
| PLec. | Aleurothrixus spp. |
| PLec. | Aleyrodes spp. |
| PLec. | Aonidiella spp. |
| PLec. | Aphididae spp. |
| PLec. | Aphis spp. |
| PLec. | Bemisia tabaci |
| PLec. | Empoasca spp. |
| PLec. | Mycus spp. |
| PLec. | Nephotettix spp. |
| PLec. | Nilaparvata spp. |
| PLec. | Pseudococcus spp. |
| PLec. | Psylia spp. |
| PLec. | Quadraspidiotus spp. |
| PLec. | Schizaphis spp. |
| PLec. | Trialeurodes spp. |
| PLec. | Lyriomyza spp. |
| PLec. | Oscinella spp. |
| PLec. | Phorbia spp. |
| PLec. | Frankliniella spp. |
| PLec. | Thrips spp. |
| PLec. | Scirtothnps aurantii |
| PLec. | Aceria spp. |
| PLec. | Aculus spp. |
| PLec. | Brevipalpus spp. |
| PLec. | Panonychus spp. |
| PLec. | Phyllocoptruta spp. |
| PLec. | Tetranychus spp. |
| PLec. | Heterodera spp. |
| PLec. | Meloidogyne spp. |
| Aggl. | Adoxophyes spp. |
| Aggl. | Agrotis spp. |
| Aggl. | Alabama |
| | argillaceae |
| Aggl. | Anticarsia gemmatalis |
| Aggl. | Chilo spp. |
| Aggl. | Clysia ambiguella |
| Aggl. | Crocidolomia |
| | binotalis |
| Aggl. | Cydia spp. |
| Aggl. | Diparopsis |
| | castanea |
| Aggl. | Earias spp. |
| Aggl. | Ephestia spp. |
| Aggl. | Heliothis spp. |
| Aggl. | Hellula undalis |
| Aggl. | Keiferia |
| | lycopersicella |
| Aggl. | Leucoptera scitella |
| Aggl. | Lithocollethis spp. |
| Aggl. | Lobesia botrana |
| Aggl. | Ostrinia nubilalis |
| Aggl. | Pandemis spp. |
| Aggl. | Pectinophora gossyp. |
| Aggl. | Phyllocnistis citrella |
| Aggl. | Pieris spp. |
| Aggl. | Plutiia xylostella |
| Aggl. | Scirpophaga spp. |
| Aggl. | Sesamia spp. |
| Aggl. | Sparganothis spp. |
| Aggl. | Spodoptera spp. |
| Aggl. | Tortrix spp. |
| Aggl. | Trichoplusia ni |
| Aggl. | Agriotes spp. |
| Aggl. | Anthonomus grandis |
| Aggl. | Curculio spp. |
| Aggl. | Diabrotica balteata |
| Aggl. | Leptinotarsa spp. |
| Aggl. | Lissorhoptrus spp. |
| Aggl. | Otiorhynchus spp. |
| Aggl. | Aleurothrixus spp. |
| Aggl. | Aleyrodes spp. |
| Aggl. | Aonidiella spp. |
| Aggl. | Aphididae spp. |
| Aggl. | Aphis spp. |
| Aggl. | Bemisia tabaci |
| Aggl. | Empoasca spp. |
| Aggl. | Mycus spp. |
| Aggl. | Nephotettix spp. |
| Aggl. | Nilaparvata spp. |
| Aggl. | Pseudococcus spp. |
| Aggl. | Psylla spp. |
| Aggl. | Quadraspidiotus spp. |
| Aggl. | Schizaphis spp. |
| Aggl. | Trialeurodes spp. |
| Aggl. | Lyriomyza spp. |
| Aggl. | Oscinella spp. |
| Aggl. | Phorbia spp. |
| Aggl. | Frankliniella spp. |
| Aggl. | Thrips spp. |
| Aggl. | Scirtothrips auranti |
| Aggl. | Aceria spp. |
| Aggl. | Aculus spp. |
| Aggl. | Brevipalpus spp. |
| Aggl. | Panonychus spp. |
| Aggl. | Phyllocoptruta spp |
| Aggl. | Tetranychus spp. |
| Aggl. | Heterodera spp. |
| Aggl. | Meloidogyne spp. |
| CO | Adoxophyes spp. |
| CO | Agrotis spp. |
| CO | Alabama argiliaceae |
| CO | Anticarsia gemmatalis |
| CO | Chilo spp. |
| CO | Ciysia ambiguella |
| CO | Crocidolomia binotalis |
| CO | Cydia spp. |
| CO | Diparopsis castanea |
| CO | Earias spp. |
| CO | Ephestia spp. |
| CO | Heliothis spp. |
| CO | Hellula undalis |
| CO | Keiferia lycopersicella |
| CO | Leucoptera scitella |
| CO | Lithocollethis spp. |
| CO | Lobesia botrana |
| CO | Ostrinia nubilalis |
| CO | Pandemis spp. |
| CO | Pectinophora gossyp. |
| CO | Phyllocnistis citrella |
| CO | Pieris spp. |
| CO | Plutella xylostella |
| CO | Scirpophaga spp. |
| CO | Sesamia spp. |
| CO | Sparganothis spp. |
| CO | Spodoptera spp. |
| CO | Tortrix spp. |
| CO | Trichoplusia ni |
| CO | Agriotes spp. |
| CO | Anthonomus grandis |
| CO | Curculio spp. |
| CO | Diabrotica balteata |
| CO | Leptinotarsa spp. |
| CO | Lissorhoptrus spp. |
| CO | Otiorhynchus spp. |
| CO | Aleurothrixus spp. |
| CO | Aleyrodes spp. |
| CO | Aonidielia spp. |
| CO | Aphididae spp. |
| CO | Aphis spp. |
| CO | Bemisia tabaci |
| CO | Empoasca spp. |
| CO | Mycus spp. |
| CO | Nephotettix spp. |
| CO | Nilaparvata spp. |
| CO | Pseudococcus spp. |
| CO | Psylla spp. |
| CO | Quadraspidiotus spp. |
| CO | Schizaphis spp. |
| CO | Trialeurodes spp. |
| CO | Lyriomyza spp. |
| CO | Oscinella spp. |
| CO | Phorbia spp. |
| CO | Frankliniella spp. |
| CO | Thrips spp. |
| CO | Scirtothrips aurantii |
| CO | Aceria spp. |
| CO | Acutus spp. |
| CO | Brevipalpus spp. |
| CO | Panonychus spp. |
| CO | Phyllocoptruta spp. |
| CO | Tetranychus spp. |
| CO | Heterodera spp. |
| CO | Meloidogyne spp. |
| CH | Adoxophyes spp. |
| CH | Agrotis spp. |
| CH | Alabama argillaceae |
| CH | Anticarsia |
| | gemmatalis |
| CH | Chilo spp. |
| CH | Clysia ambiguella |
| CH | Crocidolomia binotalis |
| CH | Cydia spp. |
| CH | Diparopsis castanea |
| CH | Earias spp. |
| CH | Ephestia spp. |
| CH | Heliothis spp. |
| CH | Hellula undalis |
| CH | Keiferia lycopersicella |
| CH | Leucoptera scitella |
| CH | Lithocollethis spp. |
| CH | Lobesia botrana |
| CH | Ostrinia nubilalis |
| CH | Pandemis spp. |
| CH | Pectinophora gossyp. |
| CH | Phyllocnistis citrella |
| CH | Pieris spp. |
| CH | Plutella xylostella |
| CH | Scirpophaga spp. |
| CH | Sesamia spp. |
| CH | Sparganothis spp. |
| CH | Spodoptera spp. |
| CH | Tortrix spp. |
| CH | Trichoplusia ni |
| CH | Agriotes spp. |
| CH | Anthonomus |
| | grandis |
| CH | Curculio spp. |
| CH | Diabrotica balteata |
| CH | Leptinotarsa spp. |
| CH | Lissorhoptrus spp. |
| CH | Otiorhynohus spp. |
| CH | Aleurothrixus spp. |
| CH | Aleyrodes spp. |
| CH | Aonidiella spp. |
| CH | Aphididae spp. |
| CH | Aphis spp. |
| CH | Bemisia tabaci |
| CH | Empoasca spp. |
| CH | Mycus spp. |
| CH | Nephotettix spp. |
| CH | Nilaparvata spp. |
| CH | Pseudococcus spp. |
| CH | Psylla spp. |
| CH | Quadraspidiotus spp. |
| CH | Schizaphis spp. |
| CH | Trialeurodes spp. |
| CH | Lyriomyza spp. |
| CH | Oscinella spp. |
| CH | Phorbia spp. |
| CH | Frankliniella spp. |
| CH | Thrips spp. |
| CH | Scirtothrips aurantii |
| CH | Aceria spp. |
| CH | Aculus spp. |
| CH | Brevipalpus spp. |
| CH | Panonychus spp. |
| CH | Phyllocoptruta spp. |
| CH | Tetranychus spp. |
| CH | Heterodera spp. |
| CH | Meloidogyne spp. |
| SS | Adoxophyes spp. |
| SS | Agrotis spp. |
| SS | Alabama argillaceae |
| SS | Anticarsia gemmatalis |
| SS | Chilo spp. |
| SS | Clysia ambiguella |
| SS | Crocidolomia binotalis |
| SS | Cydia spp. |
| SS | Diparopsis castanea |
| SS | Earias spp. |
| SS | Ephestia spp. |
| SS | Heliothis spp. |
| SS | Hellula undalis |
| SS | Keiferia lycopersicella |
| SS | Leucoptera scitella |
| SS | Lithocollethis spp. |
| SS | Lobesia botrana |
| SS | Ostrinia nubilalis |
| SS | Pandemis spp. |
| SS | Pectinophora gossyp. |
| SS | Phyllocnistis citrella |
| SS | Pieris spp. |
| SS | Plutella xylostella |
| SS | Scirpophaga spp. |
| SS | Sesamia spp. |
| SS | Sparganothis spp. |
| SS | Spodoptera spp. |
| SS | Tortrix spp. |
| SS | Trichopiusia ni |
| SS | Agriotes spp. |
| SS | Anthonomus grandis |
| SS | Curculio spp. |
| SS | Diabrotica balteata |
| SS | Leptinotarsa spp. |
| SS | Lissorhoptrus spp. |
| SS | Otiorhynchus spp. |
| SS | Aleurothrixus spp. |
| SS | Aleyrodes spp. |
| SS | Aonidielia spp. |
| SS | Aphididae spp. |
| SS | Aphis spp. |
| SS | Bemisia tabaci |
| SS | Empoasca spp. |
| SS | Mycus spp. |
| SS | Nephotettix spp. |
| SS | Nilaparvata spp. |
| SS | Pseudococcus spp. |
| SS | Psylla spp. |
| SS | Quadraspidiotus spp. |
| SS | Schizaphis spp. |
| SS | Trialeurodes spp. |
| SS | Lyriomyza spp. |
| SS | Oscinella spp. |
| SS | Phorbia spp. |
| SS | Frankliniella spp. |
| SS | Thrips spp. |
| SS | Scirtothrips aurantii |
| SS | Aceria spp. |
| SS | Aculus spp. |
| SS | Brevipalpus spp. |
| SS | Panonychus spp. |
| SS | Phyllocoptruta spp. |
| SS | Tetranychus spp. |
| SS | Heterodera spp. |
| SS | Meloidogyne spp. |
| HO | Adoxophyes spp. |
| HO | Agrotis spp. |
| HO | Alabama argillaceae |
| HO | Anticarsia gemmatalis |
| HO | Chilo spp. |
| HO | Clysia ambiguella |
| HO | Crocidolomia binotalis |
| HO | Cydia spp. |
| HO | Diparopsis castanea |
| HO | Earias spp. |
| HO | Ephestia spp. |
| HO | Heliothis spp. |
| HO | Hellula undalis |
| HO | Keiferia lycopersicella |
| HO | Leucoptera scitella |
| HO | Lithocollethis spp. |
| HO | Lobesia botrana |
| HO | Ostrinia nubilalis |
| HO | Pandemis spp. |
| HO | Pectinophora gossypiella |
| HO | Phyllocnistis citrella |
| HO | Pieris spp. |
| HO | Plutella xylostella |
| HO | Scirpophaga spp. |
| HO | Sesamia spp. |
| HO | Sparganothis spp. |
| HO | Spodoptera spp. |
| HO | Tortrix spp. |
| HO | Trichoplusia ni |
| HO | Agriotes spp. |
| HO | Anthonomus grandis |
| HO | Curculio spp. |
| HO | Diabrotica balteata |
| HO | Leptinotarsa spp. |
| HO | Lissorhoptrus spp. |
| HO | Otiorhynchus spp. |
| HO | Aleurothrixus spp. |
| HO | Aleyrodes spp. |
| HO | Aonidiella spp. |
| HO | Aphididae spp. |
| HO | Aphis spp. |
| HO | Bemisia tabaci |
| HO | Empoasca spp. |
| HO | Mycus spp. |
| HO | Nephotettix spp. |
| HO | Nilaparvata spp. |
| HO | Pseudococcus spp. |
| HO | Psylla spp. |
| HO | Quadraspidiotus spp. |
| HO | Schizaphis spp. |
| HO | Trialeurodes spp. |
| HO | Lyriomyza spp. |
| HO | Oscinella spp. |
| HO | Phorbia spp. |
| HO | Frankliniella spp. |
| HO | Thrips spp. |
| HO | Scirtothrips aurantii |
| HO | Aceria spp. |
| HO | Acutus spp. |
| HO | Brevipalpus spp. |
| HO | Panonychus spp. |
| HO | Phyllocoptruta spp. |
| HO | Tetranychus spp. |
| HO | Heterodera spp. |
| HO | Meloidogyne spp. |

**Tabelle 3:**

| Abkürzungen: | | |
|---|---|---|
| Acetyl-CoA-Carboxylase: ACCase | | |
| Acetolactatsynthase: ALS | | |
| Hydroxyphenylpyruvat-Dioxygenase: HPPD | | |
| Hemmung der Proteinsynthese: IPS | | |
| Hormonimitation: HO | | |
| Glutaminsynthetase: GS | | |
| Protoporphyrinogenoxidase: PROTOX | | |
| 5-Enolpyruvyl-3-Phosphoshikimat-Synthase: EPSPS | | |

| Prinzip | Toleranz gegenüber | Pflanze |
|---|---|---|
| ALS | Sulfonylharnstoffverbindungen usw.*** | Baumwolle |
| ALS | Sulfonylharnstoffverbindungen usw. *** | Reis |
| ALS | Sulfonylharnstoffverbindungen usw. *** | Brassica |
| ALS | Sulfonylharnstoffverbindungen usw. *** | Kartoffeln |
| ALS | Sulfonylharnstoffverbindungen usw. *** | Tomaten |
| ALS | Sulfonylharnstoffverbindungen usw. *** | Kürbis |
| ALS | Sulfonylharnstoffverbindungen usw. *** | Sojabohnen |
| ALS | Sulfonylharnstoffverbindungen usw. *** | Mais |
| ALS | Sulfonylharnstoffverbindungen usw. *** | Weizen |
| ALS | Sulfonylharnstoffverbindungen usw. *** | Kernobst |
| ALS | Sulfonylharnstoffverbindungen usw. *** | Steinobst |
| ALS | Sulfonylharnstoffverbindungen usw. *** | Zitrus |
| ACCase | +++ | Baumwolle |
| ACCase | +++ | Reis |
| ACCase | +++ | Brassica |
| ACCase | +++ | Kartoffel |
| ACCase | +++ | Tomaten |
| ACCase | +++ | Kürbis |
| ACCase | +++ | Sojabohnen |
| ACCase | +++ | Mais |
| ACCase | +++ | Weizen |
| ACCase | +++ | Kernobst |
| ACCase | +++ | Steinobst |
| ACCase | +++ | Zitrus |
| HPPD | Isoxaflutol, Isoxachlotol, Sulcotrion, Mesotrion | Baumwolle |
| HPPD | Isoxaflutol, Isoxachlotol, Sulcotrion, Mesotrion | Reis |
| HPPD | Isoxaflutol, Isoxachlotol, Sulcotrion, Mesotrion | Brassica |
| HPPD | Isoxaflutol, Isoxachlotol, Sulcotrion, Mesotrion | Kartoffeln |
| HPPD | Isoxaflutol, Isoxachlotol, Sulcotrion, Mesotrion | Tomaten |
| HPPD | Isoxaflutol, Isoxachlotol, Sulcotrion, Mesotrion | Kürbis |
| HPPD | Isoxaflutol, Isoxachlotol, Sulcotrion, Mesotrion | Soj abohnen |
| HPPD | Isoxaflutol, Isoxachlotol, Sulcotrion, Mesotrion | Mais |
| HPPD | Isoxaflutol, Isoxachlotol, Sulcotrion, Mesotrion | Weizen |
| HPPD | Isoxaflutol, Isoxachlotol, Sulcotrion, Mesotrion | Kernobst |
| HPPD | Isoxaflutol, Isoxachlotol, Sulcotrion, Mesotrion | Steinobst |
| HPPD | Isoxaflutol, Isoxachlotol, Sulcotrion, Mesotrion | Zitrus |
| Nitrilase | Bromoxynil, Loxynil | Baumwolle |
| Nitrilase | Bromoxynil, Loxynil | Reis |
| Nitrilase | Bromoxynil, Loxynil | Brassica |
| Nitrilase | Bromoxynil, Loxynil | Kartoffeln |
| Nitrilase | Bromoxynil, Loxynil | Tomaten |
| Nitrilase | Bromoxynil, Loxynil | Kürbis |
| Nitrilase | Bromoxynil, Loxynil | Sojabohnen |
| Nitrilase | Bromoxynil, Loxynil | Mais |
| Nitrilase | Bromoxynil, Loxynil | Weizen |
| Nitrilase | Bromoxynil, Loxynil | Kernobst |
| Nitrilase | Bromoxynil, Loxynil | Steinobst |
| Nitrilase | Bromoxynil, Loxynil | Zitrus |
| IPS | Chloroactanilide &&& | Baumwolle |
| IPS | Chloroactanilide &&& | Reis |
| IPS | Chloroactanilid &&& | Brassica |
| IPS | Chloroactanilide &&& | Kartoffeln |
| IPS | Chloroactanilide &&& | Tomaten |
| IPS | Chloroactanilide &&& | Kürbis |
| IPS | Chloroactanilide &&& | Sojabohnen |
| IPS | Chloroactanilide &&& | Mais |
| IPS | Chloroactanilide &&& | Weizen |
| IPS | Chloroactanilide &&& | Kernobst |
| IPS | Chloroactanilide &&& | Steinobst |
| IPS | Chloroactanilide &&& | Zitrus |
| HOM | 2,4-D, Mecoprop-P | Baumwolle |
| HOM | 2,4-D, Mecoprop-P | Reis |
| HOM | 2,4-D, Mecoprop-P | Brassica |
| HOM | 2,4-D, Mecoprop-P | Kartoffeln |
| HOM | 2,4-D, Mecoprop-P | Tomaten |
| HOM | 2,4-D, Mecoprop-P | Kürbis |
| HOM | 2,4-D, Mecoprop-P | Sojabohnen |
| HOM | 2,4-D, Mecoprop-P | Mais |
| HOM | 2,4-D, Mecoprop-P | Weizen |
| HOM | 2,4-D, Mecoprop-P | Kernobst |
| HOM | 2,4-D, Mecoprop-P | Steinobst |
| HOM | 2,4-D, Mecoprop-P | Zitrus |
| PROTOX | Protox-Inhibitoren /// | Baumwolle |
| PROTOX | Protox-Inhibitoren /// | Reis |
| PROTOX | Protox-Inhibitoren /// | Brassica |
| PROTOX | Protox-Inhibitoren /// | Kartoffeln |
| PROTOX | Protox-Inhibitoren /// | Tomaten |
| PROTOX | Protox-Inhibitoren /// | Kürbis |
| PROTOX | Protox-Inhibitoren /// | Sojabohnen |
| PROTOX | Protox-Inhibitoren /// | Mais |
| PROTOX | Protox-Inhibitoren /// | Weizen |
| PROTOX | Protox-Inhibitoren /// | Kernobst |
| PROTOX | Protox-Inhibitoren /// | Steinobst |
| PROTOX | Protox-Inhibitoren /// | Zitrus |
| EPSPS | Glyphosat und/oder Sulphosat | Baumwolle |
| EPSPS | Glyphosat und/oder Sulphosat | Reis |
| EPSPS | Glyphosat und/oder Sulphosat | Brassica |
| EPSPS | Glyphosat und/oder Sulphosat | Kartoffeln |
| EPSPS | Glyphosat und/oder Sulphosat | Tomaten |
| EPSPS | Glyphosat und/oder Sulphosat | Kürbis |
| EPSPS | Glyphosat und/oder Sulphosat | Sojabohnen |
| EPSPS | Glyphosat und/oder Sulphosat | Mais |
| EPSPS | Glyphosat und/oder Sulphosat | Weizen |
| EPSPS | Glyphosat und/oder Sulphosat | Kernobst |
| EPSPS | Glyphosat und/oder Sulphosat | Steinobst |
| EPSPS | Glyphosat und/oder Sulphosat | Zitrus |
| GS | Gluphosinat und/oder Bialaphos | Baumwolle |
| GS | Gluphosinat und/oder Bialaphos | Reis |
| GS | Gluphosinat und/oder Bialaphos | Brassica |
| GS | Gluphosinat und/oder Bialaphos | Kartoffeln |
| GS | Gluphosinat und/oder Bialaphos | Tomaten |
| GS | Gluphosinat und/oder Bialaphos | Kürbis |
| GS | Gluphosinat und/oder Bialaphos | Sojabohnen |
| GS | Gluphosinat und/oder Bialaphos | Mais |
| GS | Gluphosinat und/oder Bialaphos | Weizen |
| GS | Gluphosinat und/oder Bialaphos | Kernobst |
| GS | Gluphosinat und/oder Bialaphos | Stein-obst |
| GS | Gluphosinat und/oder Bialaphos | Zitrus |

| | | |
|---|---|---|
| *** einbezogen sind Sulfonylharnstoffverbindungen, Imidazolinone, Triazolpyrimidine, Dimethoxypyrimidine und N-Acylsulfonamide: | | |

Sulfonylharnstoffverbindungen wie Chlorsulfuron, Chlorimuron, Ethamethsulfuron, Metsulfuron, Primisulfuron, Prosulfuron, Triasulfuron, Cinosulfuron, Trifusulfuron, Oxasulfuron, Bensulfuron, Tribenuron, ACC 322140, Fluzasulfuron, Ethoxysulfuron, Fluzasdulfuron, Nicosulfuron, Rimsulfuron, Thifensulfuron, Pyrazosulfuron, Clopyrasulfuron, NC 330, Azimsulfuron, Imazosulfuron, Sulfosulfuron, Amidosulfuron, Flupyrsulfuron, CGA 362622

Imidazolinone wie Imazamethabenz, Imazaquin, Imazamethypyr, Imazethapyr, Imazapyr und Imazamox;

Triazolpyrimidine wie DE 511, Flumetsulam und Chloransulam;

Dimethoxypyrimidine wie etwa Pyrithiobac, Pyriminobac, Bispyribac und Pyribenzoxim.
+++ Tolerant gegenüber Diclofop-methyl, Fluazifop-P-butyl, Haloxyfop-P-methyl, Haloxyfop-P-ethyl, Quizalafop-P-ethyl, Clodinafop-propargyl, Fenoxaprop-ethyl, Tepraloxydim, Alloxydim, Sethoxydim, Cycloxydim, Cloproxydim, Tralkoxydim, Butoxydim, Caloxydim, Clefoxydim, Clethodim.
&&& Chloroacetanilide wie etwa Alachlor, Acetochlor, Dimethenamid
/// Protox-Inhibitoren: Zum Beispiel Diphenylether wie etwa Acifluorfen, Aclonifen, Bifenox, Chlornitrofen, Ethoxyfen, Fluoroglycofen, Fomesafen, Lactofen, Oxyfluorfen; Imide wie etwa Azafenidin, Carfentrazone-ethyl, Cinidon-ethyl, Flumiclorac-pentyl, Flumioxazin, Fluthiacet-methyl, Oxadiargyl, Oxadiazon, Pentoxazone, Sulfentrazone, Imide und andere Verbindungen wie etwa Flumipropyn, Flupropacil, Nipyraclofen and Thidiazimin; sowie Fluazola und Pyraflufen-ethyl.

**Tabelle 4**

| Liste von Beispielen genetisch modifizierter Pflanzen mit modifizierten Eigenschaften: | |
|---|---|
| Genetisch modifizierte Pflanzen | Genetisch modifizierte Eigenschaften |
| Dianthus caryophyllus (Nelke) Linie 66 [Florigene Pty. Ltd.] | Verlängerte Haltbarkeit durch reduzierte Ethylen-Akkumulation aufgrund der Expression der ACC Synthase; Sulfonylharnstoff-Herbizid Toleranz |
| | |
| Dianthus caryophyllus (Nelke) Linien 4, 11, 15, 16 [Florigene Pty. Ltd.] | Modifizierte Blütenfarbe; Sulfonylharnstoff-Herbizid Toleranz |
| | |
| Dianthus caryophyllus (Nelke) Linien 959A, 988A, 1226A, 1351A, 1363A, 1400A [Florigene Pty. Ltd.] | Modifizierte Blütenfarbe; Sulfonylharnstoff-Herbizid Toleranz |
| | |
| Brassica napus (Argentinischer Raps) Linien 23-18-17, 23-198 [Monsanto Company] | Modifizierter Fettsäuregehalt im Samen |
| | |
| Zea mays L. (Mais) Linien REN-∅∅∅38-3 (LY038) [Monsanto Company] | Erhöhter Lysingehalt |
| | |
| Zea mays L. (Mais) Linien REN-∅∅∅38-3, MON-∅∅81∅-6 (MON-∅∅81∅-6 x LY038) [Monsanto Company] | Erhöhter Lysingehalt, Resistenz gegen den Maiszünsler; |
| | |
| Cucumis melo (Melone) Linien A, B [Agritope Inc.] | Verzögerte Reife durch Expression der S-Adenosylmethionin Hydrolase |
| | |
| Carica papaya (Papaya) Linien 55-1/63-1 [Cornell University] | Resistenz gegen den Papaya Ringspot Virus (PRSV) |
| | |
| Solanum tuberosum L. (Kartoffel) Linien RBMT21-129, RBMT21-350, RBMT22-082 [Monsanto Company] | Resistenz gegen den Colorado Kartoffelkäfer und den Kartoffelblattrollvirus (PLRV) |
| | |
| Solanum tuberosum L. (Kartoffel) Linien RBMT15-101, SEMT15-02, SEMT15-15 [Monsanto Company] | Resistenz gegen den Colorado Kartoffelkäfer und den Kartoffelvirus Y (PVY) |
| | |
| Glycine max L. (Sojabohne) Linien DD-∅26∅∅5-3 (G94-1, G94-19, G168 [DuPont Canada Agricultural Products] | Modifizierter Fettsäuregehalt im Samen, insbesondere erhöhter Ölsäuregehalt |
| | |
| Glycine max L. (Sojabohne) Linien OT96-15 [Agriculture & Agri-Food Canada] | Modifizierter Fettsäuregehalt im Samen, insbesondere reduzierter Linolensäuregehalt |
| | |
| Cucurbita pepo (Kürbis) Linie ZW20 [Upjohn (USA); Seminis Vegetable Inc. (Canada)] | Resistenz gegen virale Infektionen, Wassermelonen Mosaik Virus (WMV) 2 und Zucchini Gelbmosaik Virus (ZYMV) |
| | |
| Cucurbita pepo (Kürbis) Linie CZW-3 [Asgrow (USA); Seminis Vegetable Inc. (Canada)] | Resistenz gegen virale Infektionen, Gurken Mosaik Virus (CMV), Wassermelonen Mosaik Virus (WMV) 2 und Zucchini Gelbmosaik Virus (ZYMV) |
| | |
| Nicotiana tabacum L. (Tabak) Linie Vector 21-41 [Vector Tobacco] | Reduzierter Nikotingehalt |
| | |
| Lycopersicon esculentum (Tomate) Linie 1345-4 [DNA Plant Technology] | Verlängerte Haltbarkeit durch reduzierte Ethylen-Akkumulation aufgrund der Expression der ACC Synthase |
| | |
| Lycopersicon esculentum (Tomate) Linie 35 1 N [Agritope Inc.] | Verzögerte Reife durch Expression der S-Adenosylmethionin Hydrolase |
| | |
| Lycopersicon esculentum (Tomate) Linie CGN-89322-3 (8338) [Monsanto Company] | Verzögerte Reife durch Expression von ACCd |
| | |
| Lycopersicon esculentum (Tomate) Linien B, Da, F [Zeneca Seeds] | Verzögertes Weichwerden ("anti-Matsch") durch eine verminderte Expression der Polygalacturonase |
| | |
| Lycopersicon esculentum (Tomate) Linie CGN-89564-2 (FLAVR SAVR) [Calgene Inc.] | Verzögertes Weichwerden ("anti-Matsch") durch eine verminderte Expression der Polygalacturonase |
| | |
| Baumwolle Linie DP444 BG/RR [Delta and Pine Land Co.] | Frühe Reifung, stacked gene Sorte mit Lepidopteren-Resistenz durch Einklonieren der Gene zur Bildung des Cry1Ac Toxins (Bollgard) und Glyphosate-Resistenz (Roundup Ready) |
| | |
| Mais VSN-BT (MON 810) | Resistenz gegen den Maiszünsler |
| Mais HCL201 CRW2RR2xLH324 | Resistenz gegen Käfer wie Maiswurzelbohrer sowie Glyphosate-Resistenz (Roundup Ready) |

**Tabelle 5**

| **Nr.** | **Linie/ Merkmal** | **Handelsname** | **Pflanze** | **Unternehmen** | **genetisch modifizierte Eigenschaften** |
|---|---|---|---|---|---|
| B-1 | ASR368 | | *Agrostisstolonifera Weißes Straußgras* | Scotts Seeds | Glyphosate-Toleranz, die durch Insertieren eines modifizierten, für die 5-Enolpyruvylshikimat-3-phosphatsynthase (EPSPS) codierenden Gens aus Agrobacterium tumefaciens erhalten wurde. |
| B-2 | H7-1 | Roundup Ready Sugar Beet | *Beta vulgaris* (Zuckerrübe) | Monsanto Company | Zuckerrübe mit Toleranz für das Herbizid Glyphosate; Erzeugung durch Insertieren eines Gens für das Enzym 5- Enolypyruvylshikimat-3-phosphate synthase (EPSPS) aus dem Agrobacterium tumefaciens-Stamm CP4. |
| B-3 | T120-7 | | *Beta vulgaris* (Zuckerrübe) | Bayer CropScience (Aventis CropScience (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-4 | GTSB77 | | *Beta vulgaris* (Zuckerrübe) | Novartis Seeds; Monsanto Company | Zuckerrübe mit Toleranz für das Herbizid Glyphosate; Erzeugung durch Insertieren eines Gens für das Enzym 5- Enolypyruvylshikimat-3-phosphate synthase (EPSPS) aus dem Agrobacterium tumefaciens-Stamm CP4. |
| B-5 | 23-18-17, 23-198 | | *Brassica napus* (Argentinischer Canola-Raps) | Monsanto Company (ehemals Calgene) | Canola-Raps mit hohem Laurinsäure- (12:0) und Myristinsäure-(14:0)-Gehalt; Erzeugung durch Insertieren eines Gens für Thioesterase aus dem Kalifornischen Lorbeer (Umbellularia californica). |
| B-6 | 45A37, 46A40 | | *Brassica napus* (Argentinischer Canola-Raps) | Pioneer Hi-Bred International Inc. | Canola-Raps mit hohem Ölsäureund niedrigem Linolensäuregehalt; Erzeugung durch eine Kombination von chemischer Mutagenese für die Selektion auf eine Fettsäuredesaturase-Mutante mit erhöhtem Ölsäuregehalt und traditionelle Rückkreuzung zur Einführung des Merkmals niedriger Linolensäuregehalt. |
| B-7 | 46A12, 46A16 | | *Brassica napus* (Argentinischer Canola-Raps) | Pioneer Hi-Bred International Inc. | Kombination von chemischer Mutagenese zur Erzielung des Merkmals hoher Ölsäuregehalt und traditioneller Züchtung mit eingetragenen Canola-Rapssorten. |
| B-8 | GT200 | | *Brassica napus* (Argentinischer Canola-Raps) | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. |
| B-9 | GT73, RT73 | Roundup Ready ™ canola | *Brassica napus* (Argentinischer Canola-Raps) | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. |
| B-10 | HCN10 | | *Brassica napus* (Argentinischer Canola-Raps) | Aventis CropScience | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-11 | Topas 19/2 (HCN92) | InVigor® Canola | *Brassica napus* (Argentinischer Canola-Raps) | Bayer CropScience (Aventis CropScience (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-12 | MS1, RF1 =>PGS1 | | *Brassica napus* (Argentinischer Canola-Raps) | Aventis Crop-Science (ehemals Plant Genetic Systems) | Pollensterilitäts/Fertifitätsrestorations/Bestäubungskontrollsystem mit Toleranz für das Herbizid Glufosinate. Die MS-Linien enthielten das Barnase-Gen aus Bacillus amyloliquefaciens, die RF-Linien enthielten das barstar-Gen aus demselben Bakterium, und beide Linien enthielten das Gen für die Phosphinotricin-N-Acetyltransferase (PAT) aus Streptomyces hygroscopicus. |
| B-13 | MS1, RF2 =>PGS2 | | *Brassica napus* (Argentinischer Canola-Raps) | Aventis Crop-Science (ehemals Plant Genetic Systems) | Pollensterilitäts/Fertifitätsrestorations/Bestäubungskontrollsystem mit Toleranz für das Herbizid Glufosinate. Die MS-Linien enthielten das Barnase-Gen aus Bacillus amyloliquefaciens, die RF-Linien enthielten das barstar-Gen aus demselben Bakterium, und beide Linien enthielten das Gen für die Phosphinotricin-N-Acetyltransferase (PAT) aus Streptomyces hygroscopicus. |
| B-14 | MS8xRF3 | InVigor® Canola | *Brassica napus* (Argentinischer Canola-Raps) | Bayer CropScience (Aventis CropScience (AgrEvo)) | Pollensterilitäts/Fertilitätsrestorations/Bestäubungskontrollsystem mit Toleranz für das Herbizid Glufosinate. Die MS-Linien enthielten das Barnase-Gen aus Bacillus amyloliquefaciens, die RF-Linien enthielten das barstar-Gen aus demselben Bakterium, und beide Linien enthielten das Gen für die Phosphinotricin-N-Acetyltransferase (PAT) aus Streptomyces hygroscopicus. |
| B-15 | NS738, NS1471, NS1473 | | *Brassica napus* (Argentinischer Canola-Raps) | Pioneer Hi-Bred International Inc. | Selektion von somaklonalen Varianten mit veränderten Acetolactatsynthase (ALS)-Enzymen und anschließende chemische Mutagenese. Zwei Linien (P1, P2) mit Modifikationen an verschiedenen, nicht gekoppelten Loci wurden ursprünglich selektiert. NS738 enthält nur die P2-Mutation. |
| B-16 | OXY-235 | | *Brassica napus* (Argentinischer Canola-Raps) | Aventis CropScience (ehemals Rhöne Poulenc Inc.) | Toleranz für die Herbizide Bromoxynil und Ioxynil durch Einbau des Nitrilase-Gens (oxy) aus Klebsiella pneumoniae. |
| B-17 | MS8 | InVigor® Canola | *Brassica napus* (Argentinischer Canola-Raps) | Bayer CropScience | Merkmale: Glufosinate-Toleranz, Pollensterilitätsgene: bar, Barnase |
| B-18 | PHY14, PHY35 | | *Brassica napus* (Argentinischer Canola-Raps) | Aventis Crop-Science (ehemals Plant Genetic Systems) | Erzeugung der Pollensterilität wurde mittels Insertion des Barnase-Ribonukleasegens aus Bacillus amyloliquefaciens; Restoration der Fertilität durch Insertieren des barstar-RNase-Hemmers; Erzeugung der PPT-Resistenz wurde mittels PPT-Acetyltransferase (PAT) aus Streptomyces hygroscopicus. |
| B-19 | PHY36 | | *Brassica napus* (Argentinischer Canola-Raps) | Aventis Crop-Science (ehemals Plant Genetic Systems) | Erzeugung der Pollensterilität wurde mittels Insertion des Barnase-Ribonukleasegens aus Bacillus amyloliquefaciens; Restoration der Fertilität durch Insertieren des barstar-RNase-Hemmers; Erzeugung der PPT-Resistenz wurde mittels PPT-Acetyltransferase (PAT) aus Streptomyces hygroscopicus. |
| B-20 | RF1, (B93-101) | InVigor® Canola | *Brassica napus* (Argentinischer Canola-Raps) | Bayer CropScience | Gene: bar, barstar, Neomycinphosphotransferase II (npt II); Merkmale: Fertilitätsrestoration, Glufosinat-Toleranz, Kanamycinrestistenz |
| B-21 | RF2, (B94-101) | | *Brassica napus* (Argentinischer Canola-Raps) | Bayer CropScience | Gene: bar, barstar, Neomycinphosphotransferase II (npt II); Merkmale: Fertilitätsrestoration, Glufosinat-Toleranz, Kanamycinrestistenz |
| B-22 | RF3, ACS-BN∅∅3-6 | InVigor® Canola | *Brassica napus* (Argentinischer Canola-Raps) | Bayer CropScience | Merkmale: Fertilitätsrestoration, Glufosinat-Toleranz; Gene bar, barstar |
| B-23 | MS1 (B91-4) | InVigor® Canola | *Brassica napus* (Argentinischer Canola-Raps) | Bayer CropScience | Merkmale: Glufosinat-Toleranz, Kanamycinresistenz, Pollensterilität; Gene: bar, Barnase, Neomycin Phosphotransferase II (npt II) |
| B-24 | T45 (HCN28) | InVigor® Canola | *Brassica napus* (Argentinischer Canola-Raps) | Bayer CropScience (Aventis CropScience (AgrEvo)) | Einführen des für die PPT-Acetyltransferase (PAT) codierendes Gens aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. |
| B-25 | HCR-1 | | *Brassica rapa* (Polnischer Canola-Raps) | Bayer CropScience (Aventis CropScience(AgrEvo)) | Einführung des Merkmals Toleranz für das Herbizid Glufosinate-Ammonium aus der genetisch modifizierten B.napus-Linie B45. Dieses Merkmal wird von dem Gen für die Phosphinotricinacetyltransferase (PAT) aus S. viridochromogenes vermittelt. |
| B-26 | ZSR500/502 | | *Brassica rapa* (Polnischer Canola-Raps) | Monsanto Company | Einführung einer modifizierten 5-Enolpyruvylshikimat-3-phosphatsynthase (EPSPS) und eines Gens aus Achromobacter sp., das Glyphosate durch Umwandlung in Aminomethylphosphonsäure (AMPA) und Glyoxylat abbaut, mittels Artkreuzung mit GT73. |
| B-27 | 55-1/63-1 | | *Carica papaya* (Papaya) | Cornell University | Gegen das Papaya-Ringspot-Virus (PRSV) resistente Papaya, die durch Insertion der für das Hüllprotein (CP) codierenden Sequenzen von diesem Pflanzen-Potyvirus erzeugt wurde. |
| B-28 | RM3-3, RM3-4, RM3-6 | | *Cichorium intybus* (Chicoree) | Bejo Zaden BV | Erzeugung der Pollensterilität wurde mittels Insertion des Barnase-Ribonukleasegens aus Bacillus amyloliquefaciens; die PPT-Resistenz mittels dem bar-Gen aus S. hygroscopicus, das für das PAT-Enzym codiert. |
| B-29 | A, B | | *Cucumis meto* (Melone) | Agritope Inc. | Verringerte Akkumulation von S-Adenosylmethionin (SAM), und daher verringerte Ethylensynthese, durch Einführung des für die S-Adenosylmethioninhydrolase codierenden Gens. |
| B-30 | CZW-3 | | *Cucurbita pepo* (Kürbis) | Asgrow (USA); Seminis Vegetable Inc. (Kanada) | Gegen das Gurkenmosaikvirus (CMV), das Zucchini Yellows Mosaic-Virus (ZYMV) und das Wassermelonenmosaik-Virus (WMV) 2 resistenter Kürbis (Curcurbita pepo); Erzeugung durch Insertieren der für das Hüllprotein (CP) codierenden Sequenzen von jedem dieser Pflanzenviren in das Wirtsgenom. |
| B-31 | ZW20 | | *Cucurbita pepo* (Kürbis) | Upjohn (USA); Seminis Vegetable Inc. (Kanada) | Gegen das Zucchini Yellows Mosaic-Virus (ZYMV) und das Wassermelonenmosaik-Virus (WMV) 2 resistenter Kürbis (Curcurbita pepo); Erzeugung durch Insertieren der für das Hüllprotein (CP) codierenden Sequenzen von jedem dieser Pflanzen-Potyviren in das Wirtsgenom. |
| B-32 | 66 | | *Dianthus caryophyllus* (Nelke) | Florigene Pty Ltd. | Gegen Sulfonylharnstoffherbizide tolerante Nelken mit verzögerter Seneszenz; Erzeugung durch Insertieren einer verkürzten Kopie des Gens für die Aminocyclopropancyclase (ACC)-Synthase aus der Nelke zwecks Unterdrückung der Expression des endogenen nichtmodifizierten Gens, das für die normale Ethylenbiosynthese erforderlich ist. Die Toleranz für Sulfonylharnstoffherbizide wurde durch Einführung einer chlorsulfurontoleranten Version des Gens für die Acetolactatsynthase (ALS) aus Tabak erzeugt. |
| B-33 | 4,11,15,16 | | *Dianthus caryophyllus* (Nelke) | Florigene Pty Ltd. | Sulfonylharnstoffherbizidetolerante Nelken mit modifizierter Farbe, die dadurch erzeugt wurden, daß zwei Anthocyanbiosynthesegene insertiert wurden, deren Expression zu einer violett/malvenfarbenen Färbung führt. Die Toleranz für Sulfonylharnstoffherbizide wurde durch Einführung einer chlorsulfurontoleranten Version des Gens für die Acetolactatsynthase (ALS) aus Tabak erzeugt. |
| B-34 | 11363 | Moonshadow | *Dianthus caryophyllus* (Nelke) | Florigene Pty Ltd. | Merkmale: Färbung; Gene ALS, Dihydroflavonolreduktase (dfr), Flavonoid-3',5'-Hydroxylase (F3'5'H) |
| B-35 | 959A, 988A, 1226A, 1351A, 1363A, 1400A | | *Dianthus caryophyllus* (Nelke) | Florigene Pty Ltd. | Einführung von zwei Anthocyan-Biosynthesegenen, die zu einer violetten/malvenfarbenen Färbung führt; Einführung einer Variante der Acetolactatsynthase (ALS). |
| B-36 | 123.2. (40619) | Moonshade | *Dianthus caryophyllus* (Nelke) | Florigene Pty Ltd. | Merkmale: Färbung; Gene ALS, Dihydroflavonolreduktase (dfr), Flavonoid-3',5'-Hydroxylase (F3'5'H) |
| B-37 | 123.8.8 (40685) | Moonvista | *Dianthus caryophyllus* (Nelke) | Florigene Pty Ltd. | |
| B-38 | 11 (7442) | Moondust | *Dianthus caryophyllus* (Nelke) | Florigene Pty Ltd. | |
| B-39 | A2704-12, A2704-21, A5547-35 | | *Glycine max* L. (Sojabohne) | Aventis CropScience | Sojabohne mit Toleranz für Glufosinate-Ammonium-Herbizide; Erzeugung durch Insertieren eines modifizierten Gens für die Phosphinotricinacetyltransferase (PAT) aus dem Bodenbakterium Streptomyces viridochromogenes. |
| B-40 | A5547-127 | LibertyLink® Soybean | *Glycine max* L. (Sojabohne) | Bayer CropScience (Aventis CropScience (AgrEvo)) | Sojabohne mit Toleranz für Glufosinate-Ammonium-Herbizide, die durch Insertieren eines modifizierten Gens für die Phosphinotricinacetyltransferase (PAT) aus dem Bodenbakterium Streptomyces viridochromogenes. |
| B-41 | G94-1, G94-19, G168 | | *Glycine max* L. (Sojabohne) | DuPont Canada Agricultural Products | Sojabohne mit hohem Ölsäuregehalt; Erzeugung durch Insertieren einer zweiten Kopie des Gens für eine Fettsäuredesaturase (GmFad2-1) aus der Sojabohne, was zu einem "Abschalten" des endogenen Wirtsgens führte. |
| B-42 | GTS 40-3-2 | Roundup Ready ™ Soybeans | *Glycine max* L. (Sojabohne) | Monsanto Company | Glyphosate-tolerante Sojabohnensorte; Erzeugung durch Insertieren eines modifizierten Gens für die 5-Enolpyruvylshikimat-3-phosphatsynthase (EPSPS) aus dem Bodenbakterium Agrobacterium tumefaciens. |
| B-43 | GU262 | | *Glycine max* L. (Sojabohne) | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinotricinacetyltransferase (PAT) aus dem Bodenbakterium Streptomyces viridochromogenes. |
| B-44 | MON89788 | Roundup RReady2Yield™ Soybean | *Glycine max* L. (Sojabohne) | Monsanto Company | Glyphosate-tolerante Sojabohnensorte; Erzeugung durch Insertieren eines modifizierten aroA (epsps)-Gens für die 5-Enolpyruvylshikimate-3-phosphatsynthase (EPSPS) aus dem Bodenbakterium Agrobacterium tumefaciens CP4. |
| B-45 | OT96-15 | | *Glycine max* L. (Sojabohne) | Agriculture & Agri-Food Kanada | Sojabohne mit niedrigem Linolsäuregehalt; Erzeugung durch traditionelle Kreuzung zwecks Einbau des neuen Merkmals aus einer natürlich vorkommenden fan 1-Genmutante, die auf niedrigen Linolensäuregehalt selektiert worden war. |
| B-46 | W62, W98 | | *Glycine max* L. (Sojabohne) | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinotricinacetyltransferase (PAT) aus dem Bodenbakterium Streptomyces hygroscopicus. |
| B-47 | 15985 | Bollgard II cotton | *Gossypium hirsutum L.* (Baumwolle) | Monsanto Company | Insektenresistente Baumwolle; Erzeugung durch Transformation der Elternsorte DP50B, die Event 531 (mit Expression des CrylAc-Proteins) enthielt, mit aufgereinigter Plasmid-DNA, die das cry2Ab-Gen aus B. thuringiensis subsp. Kurstaki enthielt. |
| B-48 | 19-51A | | *Gossypium hirsutum L.* (Baumwolle) | DuPont Canada Agricultural Products | Einführung einer Acetolactatsynthase (ALS)-Variante. |
| B-49 | 281-24-236 | | *Gossypium hirsutum L.* (Baumwolle) | DOW AgroSciences LLC | Insektenresistente Baumwolle; Erzeugung durch Insertieren des cry1F-Gens aus Bacillus thuringiensisvar. aizawai. Das Gen für die PAT aus Streptomyces viridochromogenes wurde als Selektionsmarker eingeführt. |
| B-50 | 3006-210-23 | WideStrike™ | *Gossypium hirsutum L.* (Baumwolle) | DOW AgroSciences LLC | Insektenresistente Baumwolle; Erzeugung durch Insertieren des crylAc-Gens aus Bacillus thuringiensissubsp. kurstaki. Das Gen für die PAT aus Streptomyces viridochromogenes wurde als Selektionsmarker eingeführt. |
| B-51 | 31807/31808 | | *Gossypium hirsutum L.* (Baumwolle) | Calgene Inc. | Insektenresistente Baumwolle mit Toleranz für das Herbizid Bromoxynil; Herstellung durch Insertion des crylAc-Gens aus Bacillus thuringiensis und eines Gens für Nitrilase aus Klebsiella pneumoniae. |
| B-52 | BXN | | *Gossypium hirsutum L.* (Baumwolle) | Calgene Inc. | Baumwolle mit Toleranz für das Herbizid Bromoxynil, Herstellung durch Insertion eines Gens für Nitrilase aus Klebsiella pneumoniae. |
| B-53 | COT102 | | *Gossypium hirsutum L.* (Baumwolle) | Syngenta Seeds, Inc. | Insektenresistene Baumwolle; Erzeugung durch Insertieren des vip3A(a)-Gens aus Bacillus thuringiensis AB88. Das Gen für APH4 aus E. coli wurde als Selektionsmarker eingeführt. |
| B-54 | DAS-21∅23-5 x DAS-24236-5 | | *Gossypium hirsutum L.* (Baumwolle) | DOW AgroSciences LLC | WideStrike™, eine Baumwolle mit Insektenresistenzkombination; Erzeugung durch traditionelles Kreuzen der Elternlinien 3006-210-23 (OECD-Bezeichnung: DAS-21023-5) und 281-24-236 (OECD-Bezeichung: DAS-24236-5). |
| B-55 | DAS-21∅23-5 x DAS-24236-5 x MON88913 | | *Gossypium hirsutum L.* (Baumwolle) | DOW Agro-Sciences LLC und Pioneer Hi-Bred International Inc. | Baumwolle mit einer Kombination von Insektenresistenz und Glyphosate-Toleranz; Erzeugung durch traditionelles Kreuzen von WideStrike-Baumwolle (OECD-Bezeichnung: DAS-21∅23-5 x DAS-24236-5) mit MON88913, bekannt unter der Bezeichnung RoundupReady Flex (OECD-Bezeichnung: MON-88913-8). |
| B-56 | DAS-21∅23-5 x DAS-24236-5 x MON-∅1445-2 | | *Gossypium hirsutum L.* (Baumwolle) | DOW AgroSciences LLC | WideStrike™/Roundup Ready®-Baumwolle, eine Baumwolle mit einer Kombination von Insektenresistenz und Glyphosate-Toleranz; Erzeugung durch traditionelles Kreuzen von WideStrike-Baumwolle (OECD-Bezeichnung: DAS-21023-5 x DAS-24236-5) mit MON1445 (OECD-Bezeichnung: MON-∅1445-2). |
| B-57 | LLCotton25 | | *Gossypium hirsutum L.* (Baumwolle) | Bayer CropScience (Aventis CropScience (AgrEvo)) | Baumwolle mit Toleranz gegen das Herbizid Glufosinate-Ammonium; Erzeugung durch Insertieren eines modifizierten Gens für die Phosphinotricinacetyltransferase (PAT) aus dem Bodenbakterium Streptomyces hygroscopicus. |
| B-58 | LLCotton25 x MON15985 | | *Gossypium hirsutum L.* (Baumwolle) | Bayer CropScience (Aventis CropScience(AgrEvo)) | Baumwolle mit einer Kombination von Herbizidtoleranz und Insektenresistenz, bei der die Toleranz für das Herbizid Glufosinate-Ammonium aus LLCotton25 (OECD-Bezeichnung: ACS-GH∅∅1-3) mit Resistenz gegen Insekten aus MON15985 (OECD-Bezeichnung: MON-15985-7) kombiniert ist. |
| B-59 | MON1445/1 698 | Roundup Ready ™ cotton | *Gossypium hirsutum L.* (Baumwolle) | Monsanto Company | Baumwolle mit Toleranz für das Herbizid Glyphosate; Erzeugung durch Insertieren einer natürlichen Glyphosat-toleranten Form des Enzyms 5-Enolpyruvylshikimat-3-phosphatsynthase (EPSPS) aus dem A. tumefaciens-Stamm CP4. |
| B-60 | MON15985 x MON88913 | | *Gossypium hirsutum L.* (Baumwolle) | Monsanto Company | Baumwolle mit einer Kombination von Insektenresistenz und Glyphosate-Toleranz; Erzeugung durch traditionelles Kreuzen der Elternlinien MON88913 (OECD-Bezeichnung: MON-88913-8) und 15985 (OECD-Bezeichnung: MON-15985-7). Glyphosate-Toleranz stammt von der Linie MON88913, die zwei Gene enthält, die für das Enzym 5-Enolypyruvylshikimat-3-Phosphatsynthase (EPSPS) aus dem Agrobacterium tumefaciens-Stamm CP4 codieren. Die Insektenresistenz stammt von der Linie MON15985, die durch Transformation der Elternsorte DP50B, die Event 531 (Expression des CrylAc-Proteins) enthielt, mit aufgereinigter Plasmid-DNA, die das cry2Ab-Gen aus B. thuringiensis subsp. kurstaki enthielt, erzeugt wurde. |
| B-61 | MON-15985-7 x MON-∅1445-2 | | *Gossypium hirsutum L.* (Baumwolle) | Monsanto Company | Baumwolle mit einer Kombination von Insektenresistenz und Herbizidtoleranz; Erzeugung durch traditionelles Kreuzen der Elternlinien 15985 (OECD-Bezeichnung: MON-15985-7) und MON-1445 (OECD-Bezeichnung: MON-∅1445-2). |
| B-62 | MON531/75 7/1076 | Bollgard ™(Ingard®) | *Gossypium hirsutum L.* (Baumwolle) | Monsanto Company | Insektenresistente Baumwolle; Erzeugung durch Insertieren des crylAc-Gens aus Bacillus thuringiensis subsp. kurstaki HD-73 (B.t.k.). |
| B-63 | MON88913 | Roundup Ready Flex Cotton | *Gossypium hirsutum L.* (Baumwolle) | Monsanto Company | Baumwolle mit Toleranz für das Herbizid Glyphosate; Erzeugung durch Insertieren von zwei Genen für das Enzym 5- Enolypyruvylshikimat-3-phosphat- synthase (EPSPS) aus dem Agrobacterium tumefaciens-Stamm CP4. |
| B-64 | MON-∅∅531-6 x MON-∅1445-2 | | *Gossypium hirsutum L.* (Baumwolle) | Monsanto Company | Baumwolle mit einer Kombination von Insektenresistenz und Herbizidtoleranz; Erzeugung durch traditionelles Kreuzen der Elternlinien MON531 (OECD-Bezeichnung: MON-∅∅531-6) und MON-1445 (OECD-Bezeichnung: MON-∅1445-2). |
| B-65 | T304-40 | | *Gossypium hirsutum L.* (Baumwolle) | Bayer BioScience N.V., Technologiepark 38 B-9052 Gent Belgien | Genetische Elemente, die den Phänotyp Insektenresistenz und Toleranz gegen das Herbizid Glufosinate-Ammonium vermitteln: - cry1: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-66 | GHB714 | | *Gossypium hirsutum L.* (Baumwolle) | Bayer BioScience N.V., Technologiepark 38 B-9052 Gent Belgien | Genetische Elemente, die den Phänotyp Insektenresistenz und Toleranz gegen das Herbizid Glufosinate-Ammonium vermitteln: - cry2: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-67 | GHB119 | | *Gossypium hirsutum L.* (Baumwolle) | Bayer BioScience N.V., Technologiepark 38 B-9052 Gent Belgien | Genetische Elemente, die den Phänotyp Insektenresistenz und Toleranz gegen das Herbizid Glufosinate-Ammonium vermitteln: - cry2: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-68 | T303-3 | | *Gossypium hirsutum L.* (Baumwolle) | Bayer BioScience N.V., Technologiepark 38 B-9052 Gent Belgien | - cry1: Codiersequenz des cry-Gens aus Bacillus thuringiensis, die das Merkmal Insektenresistenz vermittelt. - bar: Codiersequenz des Phosphinotricinacetyltransferase-Gens (bar) aus Streptomyces hygroscopicus, das das Merkmal Herbizidresistenz vermittelt. |
| B-69 | GHB614 | | *Gossypium hirsutum L.* (Baumwolle) | Bayer BioScience N.V., Technologiepark 38 B-9052 Gent Belgien | 2mepsps: Codierequenz von 2mepsps des Maises, die das Merkmal Resistenz gegen das Herbizid Glyphosate verleiht. |
| B-70 | X81359 | | *Helianthus annuus* (Sonnenblume) | BASF Inc. | Toleranz für Imidazolinonherbizide durch Selektieren auf eine natürlich vorkommende Mutante. |
| B-71 | RH44 | | *Lens culinaris* (Linse) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. |
| B-72 | FP967 | | *Linum usita-tissimum* L. (Flachs, Lein) | University of Saskatchewan, Crop Dev. Centre | Eine Acetolactatsynthase (ALS)-Variante wurde von einer chlorsulfurontoleranten Linie von A. thaliana erhalten und zur Transformation von Flachs eingesetzt. |
| B-73 | 5345 | | *Lycopersicon esculeutum* (Tomate) | Monsanto Company | Resistenz gegen Schadlepidopteren durch Einführen des crylAc-Gens aus Bacillus thuringiensis subsp. Kurstaki. |
| B-74 | 8338 | | *Lycopersicon esculeutum* (Tomate) | Monsanto Company | Einführung einer Gensequenz, die für das Enzym 1-Aminocyclopropan-1-carbonsäuredeaminase (ACCd) codiert, das die Vorstufe des Fruchtreifungshormons Ethylen metabolisiert. |
| B-75 | 1345-4 | | *Lycopersicon esculeutum* (Tomate) | DNA Plant Technology Corporation | Tomaten mit verzögerter Reife wurden dadurch erzeugt, daß man eine zusätzliche Kopie eines verkürzten Gens für die 1-Aminocyclopropan-1-carbonsäure (ACC) -Synthase insertierte, was zur Herunterregulation der endogenen ACC-Synthase und zu einer verringerten Ethylenakkumulation führte. |
| B-76 | 35 1 N | | *Lycopersicon esculeutum* (Tomate) | Agritope Inc. | Einführung einer Gensequenz, die für das Enzym Sadenosylmethioninhydrolase codiert, das die Vorstufe des Fruchtreifungshormons Ethylen metabolisiert. |
| B-77 | B, Da, F | | *Lycopersicon esculeutum* (Tomate) | Zeneca Seeds | Tomaten mit verzögertem Weichwerden wurden dadurch erzeugt, daß man eine verkürzte Version des Gens für die Polygalacturonase (PG) in sense- oder antisense-Orientierung insertierte, um die Expression des endogenen PG-Gens zu reduzieren und so den Pektinabbau zu reduzieren. |
| B-78 | FLAVR SAVR | FLAVR SAVR | *Lycopersicon esculeutum* (Tomate) | Calgene Inc. | Tomaten mit verzögertem Weichwerden wurden dadurch erzeugt, daß man eine zusätzliche Kopie des Gens für die Polygalacturonase (PG) in antisense-Orientierung insertierte, um die Expression des endogenen PG-Gens zu reduzieren und so den Pektinabbau zu reduzieren. |
| B-79 | J101, J163 | Roundup Ready Alfalfa | *Medicago sativa* (Luzerne) | Monsanto Company und Forage Genetics International | Eine für das Herbizid Glyphosate tolerante Luzerne wurde dadurch erzeugt, daß man ein Gen für das Enzym 5-Enolypyruvylshikimat-3-phosphatsynthase (EPSPS) aus dem Agrobacterium tumefaciens-Stamm CP4 insertierte. |
| B-80 | C/F/93/08-02 | | *Nicotiaua tabacum* L. (Tabak) | Societe National d'Exploitation des Tabacs et Allumettes | Toleranz für die Herbizide Bromoxynil und Ioxynil durch Einbau des Nitrilasegens aus Klebsiella pneumoniae. |
| B-81 | Vector 21-41 | | *Nicotiana tabacum* L. (Tabak) | Vector Tobacco Inc. | Reduzierter Nikotingehalt durch Einführung einer zweiten Kopie der Chinolinsäurephosphoribosyltransferase (QTPase) aus dem Tabak in antisense-Orientierung. Das für NPTII codierende Gen aus E. coli wurde als Selektionsmarker eingeführt, um Transformanten zu identfizieren. |
| B-82 | CL121, CL141, CFX51 | | *Oryza sativa* (Reis) | BASF Inc. | Toleranz für das Iimidazolinonherbizid Imazethapyr wurde durch chemische Mutagenese des Enzyms Acetolactatsynthase (ALS) mittels Ethylmethansulfonat (EMS) induziert.. |
| B-83 | IMINTA-1, IMINTA-4 | Clearfield™ | *Oryza sativa* (Reis) | BASF Inc. | Toleranz für Imidazolinonherbizide wurde durch chemische Mutagenese des Enzyms Acetolactatsynthase (ALS) mittels Natriumazid induziert. |
| B-84 | LLRICE06, LLRICE62 | LibertyLink® Rice | *Oryza sativa* (Reis) | Aventis CropScience | Für das Herbizid Glufosinate-Ammonium toleranter Reis; Erzeugung durch Insertieren eines modifizierten Gens für die Phosphinotricinacetyltransferase (PAT) aus dem Bodenbakterium Streptomyces hygroscopicus). |
| B-85 | LLRICE601 | | *Oryza sativa* (Reis) | Bayer CropScience (Aventis CropScience (AgrEvo)) | Für das Herbizid Glufosinate-Ammonium toleranter Reis; Erzeugung durch Insertieren eines modifizierten Gens für die Phosphinotricinacetyltransferase (PAT) aus dem Bodenbakterium Streptomyces hygroscopicus). |
| B-86 | PWC16 | | *Oryza sativa* (Reis) | BASF Inc. | Toleranz für das Imidazolinon-Herbizid Imazethapyr wurde durch chemische Mutagenese des Enzyms Acetolactatsynthase (ALS) mittels Ethylmethansulfonat (EMS) induziert. |
| B-87 | ATBT04-6, ATBT04-27, ATBT04-30, ATBT04-31, ATBT04-36, SPBT02-5, SPBT02-7 | NewLeaf Atlantic | *Solanum tuberosum* L. (Kartoffel) | Monsanto Company | Kartoffelkäferresistente Kartoffeln, Erzeugung durch Insertieren des cry3A-Gens aus Bacillus thuringiensis (subsp. tenebrionis). |
| B-88 | BT6, BT10, BT12, BT16, BT17, BT18, BT23 | NewLeaf Russet Burbank | *Solanum tuberosum* L. (Kartoffel) | Monsanto Company | Kartoffelkäferresistente Kartoffeln, Erzeugung durch Insertieren des cry3A-Gens aus Bacillus thuringiensis (subsp. tenebrionis). |
| B-89 | RBMT15-101, SEMT15-02, SEMT15-15 | | *Solanum tuberosum* L. (Kartoffel) | Monsanto Company | Kartoffeln mit Resistenz gegen den Kartoffelkäfer und das Y-Virus der Kartoffel (PVY); Erzeugung durch Insertieren des cry3A-Gens aus Bacillus thuringiensis (subsp. tenebrionis) und des PVY-Gens für das Hüllprotein. |
| B-90 | RBMT21-129, RBMT21-350, RBMT22-082 | | *Solanum tuberosum* L. (Kartoffel) | Monsanto Company | Kartoffeln mit Resistenz gegen den Kartoffelkäfer und das Kartoffel-Blattrollvirus (PLRV); Erzeugung durch Insertieren des cry3A-Gens aus Bacillus thuringiensis (subsp. tenebrionis) und des PLRV-Gens für Replikase. |
| B-91 | AM02-1003, AM01-1005, AM02-1012, AM02-1017, AM99-1089 and AM99-2003 | | *Solanum tuberosum* L. (Kartoffel) | BASF Plant Science GmbH | a) Ein Gen, das die Codierregion der Kartoffel-GBSS in antisense-Orientierung in Bezug auf den Promoter, flankiert von dem GBSS-Promoter aus Solanum tuberosum und der Polyadenylierungssequenz aus dem Agrobacterium tumefaciens-Nopalinsynthasegen, enthält, wurde in die Kartoffelsorte Seresta (Linien AM02-1003, AM01-1005, AM02-1012) und Kuras (Linie AM02-1017) insertiert, wodurch die Amylosemenge in der Stärkefraktion reduziert wurde. Ein AHAS-Gen (Acetohydroxysäuresynthase) aus Arabidopsis thaliana, flankiert vom nos-Gen-Promoter und der Octopin-synthase-Polyadenylierungssequenz aus Agrobacterium tumefaciens, dient als Selektionsmarker, der Toleranz für Imazamox vermittelt. b) AM99-1089 dient als Referenzlinie. Das insertierte Gen besteht aus dem Kartoffel-GBSS (granule bound starch synthase) -Promoter, der Codierregion der Kartoffel-GBSS in antisense-Orientierung und der Polyadenylierungssequenz aus dem Agrobacterium tumefaciens-Nopalinsynthasegen, wodurch die Amylosemenge in der Stärkefraktion reduziert wird. Außerdem wurde das Neomycinphosphotransferasegen (nptII) in Verknüpfung mit dem Agrobacterium tumefaciens-Nopalinsynthasepromoter und der g7-Polyadenylierungssequenz aus Agrobacterium tumefaciens als Selektionsmarkergen, das Resistenz gegen Kanamycin vermittelt, insertiert. c) Bei der Kartoffellinie AM99-2003 wurde ein Gen, das aus dem GBSS-Promoter aus Solanum tuberosum, den Codierregionfragmenten von BE1 und BE2 (starch-branching enzyme, Stärkeverzweigungsenzym) in Tandem- und antisense-Orientierung in bezug auf den Promoter und der nos-Polyadenylierungssequenz aus Agrobacterium tumefaciens besteht, in die Kartoffelsorte Dinamo insertiert, wodurch die Amylopektinmenge in der Stärkefraktion der Knolle reduziert wird. Außerdem wurde das Neomycinphosphotransferasegen (nptII) in Verknüpfung mit dem Agrobacterium tumefaciens-Nopalinsynthasepromoter und der g7-Polyadenylierungssequenz aus Agrobacterium tumefaciens als Selektionsmarkergen, das Resistenz gegen Kanamycin vermittelt, insertiert. |
| B-92 | EH92-527-1 | Amflora | *Solanum tuberosum* L. (Kartoffel) | BASF Plant Science GmbH | Bei dem Kartoffel-Event EH92-527-1 wurde ein Gen, das aus einem Kartoffel-GBSS (granule bound starch synthase) -Promoter, einem Fragment der Codierregion der Kartoffel-GBSS in antisense-Orientierung in Bezug auf den Promoter und der Polyadenylierungssequenz aus dem Agrobacterium tumefaciens-Nopalinsynthasegen (Genkonstrukt pHoxwG) besteht, in die Kartoffelsorte Prevalent insertiert, wodurch die Amylosemenge in der Stärkefraktion reduziert wird. Außerdem wurde das Neomycinphosphotransferasegen (nptII) in Verknüpfung mit dem Agrobacterium tumefaciens-Nopalinsynthasepromoter und dem Polyadenylierungssignal als Selektionsmarkergen, das Resistenz gegen Kanamycin vermittelt, insertiert. |
| B-93 | AP205CL | | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. |
| B-94 | AP602CL | | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. |
| B-95 | BW255-2, BW238-3 | Clearfield™ | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. |
| B-96 | MON71800 | | *Triticum aestivum* (Weizen) | Monsanto Company | Glyphosatetolerante Weizensorte; Erzeugung durch Insertieren eines modifizierten Gens für die 5-Enolpyruvylshikimat-3-phosphatsynthase (EPSPS) aus dem Bodenbakterium Agrobacterium tumefaciens Stamm CP4. |
| B-97 | SWP965001 | | *Triticum aestivum* (Weizen) | Cyanamid Crop Protection | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. |
| B-98 | DW2, DW6, DW12 | Clearfield™ | *Triticum aestivum* (Weizen) | BASF Inc. | |
| B-99 | BW7 | Clearfield™ | *Triticum aestivum* (Weizen) | BASF Inc. | Toleranz für Imidazolinonherbizide. |
| B-100 | Teal 11A | | *Triticum aestivum* (Weizen) | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. |
| B-101 | 176 | Knockout™, NautureGard™ | *Zea mays* L. (Mais) | Syngenta Seeds, Inc., Novartis, Mycogen | Insektenresistenter Mais; Erzeugung durch Insertieren des crylAb-Gens aus Bacillus thuringiensis subsp. kurstaki. Die genetische Modifikation vermittelt eine Resistenz gegen Schädigung durch den Maiszünsler. |
| B-102 | 3751IR | | *Zea mays* L. (Mais) | Pioneer Hi-Bred International Inc. | Selektion von somaklonalen Varianten durch Embryokultur auf imidazolinonhaltigen Medien. |
| B-103 | 676, 678, 680 | LibertyLink® Male Sterile | *Zea mays* L. (Mais) | Pioneer Hi-Bred International Inc. | Pollensteriler Mais mit Toleranz für das Herbizid Glufosinate-Ammonium; Erzeugung durch Insertieren von Genen für die DNA-Adeninmethylase und die Phosphinotricinacetyltransferase (PAT) aus Escherichia coli bzw. Streptomyces viridochromogenes. |
| B-104 | ACS-ZM∅∅3-2 x MON-00810-6 | | *Zea mays* L. (Mais) | Bayer CropScience (Aventis CropScience(AgrEvo)) | Maishybrid mit einer Kombination aus Insektenresistenz und Herbizidtoleranz; Erzeugung durch traditionelles Kreuzen der Elternlinien T25 (OECD-Bezeichnung: ACS-ZM∅∅3-2) und MON810 (OECD-Bezeichnung: MON-∅∅81∅-6). |
| B-105 | B16 (DLL25) | | *Zea mays* L. (Mais) | Dekalb Genetics Corporation | Mais mit Toleranz für das Herbizid Glufosinate-Ammonium; Erzeugung durch Insertieren des Gens für die Phosphinotricinacetyltransferase (PAT) aus Streptomyces hygroscopicus. |
| B-106 | BT11 (X4334CBR X4734CBR) | BiteGard® | *Zea mays* L. (Mais) | Syngenta Seeds, Inc. | Insektenresistenter und herbizidtoleranter Mais; Erzeugung durch Insertieren des crylAb-Gens aus Bacillus thuringiensis subsp. kurstaki, und des Gens für die Phosphinotricin N-Acetyltransferase (PAT) aus S. viridochromogenes. |
| B-107 | CBH-351 | StarLink® | *Zea mays* L. (Mais) | Aventis CropScience | Mais mit Insektenresistenz und Toleranz für das Herbizid Glufosinate-Ammonium; Entwicklung durch Insertieren des Gens für das Cry9C-Protein aus Bacillus thuringiensis subsp. tolworthi und des Gens für die Phosphinotricinacetyltransferase (PAT) aus Streptomyces hygroscopicus. |
| B-108 | DAS-06275-8 | | *Zea mays* L. (Mais) | DOW AgroSciences LLC | Maissorte mit Resistenz gegen Lepidoptereninsekten und Toleranz für das Herbizid Glufosinate-Ammonium; Erzeugung durch Insertieren des cry1F-Gens aus Bacillus thuringiensis var. aizawai und der Phosphinotricinacetyltransferase (PAT) aus Streptomyces hygroscopicus. |
| B-109 | DAS-59122-7 | Herculex RW Rootworm Protection Maize | *Zea mays* L. (Mais) | DOW Agro-Sciences LLC and Pioneer Hi-Bred International Inc. | Mais mit Resistenz gegen den Maiswurzelbohrer; Erzeugung durch Insertieren des cry34Ab1- und des cry35Ab1-Gens aus dem Bacillus thuringiensis-Stamm PS149B1. Das für PAT codierende Gen aus Streptomyces viridochromogenes wurde als Selektionsmarker eingeführt. |
| B-110 | DAS-59122-7 x NK603 | | *Zea mays* L. (Mais) | DOW Agro-Sciences LLC and Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) mit NK603 (nur für die OECD gültige Bezeichnung: MON-∅∅6∅3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Toleranz für das Herbizid Glyphosate stammt von NK603. |
| B-111 | DAS-59122-7 x TC1507 x NK603 | | *Zea mays* L. (Mais) | DOW Agro-Sciences LLC and Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) und TC1507 (nur für die OECD gültige Bezeichnung: DAS-∅15∅7-1) mit NK603 (nur für die OECD gültige Bezeichnung: MON-∅∅6∅3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B 1 enthält. Die Lepidopterenresistenz und die Toleranz für das Herbizid Gluphosinate-Ammonium stammen von TC1507. Die Toleranz für das Herbizid Glyphosate stammt von NK603. |
| B-112 | DAS-∅15∅7-1 x MON-00603-6 | | *Zea mays* L. (Mais) | DOW AgroSciences LLC | Mais mit einer Kombination von Insektenresistenz und Herbizidtoleranz; Erzeugung durch traditionelles Kreuzen der Elternlinien 1507 (OECD-Bezeichnung: DAS-∅15∅7-1) und NK603 (OECD-Bezeichnung: MON-∅∅6∅3-6). |
| B-113 | DBT418 | Bt-XTRA® | *Zea mays* L. (Mais) | Dekalb Genetics Corporation | Mais mit Insektenresistenz und Toleranz für das Herbizid Glufosinate-Ammonium; Entwicklung durch Insertieren von aus Bacillus thuringiensis subsp kurstaki für das Cry1AC-Protein Genen und die Phosphinotricinacetyltransferase (PAT) aus Streptomyces hygroscopicus. |
| B-114 | DK404SR | | *Zea mays* L. (Mais) | BASF Inc. | Somaklonale Varianten mit einer modifizierten Acetyl-CoA-Carboxylase (ACCase) wurden durch Embryokultur auf mit Sethoxydim angereichertem Medium selektiert. |
| B-115 | EXP1910IT | | *Zea mays* L. (Mais) | Syngenta Seeds, Inc. (ehemals Zeneca Seeds) | Eine Toleranz für das Imidazolinonherbizid Imazethapyr wurde durch chemische Mutagenese des Enzyms Acetolactatsynthase (ALS) mit Hilfe von Ethylmethansulfonat (EMS) induziert. |
| B-116 | GA21 | Roundup Ready® | *Zea mays* L. (Mais) | Monsanto Company | Eine modifizierte 5-Enolpyruvylshikimat-3-Phosphatsynthase (EPSPS), ein Enzym, das am Shikimat-Biosyntheseweg für die Bildung der aromatischen Aminosäuren beteiligt ist, wurde durch Beschuß mit der Genkanone induziert. |
| B-117 | IT | | *Zea mays* L. (Mais) | Pioneer Hi-Bred International Inc. | Eine Toleranz für das Imidazolinonherbizid Imazethapyr wurde durch in-vitro-Selektion von somaklonalen Varianten erhalten. |
| B-118 | LY038 | Mavera™ High Value Corn with Lysine | *Zea mays* L. (Mais) | Monsanto Company | Veränderte Aminosäurezusammensetzung, insbesondere erhöhte Lysingehalte, durch Einführung des cordapA-Gens aus Corynebacterium glutamicum, das für das Enzym Dihydrodipicolinatsynthase (cDHDPS) codiert. |
| B-119 | MIR604 | Agrisure RW Rootworm-Protected Corn | *Zea mays* L. (Mais) | Syngenta Seeds, Inc. | Ein gegen den Maiswurzelbohrer resistenter Mais wurde durch Transformation mit einem modifizierten cry3A-Gen erzeugt. Das Phosphomannoseisomerase-Gen aus E.coli wurde als Selektionsmarker eingesetzt. |
| B-120 | MON80100 | | *Zea mays* L. (Mais) | Monsanto Company | Insektenresistenter Mais; Erzeugung durch Insertieren des crylAb-Gens aus Bacillus thuringiensis subsp. kurstaki. Die genetische Modifikation vermittelt Resistenz gegen Befall durch den Maiszünsler. |
| B-121 | MON802 | Roundup Ready® | *Zea mays* L. (Mais) | Monsanto Company | Mais mit Insektenresistenz und Toleranz für das Herbizid Glyphosate; Erzeugung durch Insertieren der Gene für das CrylAb-Protein aus Bacillus thuringiensis und die 5-Enolpyruvylshikimat-3-Posphatsynthase (EPSPS) aus dem A. tumefaciens-Stamm CP4. |
| B-122 | MON809 | | *Zea mays* L. (Mais) | Pioneer Hi-Bred International Inc. | Resistenz gegen den Maiszünsler (Ostrinia nubilalis) durch Einführen eines synthetischen crylAb-Gens. Glyphosate-Resistenz durch Einführen der bakteriellen Version eines pflanzlichen Enzyms, der 5-Enolpyruvylshikimat-3-phosphatsynthase (EPSPS). |
| B-123 | MON810 | YieldGard® | *Zea mays* L. (Mais) | Monsanto Company | Insektenresistenter Mais; Erzeugung durch Insertieren einer verkürzten Form des crylAb-Gens aus Bacillus thuringiensis subsp. kurstaki HD-1. Die genetische Modifikation vermittelt eine Resistenz gegen Befall durch den Maiszünsler. |
| B-124 | MON810 x MON88017 | | *Zea mays* L. (Mais) | Monsanto Company | Mais mit einer Kombination von Insektenresistenz und Glyphosate-Toleranz; Erzeugung durch traditionelles Kreuzen der Elternlinien MON810 (OECD-Bezeichnung: MON-∅∅81∅-6) und MON88017 (OECD-Bezeichnung: MON-88017-3). Die Resistenz gegen den Maiszünsler stammt von einer verkürzten Form des crylAb-Gens aus Bacillus thuringiensis subsp. kurstaki HD-1, die in MON810 vorliegt. Die Resistenz gegen den Maiswurzelbohrer stammt vom cry3Bb1-Gen aus Bacillus thuringiensis subspecies kumamotoensis, Stamm EG4691, das in MON88017 vorliegt. Die Toleranz für Glyphosate stammt von einem Gen für die 5-Enolpyruvylshikimat-3-phosphatsynthase (EPSPS) aus dem Agrobacterium tumefaciens-Stamm CP4, das in MON88017 vorliegt. |
| B-125 | MON832 | | *Zea mays* L. (Mais) | Monsanto Company | Einführung einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, und der Glyphosate-Oxidase (GOX) durch Beschuß mit der Genkanone. |
| B-126 | MON863 | YieldGard® Rootworm | *Zea mays* L. (Mais) | Monsanto Company | Mais mit Resistenz gegen den Maiswurzelbohrer; Erzeugung durch Insertieren des cry3Bb1-Gens aus Bacillus thuringiensis subsp. kumamotoensis. |
| B-127 | MON88017 | | *Zea mays* L. (Mais) | Monsanto Company | Mais mit Resistenz gegen den Maiswurzelbohrer; Erzeugung durch Insertieren des cry3Bb1-Gens aus Bacillus thuringiensis subsp. Kumamotoensis, Stamm EG4691. Eine Toleranz für Glyphosate wurde dadurch erhalten, daß man ein Gen für die 5-Enolpyruvylshikimat-3-Phosphatsynthase (EPSPS) aus dem Agrobacterium tumefaciens-Stamm CP4 insertierte. |
| B-128 | MON-00603-6 x MON-00810-6 | | *Zea mays* L. (Mais) | Monsanto Company | Maishybrid mit einer Kombination von Insektenresistenz und Herbizidtoleranz, Erzeugung durch traditionelles Kreuzen der Elternlinien NK603 (OECD-Bezeichnung: MON-∅∅6∅3-6) und MON810 (OECD-Bezeichnung: MON-00810-6). |
| B-129 | MON-00810-6 x LY038 | | *Zea mays* L. (Mais) | Monsanto Company | Mais mit einer Kombination von Insektenresistenz und erhöhtem Lysingehalt, Erzeugung durch traditionelles Kreuzen der Elternlinien MON810 (OECD-Bezeichnung: MON-∅∅81∅-6) und LY038 (OEC-Bezeichnung: REN-∅∅∅38-3). |
| B-130 | MON-00863-5 x MON-00603-6 | | *Zea mays* L. (Mais) | Monsanto Company | Maishybrid mit einer Kombination von Insektenresistenz und Herbizidtoleranz, Erzeugung durch traditionelles Kreuzen der Elternlinien MON863 (OECD-Bezeichnung: MON-∅∅863-5) und NK603 (OEC-Bezeichnung: MON-∅∅6∅3-6). |
| B-131 | MON-00863-5 x MON-∅∅81∅-6 | YieldGard® Plus | *Zea mays* L. (Mais) | Monsanto Company | Maishybrid mit einer Insektenresistenzkombination; Erzeugung durch traditionelles Kreuzen der Elternlinien MON863 (OECD-Bezeichnung: MON-∅∅863-5) und MON810 (OECD-Bezeichnung: MON-∅∅81∅-6) |
| B-132 | MON-∅∅863-5 x MON-∅∅81∅-6 x MON-∅∅6∅3-6 | YieldGard® Plus, Roundup Ready® | *Zea mays* L. (Mais) | Monsanto Company | Maishybrid mit einer Kombination von Insektenresistenz und Herbizidtoleranz, Erzeugung durch traditionelles Kreuzen des kombinationshaltigen Hybriden MON-∅∅863-5 x MON-∅∅81∅-6 und NK603 (OECD-Bezeichnung: MON-∅∅6∅3-6). |
| B-133 | MON-∅∅∅21-9 x MON-∅∅81∅-6 | | *Zea mays* L. (Mais) | Monsanto Company | Maishybrid mit einer Kombination von Insektenresistenz und Herbizidtoleranz, Erzeugung durch traditionelles Kreuzen der Elternlinien GA21 (OECD-Bezeichnung: MON-∅∅∅21-9) und MON810 (OECD-Bezeichnung: MON-∅∅81∅-6). |
| B-134 | MS3 | | *Zea mays* L. (Mais) | Bayer CropScience (Aventis CropScience(AgrEvo)) | Pollensterilität durch Expression des barnase-Ribonuklease-Gens aus Bacillus amyloliquefaciens; die PPT-Resistenz wurde über die PPT-Acetyltransferase (PAT) erzielt. |
| B-135 | MS6 | LibertyLink® Male Sterile | *Zea mays* L. (Mais) | Bayer CropScience (Aventis CropScience(AgrEvo)) | Pollensterilität durch Expression des barnase-Ribonuklease-Gens aus Bacillus amyloliquefaciens; die PPT-Resistenz wurde über die PPT-Acetyltransferase (PAT) erzielt. |
| B-136 | NK603 | Roundup Ready® corn | *Zea mays* L. (Mais) | Monsanto Company | Einführung einer modifizierten 5-Enolpyruvylshikimat-3-Phosphatsynthase (EPSPS), eines Enzyms, das am Shikimat-Biosyntheseweg für die Bildung der aromatischen Aminosäuren beteiligt ist, durch Beschuß mit der Genkanone. |
| B-137 | SYN-BT∅11-1 x MON-∅∅∅21-9 | | *Zea mays* L. (Mais) | Syngenta Seeds, Inc. | Maishybrid mit einer Kombination von Insektenresistenz und Herbizidtoleranz, Erzeugung durch traditionelles Kreuzen der Elternlinien BT11 (nur für die OECD gültige Bezeichnung: SYN-BT∅11-1) und GA21 (nur für die OECD gültige Bezeichnung: MON-∅∅∅21-9). |
| B-138 | T14, T25 | LibertyLink™ | *Zea mays* L. (Mais) | Bayer CropScience (Aventis CropScience (AgrEvo)) | Mais mit Toleranz für das Herbizid Glufosinate; Herstellung durch Insertieren des Gens für die Phosphinotricin-N-Acetyltransferase (PAT) des aeroben Actinomyceten Streptomyces viridochromogenes. |
| B-139 | TC1507 | Herculex I® | *Zea mays* L. (Mais) | Mycogen (c/o Dow Agro-Sciences); Pioneer (c/o Dupont) | Mais mit Insektenresistenz und Toleranz für das Herbizid Glufosinate-Ammonium; Herstellung durch Insertieren des cry1F-Gens aus Bacillus thuringiensis var. aizawai und des für die Phosphinotricin-N-acetyltransferase-Gens aus Streptomyces viridochromogenes. |
| B-140 | TC1507 x DAS-59122-7 | | *Zea mays* L. (Mais) | DOW Agro-Sciences LLC and Pioneer Hi-Bred International Inc. | Mais mit einer Kombination aus Insektenresistenz und Herbizidtoleranz; Herstellung durch traditionelles Kreuzen der Elternlinien TC1507 (nur für die OECD gültige Bezeichnung: DAS-∅15∅7-1) mit DAS-59122-7 (nur für die OECD gültige Bezeichnung: DAS-59122-7). Die Resistenz gegen Lepidopteren-Insekten stammt von TC1507 aufgrund des Vorhandenseins des cry1F-Gens aus Bacillus thuringiensis var. aizawai. Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Toleranz für das Herbizid Glufosinate-Ammonium stammt von TC1507 von dem Gen für die Phosphinotricin-N-acetyltransferase aus Streptomyces viridochromogenes. |
| B-141 | SYTGA21 | | *Zea mays* L. (Mais) | Syngenta Agrisure GT | Toleranz für das Herbizid Glyphosate |
| B-142 | SYTGA21 + Bt11 | | *Zea mays* L. (Mais) | Syngenta Agrisure GT/CB YieldGard Liberty Link | Schutz gegen den Maiszünsler durch Cry1Ab Toleranz für das Herbizid Glyphosate |
| B-143 | MON810 + SYTGA21 | | *Zea mays* L. (Mais) | Monsanto YieldGard Roundup Ready | Schutz gegen den Maiszünsler durch Cry1Ab Toleranz für das Herbizid Glyphosate |
| B-144 | MON89034 | | *Zea mays* L. (Mais) | Monsanto Agrar Deutschland GmbH | Eine volle Beschreibung der genetischen Elemente in MON 89034, einschließlich der ungefähren Größe, der Herkunft und der Funktion findet sich in Tabelle 1. Tabelle 1. Zusammenstellung der in MON 89034 insertierten genetischen Elemente B1-Linke Border*: 239 Bp lange DNA-Region von der B?Linken Border-Region, die nach der Integration verbleibt Pp2-e35S : Modifizierter Promoter und Leitsequenz für die 35S-RNA aus dem Blumenkohlmosaikvirus (CaMV), enthaltend die duplizierte Enhancer-Region L3-Cab : 5'-nichttranslatierte Leitsequenz des Chlorophyll a/b?- Bindungsproteins aus dem Weizen I4-Ract1 : Intron aus dem Actin-Gen des Reises CS5-cry1A.105 : Codiersequenz für das Cry1A.105-Protein aus Bacillus thuringiensis T6-Hsp17 : 3'-Transkriptions-terminationssequenz für das Hitzeschockprotein 17.3 aus dem Weizen, das die Transkription beendet und die Polyadenylierung steuert. P-FMV : 35S-Promoter des Figwort Mosaic-Virus I-Hsp70 :Erstes Intron des Gens für das Hitzeschockprotein 70 aus dem Mais TS7-SSU-CTP : DNA- |
| | | | | | Region, die die Zielsteuerungssequenz für die Transitpeptidregion der kleinen Untereinheit der Ribulose-1,5-biphosphatcarboxylase aus dem Mais und das erste Intron enthält CS-cry2Ab2: Codierungsequenz für ein cry2Ab2-Protein aus Bacillus thuringiensis. Bei dieser Codiersequenz wird ein modifizierter "codon usage" verwendet. T-nos: 3'-Transkriptionsterminations-sequenz der für die Nopalinsynthase (nos) codierenden Sequenz aus Agrobacterium tumefaciens, die die Transkription terminiert und die Polyadenylierung steuert. B-Left Border: 230 Bp lange DNA-Region von der B-Linken Border-Region, die nach der Integration verbleibt * Analysen der MON 89034-Insertsequenz haben ergeben, daß der e35S-Promoter, der die Expression der cry1A.105-Codiersequenz reguliert, modifiziert war: die in PV-ZMIR245 vorhandene Rechte Border-Sequenz war durch die Linke Border -Sequenz ersetzt. Es ist anzunehmen, daß diese Modifikation das Ergebnis eines Crossover-Rekombinations-Events ist, das stattfand, bevor die DNA in das Genom insertiert worden war. |
| B-145 | MON 89034 x MON 88017 | | *Zea mays* L. (Mais) | Monsanto Agrar Deutschland GmbH | |
| B-146 | MON 89034 × NK603 | | *Zea mays* L. (Mais) | Monsanto Agrar Deutschland GmbH | |
| B-147 | DP-∅9814∅-6 | | *Zea mays* L. (Mais) | Pioneer Hi-Bred Seeds Agro SRL | 98140-Mais wurde dadurch genetisch modifiziert, daß man das Gen für die Glyphosate-N-acetyltransferase (gat4621) und ein modifiziertes Mais-Acetolactatsynthase (zm-hra) -Gen gemeinsam mit den für die Genexpression in der Maispflanze erforderlichen Regulationselementen insertierte. Das gat4621-Gen codiert für das GAT4621-Protein, das von dem Bodenbakterium Bacillus licheniformis abstammte und das eine Toleranz für Glyphosate enthaltende Herbizide vermittelt. Das zmhra-Gen codiert für das ZM-HRA-Protein und vermittelt eine Toleranz für verschiedene ALS-hemmende Herbizide wie Sulfonylharnstoffe. |
| B-148 | 3243M | | *Zea mays* L.. (Mais) | Syngenta Seeds SA | Regulationssequenzen: Promotersequenzen vom Mais. Die Funktion dieser Sequenzen besteht darin, die Expression des Insektenresistenzgens zu kontrollieren. Insektenresistenzgen: cry1Ab-Gen von Bacillus thuringiensis. Die Funktion des Produkts dieses Gens besteht darin, Resistenz gegenüber gewissen Schadlepidopteren zu vermitteln. NOS-Terminator: Terminatorsequenz des Nopalinsynthasegens, isoliert aus Agrobacterium tumefaciens. Die Funktion dieser Sequenz besteht darin, ein Signal für die Termination der Expression des Insektenresistenzgens zu geben. ZmUbilntron: Promoter aus einem Mais-Ubiquitin-Gen zusammen mit dem ersten Intron des Gens. Die Funktion dieser Sequenzen besteht darin, die Expression des Phosphomannoseisomerase (pmi)-Gens zu kontrollieren und zu verstärken. pmi: Codiersequenz des Phosphomannoseisomerase (pmi)-Gens, isoliert aus Escherichia coli. Die Funktion dieses Genprodukts besteht darin, als Selektionsmarker für die Transformation zu dienen, da es eine positive Selektion von transformierten Zellen, die auf |
| | | | | | Mannose wachsen, ermöglicht. NOS-Terminator: Terminatorsequenz des Nopalinsynthasegens, isoliert aus Agrobacterium tumefaciens. Die Funktion dieser Sequenz besteh t darin, ein Signal für die Termination der Expression des Markergens (pmi) zu geben. |
| B-149 | DP 444 BG/RR | Bollgard/RoundupR eady, from US 2003213029-A1 | Gossypium hirsutum L. (Baumwolle) | Delta and Pine Land company | Bollgard®, RoundupReady® |
| B-150 | VSN-BTCRW | Bt-toxin corn root worm | Zea mays L. (Mais) | | |
| B-151 | HCL201 CR W2RR x LH324 | Bt-toxin corn root worm | Zea mays L. (Mais) | Monsanto Company | |
| B-152 | LH324 | from US 7223908 B1 | Zea mays L. (Mais) | Monsanto Company | |
| B-153 | VSN-RR Bt | RoundupReady Bt-toxin | Zea mays L. (Mais) | | |
| B-154 | FR1064LL x FR2108 | Lit.: Gerdes, J. T., Behr, C. F., Coors, J. G., und Tracy, W. F. 1993. Compilation of North American Maize Breeding Germplasm. W. F. Tracy, J. G. Coors, und J. L. Geadelmann, Hrsg. Crop Science Society of America, Madison, WI und US 6407320 B1 | Zea mays L. (Mais) | Illinois Foundation Seeds | |
| B-155 | VSN-Bt | Bt-toxin | Zea mays L. (Mais) | | |

**Tabelle 6**

| **Nr.** | **Handelsname** | **Pflanze** | **Unternehmen** | **genetisch modifizierte Eigenschaften** | **zusätzliche Informationen** |
|---|---|---|---|---|---|
| 4-1 | Roundup Ready® | *Beta vulgaris* (Zuckerrübe) | Monsanto Company | Toleranz für Glyphosate | |
| 4-2 | InVigor® | *Brassica napus* (Argentinischer Canola-Raps) | BayerCropScience | Canola-Raps wurde mit folgendem Ergebnis genetisch modifiziert: ∅ Expression eines Gens, das Toleranz für das Herbizid Glyfosinate-Ammonium vermittelt; ∅ Einführung eines neuen Hybridzüchtungssystems für Canola-Raps, das auf genetisch modifizierten Pollensterilitäts- (MS) und Fertilitätsrestorer- (RF) Linien beruht; ∅ Expression eines Gens für Antibiotikaresistenz. | |
| 4-3 | Liberty Link® | *Brassica napus* (Argentinischer Canola-Raps) | BayerCropScience | Toleranz für Phosphinotricin | |
| 4-4 | Roundup Ready® | *Brassica napus* (Canola-Raps) | Monsanto Company | Toleranz für Glyphosate | |
| 4-5 | Clearfield® | (Canola-Raps) | BASF Corporation | nicht-GMO, Toleranz für Imazamox | |
| 4-6 | Optimum™ GAT™ | *Glycine max* L. (Sojabohne) | Pioneer Hi-Bred International, Inc | Toleranz für Glyphosate und ALS-Herbizide | |
| 4-7 | Roundup Ready® | *Glycine max* L. (Sojabohne-) | Monsanto Company | Toleranz für Glyphosate | |
| 4-8 | Roundup RReady2Yield™ | *Glycine max* L. (Sojabohne) | Monsanto Company | Toleranz für Glyphosate | |
| 4-9 | STS® | *Glycine max* L. (Sojabohne) | DuPont | Toleranz für Sulfonylharnstoffe | |
| 4-10 | YIELD GARD® | *Glycine max* L. (Sojabohne) | Monsanto Company | | |
| 4-11 | AFD® | *Gossypium hirsutum* L. (Baumwolle) | BayerCropScience | Zu den Linien zählen z.B. AFD5062LL, AFD5064F, AFD 5065B2F; AFD-Saatgut ist in verschiedenen Sorten mit integrierter Technologie verfügbar, wie zum Beispiel die Bollgard®-, Bollgard II-, Roundup Ready-, Roundup Ready Flex- und LibertyLink®- Technologien | |
| 4-12 | Bollgard II® | *Gossypium hirsutum* L. (Baumwolle) | Monsanto Company | MON 15985-Event: Cry2(A)b1; Cry1A(c) | |
| 4-13 | Bollgard® | *Gossypium hirsutum* L. (Baumwolle) | Monsanto Company | Cry 1Ac | |
| 4-14 | FiberMax® | *Gossypium hirsutum* L. (Baumwolle) | BayerCropScience | | |
| 4-15 | Liberty Link® | *Gossypium hirsutum* L. (Baumwolle) | BayerCropScience | Toleranz gegen Phosphinotricin | |
| 4-16 | Nucotn 33B | *Gossypium hirsutum* L. (Baumwolle) | Delta Pine and Land | Bt-Toxin in den Linien von Delta Pine: CrylAc | |
| 4-17 | Nucotn 35B | *Gossypium hirsutum* L. (Baumwolle) | Delta Pine and Land | Bt-Toxin in den Linien von Delta Pine: CrylAc | |
| 4-18 | Nucotn® | *Gossypium hirsutum* L. (Baumwolle) | Delta Pine and Land | Bt-Toxin in Linien von Delta Pine | |
| 4-19 | PhytoGen™ | *Gossypium hirsutum* L. (Baumwolle) | PhytoGen Seed Company, Dow AgroSciences LLC | umfaßt Sorten, die zum Beispiel Roundup Ready flex, Widestrike enthalten | |
| 4-20 | Roundup Ready Flex® | *Gossypium hirsutum* L. (Baumwolle) | Monsanto Company | Toleranz für Glyphosate | |
| 4-21 | Roundup Ready® | *Gossypium hirsutum* L. (Baumwolle) | Monsanto Company | Toleranz für Glyphosate | |
| 4-22 | Widestrike™ | *Gossypium hirsutum* L. (Baumwolle) | Dow AgroSciences LLC | Cry1F und Cry1Ac | Monsanto/Dow |
| 4-23 | YIELD GARD® | *Gossypium hirsutum* L. (Baumwolle) | Monsanto Company | | http://www.garstsee d.com/GarstClient/ Technology/agrisure.aspx |
| 4-24 | Roundup Ready® | *Medicago sativa* (Luzerne) | Monsanto Company | Toleranz für Glyphosate | |
| 4-25 | Clearfield® | *Oryza sativa* (Reis) | BASF Corporation | nicht-GMO, Toleranz für Imazamox | |
| 4-26 | NewLeaf® | *Solanum tuberosum* L. (Kartoffel) | Monsanto Company | Resistenz gegen Infektion durch Kartoffel-Blattrollvirus (PLRV) und Fraßschaden durch den Kartoffelkäfer Leptinotarsa decemlineata | |
| 4-27 | NewLeaf® plus | *Solanum tuberosum* L. (Kartoffel) | Monsanto Company | Resistenz gegen Infektion durch Kartoffel-Blattrollvirus (PLRV) und Fraßschaden durch den Kartoffelkäfer Leptinotarsa decemlineata | http://www.dowagr o.com/phytogen/ind ex.htm |
| 4-28 | Protecta® | *Solanum tuberosum* L. (Kartoffel) | ? | | |
| 4-29 | Clearfield® | Sonnenblume | BASF Corporation | nicht-GMO, Toleranz für Imazamox | |
| 4-30 | Roundup Ready® | *Triticum aestivum* (Weizen) | Monsanto Company | Toleranz für Glyphosate, NK603 | |
| 4-31 | Clearfield® | Weizen | BASF Corporation | nicht-GMO, Toleranz für Imazamox | |
| 4-32 | Agrisure® (Familie) | *Zea mays* L. (Mais) | Syngenta Seeds, Inc. | hierzu zählen Agrisure CB/LL (BT 11-Event plus Toleranz für Phosphinotricin durch GA21-Event); Agrisure CB/LL/RW (Bt 11- Event, modifiziertes synthetisches Cry3A-Gen, Toleranz für Phosphinotricin durch GA21-Event); Agrisure GT (Toleranz für Glyphosate) ; Agrisure GT/CB/LL(Toleranz für Glyphosate und für Phosphinotricin durch GA21-Event, Bt 11-Event); Agrisure 3000GT (CB/LL/RW/GT: Toleranz für Glyphosate und gegen Phosphinotricin durch GA21-Event, Bt 11-Event, modifiziertes synthetisches Cry3A-Gen) ; Agrisure GT/RW (Toleranz für Glyphosate, modifiziertes synthetisches Cry3A-Gen) ; Agrisure RW (modifiziertes synthetisches Cry3A-Gen); Zukünftige Merkmale | |
| 4-33 | BiteGard® | *Zea mays* L. (Mais) | Novartis Seeds | cry1A(b) -Gen. | |
| 4-34 | Bt-Xtra® | *Zea mays* L. (Mais) | DEKALB Genetics Corporation | crylAc-Gen. | |
| 4-35 | Clearfield® | *Zea mays* L. (Mais) | BASF Corporation | nicht-GMO, Toleranz für Imazamox | |
| 4-36 | Herculex® (Familie) | *Zea mays* L. (Mais) | Dow AgroSciences LLC | | |
| 4-37 | IMI® | *Zea mays* L. (Mais) | DuPont | Toleranz für Imidazolinone | |
| 4-38 | KnockOut® | *Zea mays* L. (Mais) | Syngenta Seeds, Inc. | SYN-EV176-9: crylA(b)-Gen. | |
| 4-39 | Mavera® | *Zea mays* L. (Mais) | Renessen LLC | lysinreich | http://www.dowagr o.com/widestrike/ |
| 4-40 | NatureGard® | *Zea mays* L. (Mais) | Mycogen | crylA(b)-Gen. | |
| 4-41 | Roundup Ready® | *Zea mays* L. (Mais) | Monsanto Company | Toleranz für Glyphosate | http://www. starlinkc orn.com/starlinkcor n.htm |
| 4-42 | Roundup Ready® 2 | *Zea mays* L. (Mais) | Monsanto Company | Toleranz für Glyphosate | |
| 4-43 | SmartStax | *Zea mays* L. (Mais) | Monsanto Company | Kombination von acht Genen | |
| 4-44 | StarLink® | *Zea mays* L. (Mais) | Aventis CropScience ->Bayer CropScience | Cry9c-Gen. | |
| 4-45 | STS® | *Zea mays* L. (Mais) | DuPont | Toleranz für Sulfonylharnstoffe | |
| 4-46 | YIELD GARD® | *Zea mays* L. (Mais) | Monsanto Company | Mon810, CrylAbl; Resistenz gegen den Maiszünsler | http://www.dowagr o. com/herculex/abo ut/herculexfamily/ |
| 4-47 | YieldGard® Plus | *Zea mays* L. (Mais) | Monsanto Company | Mon810xMon863, Zweierkombination, Resistenz gegen Maiszünsler und Maiswurzelbohrer | |
| 4-48 | YieldGard® Rootworm | *Zea mays* L. (Mais) | Monsanto Company | Mon863, Cry3Bb1, Resistenz gegen Maiswurzelbohrer | |
| 4-49 | YieldGard® VT | *Zea mays* L. (Mais) | Monsanto Company | Merkmalskombination | |
| 4-50 | YieldMaker™ | *Zea mays* L. (Mais) | DEKALB Genetics Corporation | enthält Roundup Ready 2-Technologie, YieldGard VT, YieldGard Corn Borer, YieldGard Rootworm und YieldGard Plus | |

### Beispiele:

Die Erfindung wird durch die folgenden Beispiele näher erläutert, ohne sie dadurch einzuschränken.

### Beispiel 1: Blatt- und Drenchapplikation Aphis gossypii/Baumwolle

Einzeln getopfte genetisch modifizierte Baumwollpflanzen mit einer Lepidopterenresistenz und einer Herbizidresistenz (Linie DP444 BG/RR) werden mit dem gewünschten Produkt gegen die Baumwollblattlaus (Aphis gossypii) behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

Es ist dabei eine deutliche Verbesserung der Bekämpfung der Schädlinge im Vergleich zu den nicht erfindungsgemäß behandelten Kontrollpflanzen zu erkennen.

**Tabelle B1-1: Aphis gossypii - Test (Blattapplikation)**

| **Wirkstoff** | **Konzentration** **in ppm** | **Abtötung** **in % nach 1^{d}** | |
|---|---|---|---|
| **Verbindung I-8** | 20 | 65 | |
| **DP444 BG/RR** Cry1Ac&cp4 epsps | | 0 | |
| **Verbindung I-8 auf DP444 BG/RR** erfindungsgemäß | | **gef**.* | **ber**.** |
| | **20** | **85** | **65** |

**Tabelle B1-2: Aphis gossypii - Test (Drenchapplikation)**

| **Wirkstoff** | **Konzentration** **in ppm** | **Abtötung** **in % nach 2^{d}** | |
|---|---|---|---|
| **Verbindung I-8** | 0,8 | 70 | |
| **DP444 BG/RR** Cry1Ac&cp4 epsps | | 0 | |
| **Verbindung I-8 auf DP444 BG/RR** | | **gef**.* | **ber**.** |
| erfindungsgemäß | **0,8** | **90** | **70** |

| | | | |
|---|---|---|---|
| *gef. = gefundeneWirkung ** ber. = nach der Colby-Formel berechnete Wirkung | | | |

### Beispiel 2: Blattapplikation Spodoptera frugiperda/Mais

Töpfe mit je 5 genetisch modifizierten Maispflanzen mit einer Lepidopteren,- Coleopteren- und/oder Herbizidresistenz werden in 2 Replikationen gegen den Heerwurm (Spodoptera frugiperda) behandelt.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Es ist dabei eine deutliche Verbesserung der Bekämpfung der Schädlinge im Vergleich zu den nicht erfindungsgemäß behandelten Kontrollpflanzen zu erkennen.

**Tabelle B2: Spodoptera frugiperda - Test (Blattapplikation)**

| **Wirkstoff** | **Konzentration in ppm** | **Abtötung** **in % nach 4^{d}** | |
|---|---|---|---|
| **Verbindung I-8** | 100 | 0 | |
| **VSN-BT** Bt MON 810 | | 40 | |
| **HCL201 CRW2RR2xLH324** Cry3Bb1&cp4 epsps | | 20 | |
| **Verbindung I-8 auf VSN-BT** | | **gef.*** | **ber**.** |
| erfindungsgemäß | **100** | **90** | **40** |
| **Verbindung I-8 auf** | | **gef**.* | **ber**.** |
| **HCL201 CRW2RR2xLH324** erfindungsgemäß | **100** | **50** | **20** |

| | | | |
|---|---|---|---|
| *gef. = gefundeneWirkung ** ber. = nach der Colby-Formel berechnete Wirkung | | | |

## Patentansprüche

1. Verfahren zur Verbesserung der Nutzung des Produktionspotentials einer genetisch modifizierten Pflanze, **dadurch gekennzeichnet, dass** die Pflanze mit einer wirksamen Menge mindestens einer Verbindung der Formel (I) 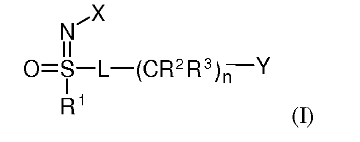 in welcher
X für NO₂, CN oder COOR⁴ steht,
L für eine Einfachbindung steht,
R¹ für C₁-C₄-Alkyl steht, oder
R¹, Schwefel und L zusammen für einen 4-, 5- oder 6-gliedrigen Ring stehen,
R² und R³ unabhängig voneinander für Wasserstoff, Methyl, Ethyl, Fluor, Chlor oder Brom stehen, oder
R² und R³ gemeinsam für -(CH₂)₂-, -(CH₂)₃-, -(CH₂)₄- oder -(CH₂)₅- stehen und mit dem Kohlenstoffatom an dem sie gebunden sind einen 3-, 4-, 5- oder 6-Ring bilden,
n für 0, 1, 2 oder 3 steht,
Y für einen der Reste 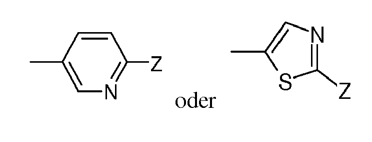
steht,
worin
Z für Halogen, C₁-C₄-Alkyl, C₁-C₄-Halogenalkyl, C₁-C₄-Alkoxy oder C₁-C₄-Halogenalkoxy steht und
R⁴ für C₁-C₃-Alkyl steht, behandelt wird.

2. Verfahren nach Anspruch 1, **dadurch gekennzeichnet, dass** die Verbindung der Formel (I) ausgewählt ist aus der Gruppe bestehend aus
(I-1), [6-Chlor-pyridin-3-yl]methyl](methyl)oxido-λ⁴-sulfanyliden-cyanamid
(I-2), [6-Trifluormethyl-pyridin-3-yl]methyl](methyl)oxido-λ⁴-sulfanyliden-cyanamid
(I-3), Methyl(oxido){[2-chlor-1,3-thiazol-5-yl]methyl}λ⁴-sulfanyliden-cyanamid
(I-4), Methyl(oxido){[2-(trifluormethyl)-1,3-thiazol-5-yl]methyl}λ⁴-sulfanyliden-cyanamid
(I-5), [6-Chlor-pyridin-3-yl]ethyl](methyl)oxido-λ⁴-sulfanyliden-cyanamid
(I-6), [6-Chlor-pyridin-3-yl]ethyl](methyl)oxido-λ⁴-sulfanyliden-cyanamid Diastereomer
(I-7), [6-Chlor-pyridin-3-yl]ethyl](methyl)oxido-λ⁴-sulfanyliden-cyanamid Diastereomer
(I-8), [6-Trifluormethyl-pyridin-3-yl]ethyl](methyl)oxido-λ⁴-sulfanyliden-cyanamid
(I-9), [6-(1,1-Difluorethyl)pyrid-3-yl]ethyl](methyl)oxido-λ⁴-sulfanyliden-cyanamid
(I-10), [6-Difluormethyl-pyrid-3-yl]ethyl](methyl)oxido-λ⁴-sulfanyliden-cyanamid
(I-11), Methyl(oxido){1-[2-(trichlormethyl)-pyrid-3-yl]ethyl}λ⁴-sulfanyliden-cyanamid
(I-12), Methyl(oxido){1-[2-(pentafluorethyl)-pyrid-3-yl]ethyl}λ⁴-sulfanyliden-cyanamid
(I-13), [6-Chlordifluormethyl-pyrid-3-yl]ethyl](methyl)oxido-λ⁴-sulfanyliden-cyanamid
(I-14), Methyl(oxido){1-[2-(trifluormethyl)-1,3-thiazol-5-yl]ethyl} λ⁴-sulfanyliden-cyanamid
(I-15), Methyl(oxido){1-[6-(trifluormethyl)pyridin-3-yl]cyclopropyl-λ⁴-sulfanyliden-cyanamid
(I-16), Methyl(oxido){1-(6-chlorpyridin-3-yl)cyclopropyl-λ⁴-sulfanyliden-cyanamid
(I-17), 2-(6-Chlorpyridin-3-yl)-1-oxido-tetrahydro-1*H*-1λ⁴-thien-yliden-cyanamid
(I-18), 2-(6-Trifluormethylpyridin-3-yl)-1-oxido-tetrahydro-1*H*-1λ⁴-thien-yliden-cyanamid
(I-19), 1-Oxo-2-(2-trifluormethyl-1,3-thiazol-5-ylmethyl)-tetrahydro-1-λ⁶-thiophen-1-yliden-cyanamid
(I-20), 1-Oxo-2-(6-trifluormethyl-pyrid-3-ylmethyl)-tetrahydro-1-λ⁶-thiophen-1-yliden-cyanamid
(I-21), 1-Oxo-2-(6-chlor-pyrid-3-ylmethyl)-tetrahydro-1-λ⁶-thiophen-1-yliden-cyanamid
(I-22), 1-Oxo-2-(6-chlor-pyrid-3-ylmethyl)-tetrahydro-1-λ⁶-thiophen-1-yliden-cyanamid Diastereomer und
(I-23), 1-Oxo-2-(6-chlor-pyrid-3-ylmethyl)-tetrahydro-1-λ⁶-thiophen-1-yliden-cyanamid Diastereomer.

3. Verfahren nach Anspruch 1 oder 2, **dadurch gekennzeichnet, dass** die Pflanze mindestens eine genetisch veränderte Struktur oder eine Toleranz gemäß Tabelle 1 aufweist.

4. Verfahren nach Anspruch 1 oder 2, **dadurch gekennzeichnet, dass** es sich um eine Pflanze mit mindestens einem geänderten Wirkprinzip gemäß Tabelle 3 handelt.

5. Verfahren nach Anspruch 1 oder 2, **dadurch gekennzeichnet, dass** es sich um eine genetisch modifizierte Pflanze gemäß der Tabellen 4 bis 6 handelt.

6. Verfahren nach Anspruch 1 oder 2, **dadurch gekennzeichnet, dass** die Pflanze mindestens eine genetische Modifikation gemäß der Tabelle 2 enthält.

7. Verfahren nach Anspruch 1 oder 2, **dadurch gekennzeichnet, dass** die genetisch modifizierte Pflanze mindestens ein Gen oder ein Genfragment codierend ein Bt-Toxin enthält.

8. Verfahren nach Anspruch 1 oder 2, **dadurch gekennzeichnet, dass** es sich bei der genetisch modifizierten Pflanze um eine Gemüse-, Mais-, Soja-, Baumwoll-, Tabak-, Reis-, Zuckerrüben-, Raps- oder Kartoffelpflanze handelt.

9. Verfahren nach einem der Ansprüche 1 bis 8, **dadurch gekennzeichnet, dass** die Anwendungsform der Verbindung der Formel (I) in einer Mischung mit mindestens einem Mischpartner vorliegt.
